(19) Europäisches Patentamt
European Patent Office
Office européen des brevets

(11) EP 3 091 793 A1

(12) **EUROPEAN PATENT APPLICATION**
published in accordance with Art. 153(4) EPC

(43) Date of publication:
**09.11.2016 Bulletin 2016/45**

(51) Int Cl.:
**H04W 48/16** (2009.01)

(21) Application number: **14880199.6**

(22) Date of filing: **26.01.2014**

(86) International application number:
**PCT/CN2014/071520**

(87) International publication number:
**WO 2015/109585 (30.07.2015 Gazette 2015/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **LI, Qiang**
**Shenzhen**
**Guangdong 518129 (CN)**
• **LIU, Jinnan**
**Shenzhen**
**Guangdong 518129 (CN)**
• **SUN, Jingyuan**
**Shenzhen**
**Guangdong 518129 (CN)**
• **GUAN, Lei**
**Shenzhen**
**Guangdong 518129 (CN)**
• **MAZZARESE, David Jean-Marie**
**Shenzhen**
**Guangdong 518129 (CN)**

(74) Representative: **Maiwald Patentanwalts GmbH**
**Engineering**
**Elisenhof**
**Elisenstrasse 3**
**80335 München (DE)**

(54) **USER EQUIPMENT, BASE STATION AND CELL DISCOVERY METHOD**

(57) Embodiments of the present invention disclose use equipment, a base station, and a cell discovery method, which relate to the communications field and implement accurate cell discovery and measurement in a scenario in which small cells are densely deployed. The method provided in the embodiments of the present invention includes: receiving, by the UE, auxiliary information, where the auxiliary information includes resource information of a second reference signal of a first neighboring cell, and the first neighboring cell is any neighboring cell of a serving base station of the UE; detecting, by the UE, a first reference signal of the first neighboring cell according to the auxiliary information to make the UE synchronize with the first neighboring cell; and detecting, by the UE according to the auxiliary information, the first reference signal of the first neighboring cell, or the second reference signal of the first neighboring cell, or the first reference signal and the second reference signal that are of the first neighboring cell, to acquire a cell identity ID or a virtual ID of the first neighboring cell. The present invention is used for cell discovery.

FIG. 1

**Description**

**TECHNICAL FIELD**

The present invention relates to the communications field, and in particular, to user equipment, a base station, and a cell discovery method.

**BACKGROUND**

It is generally considered that a conventional Long Term Evolution (Long Term Evolution, LTE for short) wireless network includes a macro base station. Because the macro base station is deployed at a height of more than 20 meters with transmit power up to 46 dBm, a relatively large area can be covered to serve a large quantity of users.

As cities develop, continual deployment of macro base stations faces many challenges, for example, difficulty in site selection and hardship to increase density. Therefore, small cells or micro base stations are launched in the industry. The small cell has characteristics of low transmit power, easy installation, and deployment at a low height, and therefore, the small cell generally covers a quite small range, serves a quite small quantity of users, and is suitable for a densely-populated housing estate, business district, or the like. For example, multiple small cells may be deployed in a department store to serve (User Equipment, UE for short).

An LTE network is divided into many cells (Cell). Generally, one cell has one base station (macro base station, micro base station, or small cell). In a communication process, UE sets up a connection to a base station to receive a service provided by the base station. As the UE moves, the UE may leave one cell and enter another cell. In this case, the UE needs to disconnect from the original base station, and sets up a connection to a base station of the newly arrived cell, so as to be served by the base station of the newly arrived cell. This process is called handover.

Before the handover, the UE needs to perform cell discovery and measurement with respect to cells nearby. Cell discovery means that the UE determines whether there is another cell nearby besides the cell to which a connection is currently being held, and the UE acquires a cell identity (Identity, ID for short) of a neighboring cell by detecting a primary synchronization signal (Primary Synchronization Signal, PSS for short)/secondary synchronization signal (Secondary Synchronous Signal, SSS for short) sent by the neighboring cell. Cell measurement means that the UE performs radio resource management (Radio Resource Management, RRM for short) measurement for each discovered neighboring cell by measuring a downlink reference signal sent by the discovered neighboring cell, for example, a cell-specific reference signal (Cell-specific Reference Signal, CRS for short), to acquire a metric of the discovered neighboring cell. The metric is used to reflect signal quality of the measured cell. If signal quantity of another cell nearby is better than that of the cell to which a connection is currently being held, or if another handover condition is met, the network starts a handover process to hand over the UE to a more proper cell. In LTE, metrics for cell measurement generally include a reference signal received power (Reference Signal Received Power, RSRP for short), a received signal strength indicator (Received Signal Strength Indicator, RSSI for short), and a reference signal received quality (Reference Signal Received Quality, RSRQ for short).

In the foregoing cell discovery and measurement process, because small cells are mainly deployed at densely-populated places, the small cells must also be densely deployed to meet a requirement of such an amount of communication data. A density may be that two neighboring small cells are arranged every several meters or every dozen meters. In a scenario in which small cells are densely deployed and cell discovery and measurement are performed according to the prior art, because each cell sends a PSS/SSS and a CRS to a same location, interference between cells is relatively strong during the cell discovery and measurement process.

**SUMMARY**

Embodiments of the present invention provide user equipment, a base station, and a cell discovery method, implementing accurate cell discovery and measurement in a scenario in which small cells are densely deployed.

To achieve the foregoing objective, the following technical solutions are used in the embodiments of the present invention:

According to a first aspect, user equipment is provided, including:

a receiving unit, configured to receive auxiliary information, where the auxiliary information includes resource information of a second reference signal of the first neighboring cell, and the first neighboring cell is any neighboring cell of a serving base station of the UE;
a synchronization unit, configured to detect a first reference signal of the first neighboring cell according to the auxiliary information received by the receiving unit, to make the UE synchronize with the first neighboring cell; and
an acquisition unit, configured to: according to the auxiliary information received by the receiving unit, detect the first reference signal of the first neighboring cell, or detect the second reference signal of the first neighboring cell, or detect the first reference signal and the second reference signal that are of the first neighboring cell, to acquire a cell ID or a virtual ID of the first neighboring cell.

With reference to the first aspect, in a first possible implementation manner of the first aspect, the second reference signal of the first neighboring cell is a non-zero power channel state indication reference signal (Non Zero Power Channel State Indication RS, NZP-CSI-RS for short) of the first neighboring cell or a quasi NZP-CSI-RS of the first neighboring cell, where
a scrambling code ID for generating the quasi NZP-CSI-RS is different from a scrambling code ID for generating the NZP-CSI-RS.

With reference to the first aspect or the first possible implementation manner of the first aspect, in a second possible implementation manner of the first aspect, the resource information of the second reference signal of the first neighboring cell includes at least one of the following information:

a resource configuration for the second reference signal of the first neighboring cell, a quantity of antenna ports for the second reference signal of the first neighboring cell, or subframe information of the second reference signal of the first neighboring cell.

With reference to the first aspect or the first possible implementation manner of the first aspect or the second possible implementation manner of the first aspect, in a third possible implementation manner of the first aspect, the first reference signal of the first neighboring cell is a PSS of the first neighboring cell or a quasi PSS of the first neighboring cell, where
a root sequence number for generating the quasi PSS is different from a root sequence number for generating the PSS.

With reference to the first aspect or any one of the first possible implementation manner of the first aspect to the third possible implementation manner of the first aspect, in a fourth possible implementation manner of the first aspect, the first reference signal and the second reference signal are quasi co-sited.

With reference to the first aspect or any one of the first possible implementation manner of the first aspect to the fourth possible implementation manner of the first aspect, in a fifth possible implementation manner of the first aspect, the synchronization unit is specifically configured to:

detect and acquire a first reference signal sequence of the first neighboring cell according to the auxiliary information; and
perform a correlation operation between the detected first reference signal sequence of the first neighboring cell and each local protocol-specified first reference signal sequence to acquire multiple correlation values, where
the UE is synchronized with the first neighboring cell if there exists a first correlation value greater than a preset threshold, where the first correlation value is any one of the multiple correlation values acquired by the performing a correlation operation between the detected first reference signal sequence of the first neighboring cell and each local protocol-specified first reference signal sequence.

With reference to the first aspect or any one of the first possible implementation manner of the first aspect to the fifth possible implementation manner of the first aspect, in a sixth possible implementation manner of the first aspect, the acquisition unit is specifically configured to:

acquire an actual sending resource location of the first reference signal of the first neighboring cell according to the resource information of the second reference signal of the first neighboring cell;
detect and acquire, at the actual sending resource location of the first reference signal of the first neighboring cell, the first reference signal of the first neighboring cell to acquire a first reference signal ID of the first neighboring cell; and
acquire the virtual ID of the first neighboring cell according to the first reference signal ID of the first neighboring cell, or acquire the cell ID of the first neighboring cell according to a correspondence between the first reference signal ID of the first neighboring cell and the cell ID of the first neighboring cell;
or
acquire an actual sending resource location of the second reference signal of the first neighboring cell according to the resource information of the second reference signal of the first neighboring cell;
detect and acquire, at the actual sending resource location of the second reference signal of the first neighboring cell, the second reference signal of the first neighboring cell to acquire a second reference signal scrambling code ID of the first neighboring cell; and
acquire the virtual ID of the first neighboring cell according to the second reference signal scrambling code ID of the first neighboring cell, or acquire the cell ID of the first neighboring cell according to a correspondence between the second reference signal scrambling code ID of the first neighboring cell and the cell ID of the first neighboring cell; or

acquire actual sending resource locations of the first reference signal and the second reference signal that are of the first neighboring cell according to the resource information of the second reference signal of the first neighboring cell;

detect and acquire, at the actual sending resource location of the first reference signal of the first neighboring cell, the first reference signal of the first neighboring cell to acquire a first reference signal ID of the first neighboring cell;

detect and acquire, at the actual sending resource location of the second reference signal of the first neighboring cell, the second reference signal of the first neighboring cell to acquire a second reference signal scrambling code ID of the first neighboring cell; and

acquire the cell ID of the first neighboring cell according to a correspondence among the second reference signal scrambling code ID of the first neighboring cell, the first reference signal ID of the first neighboring cell, and the cell ID.

With reference to the sixth possible implementation manner of the first aspect, in a seventh possible implementation manner of the first aspect, the detecting a signal sent at the actual sending resource location of the first reference signal of the first neighboring cell to acquire a first reference signal ID of the first neighboring cell includes that the acquisition unit is specifically configured to:

detect and acquire, at the actual sending resource location of the first reference signal of the first neighboring cell, the first reference signal sequence of the first neighboring cell; and

perform a correlation operation between the detected first reference signal sequence of the first neighboring cell and each local protocol-specified first reference signal sequence to acquire the first reference signal ID of the first neighboring cell.

With reference to the sixth possible implementation manner of the first aspect or the seventh possible implementation manner of the first aspect, in an eighth possible implementation manner of the first aspect, the acquisition unit is specifically configured to:

detect and acquire, at the actual sending resource location of the second reference signal of the first neighboring cell, a second reference signal sequence of the first neighboring cell;

generate M local second reference signal sequences according to protocol-specified M second reference signal scrambling code identities IDs; and

perform a correlation operation between the detected second reference signal sequence of the first neighboring cell and each of the M local second reference signal sequences to acquire the second reference signal scrambling code ID of the first neighboring cell.

With reference to the first aspect or any one of the first possible implementation manner of the first aspect to the eighth possible implementation manner of the first aspect, in a ninth possible implementation manner of the first aspect, the user equipment further includes:

a determining unit, configured to determine, according to the resource information of the second reference signal of the first neighboring cell, whether the first neighboring cell is discovered.

With reference to the ninth possible implementation manner of the first aspect, in a tenth possible implementation manner of the first aspect, the determining unit is specifically configured to:

acquire the actual sending resource location of the second reference signal of the first neighboring cell according to the resource information of the second reference signal of the first neighboring cell;

detect and acquire, at the actual sending resource location of the second reference signal of the first neighboring cell, the second reference signal of the first neighboring cell;

generate M local second reference signal sequences according to the protocol-specified M second reference signal scrambling code IDs; and

perform a correlation operation between the detected second reference signal of the first neighboring cell and each of the M local second reference signal sequences to acquire M correlation values, where

the first neighboring cell is discovered if there exists the second correlation value greater than a preset discovery condition, where the second correlation value is any one of the M correlation values acquired by the performing a correlation operation between the detected second reference signal of the first neighboring cell and each of the M local second reference signal sequences.

With reference to the first aspect or any one of the first possible implementation manner of the first aspect to the tenth possible implementation manner of the first aspect, in an eleventh possible implementation manner of the first aspect, the auxiliary information further includes the cell ID of the first neighboring cell and the first reference signal ID of the first neighboring cell.

With reference to the eleventh possible implementation manner of the first aspect, in a twelfth possible implementation manner of the first aspect, the synchronization unit is specifically configured to:

detect and acquire the first reference signal sequence of the first neighboring cell according to the auxiliary information;
generate a local first reference signal sequence of the first neighboring cell according to the first reference signal ID of the first neighboring cell; and
perform a correlation operation between the detected first reference signal sequence of the first neighboring cell and the local first reference signal sequence of the first neighboring cell to acquire a third correlation value, where the UE is synchronized with the first neighboring cell if the third correlation value is greater than a preset threshold.

With reference to the first aspect or any one of the first possible implementation manner of the first aspect to the twelfth possible implementation manner of the first aspect, in a thirteenth possible implementation manner of the first aspect, the auxiliary information further includes the second reference signal scrambling code ID of the first neighboring cell.

With reference to the thirteenth possible implementation manner of the first aspect, in a fourteenth possible implementation manner of the first aspect, the determining unit is specifically configured to:

acquire the actual sending resource location of the second reference signal of the first neighboring cell according to the resource information of the second reference signal of the first neighboring cell;
detect and acquire, at the actual sending resource location of the second reference signal of the first neighboring cell, the second reference signal sequence of the first neighboring cell;
generate a local second reference signal sequence of the first neighboring cell according to the second reference signal scrambling code ID of the first neighboring cell; and
perform a correlation operation between the detected second reference signal of the first neighboring cell and the local second reference signal sequence of the first neighboring cell to acquire a fourth correlation value, where the first neighboring cell is discovered if the fourth correlation value is greater than a preset discovery condition.

With reference to the first aspect or any one of the first possible implementation manner of the first aspect to the fourteenth possible implementation manner of the first aspect, in a fifteenth possible implementation manner of the first aspect, the synchronization unit is specifically configured to:

if the first reference signal of the first neighboring cell and the second reference signal of the first neighboring cell are sent in one subframe, detect the first reference signal of the first neighboring cell in a subframe indicated in the resource information of the second reference signal of the first neighboring cell;
or
if the first reference signal of the first neighboring cell is sent in the $N^{th}$ subframe 0 or subframe 5 that is before or after the second reference signal of the first neighboring cell, detect the first reference signal of the first neighboring cell in a subframe 0 or a subframe 5 that is before or after a subframe indicated in the resource information of the second reference signal of the first neighboring cell, where N is greater than or equal to 1;
or
if the first reference signal of the first neighboring cell is sent in the $P^{th}$ subframe that is before or after the second reference signal of the first neighboring cell, detect the first reference signal of the first neighboring cell in the $P^{th}$ subframe that is before or after a subframe indicated in the resource information of the second reference signal of the first neighboring cell, where the auxiliary information further includes a subframe offset P between the first reference signal of the first neighboring cell and the second reference signal of the first neighboring cell, and P is greater than or equal to 1.

With reference to the first aspect or any one of the first possible implementation manner of the first aspect to the fifteenth possible implementation manner of the first aspect, in a sixteenth possible implementation manner of the first aspect, the user equipment further includes:

a measurement unit, configured to perform, at the sending resource location of the second reference signal of the first neighboring cell, RRM measurement for the first neighboring cell according to the resource information of the second reference signal of the first neighboring cell to acquire a metric, where the metric includes at least one of an RSRP, an RSSI, or an RSRQ.

With reference to the sixteenth possible implementation manner of the first aspect, in a seventeenth possible implementation manner of the first aspect, the auxiliary information further includes resource information of a measured resource 1 of the first neighboring cell, and the resource information of the measured resource 1 of the first neighboring cell includes at least one of the following information:

a resource configuration for the measured resource 1 of the first neighboring cell, a quantity of antenna ports for the measured resource 1 of the first neighboring cell, or subframe information of the measured resource 1 of the first neighboring cell.

With reference to the seventeenth possible implementation manner of the first aspect, in an eighteenth possible implementation manner of the first aspect, the measured resource 1 of the first neighboring cell is a zero power channel state indication reference signal (Zero Power Channel State Indication RS, ZP-CSI-RS for short) of the first neighboring cell.

With reference to the seventeenth possible implementation manner of the first aspect or the eighteenth possible implementation manner of the first aspect, in a nineteenth possible implementation manner of the first aspect, the measurement unit is specifically configured to:

perform, at the sending resource location of the second reference signal of the first neighboring cell, RRM measurement for the first neighboring cell according to the resource information of the second reference signal of the first neighboring cell to acquire the metric RSRP;

perform, at a sending resource location of the measured resource 1 of the first neighboring cell, RRM measurement for the first neighboring cell according to the resource information of the measured resource 1 of the first neighboring cell to acquire the metric RSSI; and

acquire the RSRQ according to the RSRP and the RSSI.

According to a second aspect, a base station is provided, where the base station is a serving base station of UE, and the base station includes:

an acquisition unit, configured to acquire a sending parameter of a first reference signal of a first neighboring cell and a sending parameter of a second reference signal of the first neighboring cell;

a generation unit, configured to generate auxiliary information according to the sending parameter of the first reference signal of the first neighboring cell and the sending parameter of the second reference signal of the first neighboring cell that are acquired by the acquisition unit, where the auxiliary information includes resource information of the second reference signal of the first neighboring cell; and

a sending unit, configured to send the auxiliary information generated by the generation unit to UE in a cell to make the UE perform cell discovery.

With reference to the second aspect, in a first possible implementation manner of the second aspect, the second reference signal of the first neighboring cell is an NZP-CSI-RS of the first neighboring cell or a quasi NZP-CSI-RS of the first neighboring cell, where

a scrambling code ID for generating the quasi NZP-CSI-RS is different from a scrambling code ID for generating the NZP-CSI-RS.

With reference to the second aspect or the first possible implementation manner of the second aspect, in a second possible implementation manner of the second aspect, the first reference signal of the first neighboring cell is a PSS or a quasi PSS of the first neighboring cell, where

a root sequence number for generating the quasi PSS is different from a root sequence number for generating the PSS.

With reference to the second aspect or the first possible implementation manner of the second aspect or the second possible implementation manner of the second aspect, in a third possible implementation manner of the second aspect, the resource information of the second reference signal of the first neighboring cell includes at least one of the following information:

a resource configuration for the second reference signal of the first neighboring cell, a quantity of antenna ports for the second reference signal of the first neighboring cell, or subframe information of the second reference signal of the first neighboring cell.

With reference to the second aspect or any one of the first possible implementation manner of the second aspect to the third possible implementation manner of the second aspect, in a fourth possible implementation manner of the second aspect, the auxiliary information further includes a cell ID of the first neighboring cell and a first reference signal ID of the first neighboring cell.

With reference to the second aspect or any one of the first possible implementation manner of the second aspect to the fourth possible implementation manner of the second aspect, in a fifth possible implementation manner of the second aspect, the auxiliary information further includes a second reference signal scrambling code ID of the first neighboring cell.

With reference to the second aspect or any one of the first possible implementation manner of the second aspect to the fifth possible implementation manner of the second aspect, in a sixth possible implementation manner of the second aspect, when the first reference signal of the first neighboring cell is sent in the $P^{th}$ subframe that is before or after the second reference signal of the first neighboring cell, the auxiliary information further includes a subframe offset P between the first reference signal of the first neighboring cell and the second reference signal of the first neighboring cell, where P is greater than or equal to 1.

According to a third aspect, a base station is provided, where the base station is a base station corresponding to a first neighboring cell, and the base station includes:

a sending unit, configured to send a first reference signal and a second reference signal that are of the first neighboring cell, where the first reference signal is used for UE to synchronize with the cell, and the second reference signal is used for the UE to perform cell discovery and RRM measurement.

With reference to the third aspect, in a first possible implementation manner of the third aspect, the second reference signal of the first neighboring cell is an NZP-CSI-RS of the first neighboring cell or a quasi NZP-CSI-RS of the first neighboring cell, where

a scrambling code ID for generating the quasi NZP-CSI-RS is different from a scrambling code ID for generating the NZP-CSI-RS.

With reference to the third aspect or the first possible implementation manner of the third aspect, in a second possible implementation manner of the third aspect, the first reference signal of the first neighboring cell is a PSS of the first neighboring cell or a quasi PSS of the first neighboring cell, where

a root sequence number for generating the quasi PSS is different from a root sequence number for generating the PSS.

With reference to the third aspect or any one of the first possible implementation manner of the third aspect or the second possible implementation manner of the third aspect, in a third possible implementation manner of the third aspect, the base station further includes a mapping unit, configured to:

when the second reference signal of the first neighboring cell is transmitted over one antenna port, map the second reference signal of the first neighboring cell onto four resources in each resource block; or
when the second reference signal of the first neighboring cell is transmitted over one antenna port, map the second reference signal of the first neighboring cell onto eight resource elements in each resource block; or
when the second reference signal of the first neighboring cell is transmitted over two antenna ports, map the second reference signal of the first neighboring cell onto four resource elements in each resource block; or
when the second reference signal of the first neighboring cell is transmitted over two antenna ports, map the second reference signal of the first neighboring cell onto eight resource elements in each resource block.

With reference to the third possible implementation manner of the third aspect, in a fourth possible implementation manner of the third aspect,
a sequence length of the second reference signal of the first neighboring cell is Q times a quantity of resource blocks included in a maximum system bandwidth, where Q is a positive integer greater than 1.

With reference to the third aspect or any one of the first possible implementation manner of the third aspect to the fourth possible implementation manner of the third aspect, in a fifth possible implementation manner of the third aspect, the base station further includes:

a determining unit, configured to determine a sending resource location of the second reference signal of the first neighboring cell according to a cell ID of the first neighboring cell and a quantity of configured resources of the first neighboring cell.

With reference to the fifth possible implementation manner of the third aspect, in a sixth possible implementation manner of the third aspect, the determining unit is specifically configured to:

calculate the sending resource location of the second reference signal of the first neighboring cell according to a PSS ID of the first neighboring cell.

With reference to the fifth possible implementation manner of the third aspect, in a seventh possible implementation manner of the third aspect, the determining unit is specifically configured to:

calculate the sending resource location of the second reference signal of the first neighboring cell according to an SSS ID of the first neighboring cell.

With reference to the fifth possible implementation manner of the third aspect, in an eighth possible implementation manner of the third aspect, the configured resources of the first neighboring cell are S resource sets, with each resource set including T resources, and the determining unit is specifically configured to:

determine a sending resource set of the second reference signal according to a PSS ID of the first neighboring cell, and determine the sending resource location, in the sending resource set, of the second reference signal of the first neighboring cell according to an SSS ID of the first neighboring cell.

With reference to the third aspect or any one of the first possible implementation manner of the third aspect to the eighth possible implementation manner of the third aspect, in a ninth possible implementation manner of the third aspect, the sending unit is further configured to:

send the first reference signal of the first neighboring cell and the second reference signal of the first neighboring cell in one subframe;
or
send the first reference signal of the first neighboring cell in the $N^{th}$ subframe 0 or subframe 5 that is before or after the second reference signal of the first neighboring cell, where N is greater than or equal to 1;
or
send the first reference signal of the first neighboring cell in the $P^{th}$ subframe that is before or after the second reference signal of the first neighboring cell, where P is greater than or equal to 1.

With reference to the third aspect or any one of the first possible implementation manner of the third aspect to the ninth possible implementation manner of the third aspect, in a tenth possible implementation manner of the third aspect, the sending unit is further configured to send a sending parameter of the first reference signal of the first neighboring cell and a sending parameter of the second reference signal of the first neighboring cell to all neighboring cells of the first neighboring cell to make user equipments UEs in all the neighboring cells of the first neighboring cell perform cell discovery.

With reference to the third aspect or any one of the first possible implementation manner of the third aspect to the tenth possible implementation manner of the third aspect, in an eleventh possible implementation manner of the third aspect, when the corresponding base station of the first neighboring cell is in an off state, the sending unit is further configured to send the first reference signal and the second reference signal that are of the first neighboring cell periodically according to a preset interval.

According to a fourth aspect, a cell discovery method is provided, including:

receiving, by UE, auxiliary information, where the auxiliary information includes resource information of a second reference signal of the first neighboring cell, and the first neighboring cell is any neighboring cell of a serving base station of the UE;
detecting, by the UE, a first reference signal of the first neighboring cell according to the auxiliary information to make the UE synchronize with the first neighboring cell; and
detecting, by the UE according to the auxiliary information, the first reference signal of the first neighboring cell, or the second reference signal of the first neighboring cell, or the first reference signal and the second reference signal that are of the first neighboring cell, to acquire a cell ID or a virtual ID of the first neighboring cell.

With reference to the fourth aspect, in a first possible implementation manner of the fourth aspect, the second reference signal of the first neighboring cell is an NZP-CSI-RS of the first neighboring cell or a quasi NZP-CSI-RS of the first neighboring cell, where
a scrambling code ID for generating the quasi NZP-CSI-RS is different from a scrambling code ID for generating the NZP-CSI-RS.

With reference to the fourth aspect or the first possible implementation manner of the fourth aspect, in a second possible implementation manner of the fourth aspect, the resource information of the second reference signal of the first neighboring cell includes at least one of the following information:

a resource configuration for the second reference signal of the first neighboring cell, a quantity of antenna ports for the second reference signal of the first neighboring cell, or subframe information of the second reference signal of the first neighboring cell.

With reference to the fourth aspect or the first possible implementation manner of the fourth aspect or the second possible implementation manner of the fourth aspect, in a third possible implementation manner of the fourth aspect, the first reference signal of the first neighboring cell is a PSS of the first neighboring cell or a quasi PSS of the first neighboring cell, where

a root sequence number for generating the quasi PSS is different from a root sequence number for generating the PSS.

With reference to the fourth aspect or any one of the first possible implementation manner of the fourth aspect to the third possible implementation manner of the fourth aspect, in a fourth possible implementation manner of the fourth aspect,

the first reference signal and the second reference signal are quasi co-sited.

With reference to the fourth aspect or any one of the first possible implementation manner of the fourth aspect to the fourth possible implementation manner of the fourth aspect, in a fifth possible implementation manner of the fourth aspect, the detecting, by the UE, a first reference signal of the first neighboring cell according to the auxiliary information to make the UE synchronize with the first neighboring cell includes:

detecting and acquiring, by the UE, the first reference signal sequence of the first neighboring cell according to the auxiliary information; and

performing a correlation operation between the detected first reference signal sequence of the first neighboring cell and each local protocol-specified first reference signal sequence to acquire multiple correlation values, where

the UE is synchronized with the first neighboring cell if there exists a first correlation value greater than a preset threshold, where the first correlation value is any one of the multiple correlation values acquired by the performing a correlation operation between the detected first reference signal sequence of the first neighboring cell and each local protocol-specified first reference signal sequence.

With reference to the fourth aspect or any one of the first possible implementation manner of the fourth aspect to the fifth possible implementation manner of the fourth aspect, in a sixth possible implementation manner of the fourth aspect, the detecting, by the UE according to the auxiliary information, the first reference signal of the first neighboring cell, or the second reference signal of the first neighboring cell, or the first reference signal and the second reference signal that are of the first neighboring cell, to acquire a cell ID or a virtual ID of the first neighboring cell includes:

acquiring an actual sending resource location of the first reference signal of the first neighboring cell according to the resource information of the second reference signal of the first neighboring cell;

detecting and acquiring, at the actual sending resource location of the first reference signal of the first neighboring cell, the first reference signal of the first neighboring cell to acquire a first reference signal. ID of the first neighboring cell, and

acquiring the virtual ID of the first neighboring cell according to the first reference signal ID of the first neighboring cell, or acquiring the cell ID of the first neighboring cell according to a correspondence between the first reference signal ID of the first neighboring cell and the cell ID of the first neighboring cell;

or

acquiring the actual sending resource location of the second reference signal of the first neighboring cell according to the resource information of the second reference signal of the first neighboring cell;

detecting and acquiring, at the actual sending resource location of the second reference signal of the first neighboring cell, the second reference signal of the first neighboring cell to acquire a second reference signal scrambling code ID of the first neighboring cell; and

acquiring the virtual ID of the first neighboring cell according to the second reference signal scrambling code ID of the first neighboring cell, or acquiring the cell ID of the first neighboring cell according to a correspondence between the second reference signal scrambling code ID of the first neighboring cell and the cell ID of the first neighboring cell;

or

acquiring actual sending resource locations of the first reference signal and the second reference signal that are of the first neighboring cell according to the resource information of the second reference signal of the first neighboring cell;

detecting and acquiring, at the actual sending resource location of the first reference signal of the first neighboring cell, the first reference signal of the first neighboring cell to acquire a first reference signal ID of the first neighboring cell;
detecting and acquiring, at the actual sending resource location of the second reference signal of the first neighboring cell, the second reference signal of the first neighboring cell to acquire a second reference signal scrambling code ID of the first

acquiring the cell ID of the first neighboring cell according to a correspondence among the second reference signal scrambling code ID of the first neighboring cell, the first reference signal ID of the first neighboring cell, and the cell ID.

With reference to the sixth possible implementation manner of the fourth aspect, in a seventh possible implementation manner of the fourth aspect, the detecting and acquiring, at the actual sending resource location of the first reference signal of the first neighboring cell, the first reference signal of the first neighboring cell to acquire a first reference signal ID of the first neighboring cell includes:

detecting and acquiring, at the actual sending resource location of the first reference signal of the first neighboring cell, the first reference signal sequence of the first neighboring cell; and
performing a correlation operation between the detected first reference signal sequence of the first neighboring cell and each local protocol-specified first reference signal sequence to acquire the first reference signal ID of the first neighboring cell.

With reference to the sixth possible implementation manner of the fourth aspect or the seventh possible implementation manner of the fourth aspect, in an eighth possible implementation manner of the fourth aspect, the detecting and acquiring, at the actual sending resource location of the second reference signal of the first neighboring cell, the second reference signal of the first neighboring cell to acquire a second reference signal scrambling code ID of the first neighboring cell includes:

detecting and acquiring, at the actual sending resource location of the second reference signal of the first neighboring cell, the second reference signal sequence of the first neighboring cell;
generating M local second reference signal sequences according to protocol-specified M second reference signal scrambling code identities IDs; and
performing a correlation operation between the detected second reference signal sequence of the first neighboring cell and each of the M local second reference signal sequences to acquire the second reference signal scrambling code ID of the first neighboring cell.

With reference to the fourth aspect or any one of the first possible implementation manner of the fourth aspect to the eighth possible implementation manner of the fourth aspect, in a ninth possible implementation manner of the fourth aspect, the method further includes:

determining, according to the resource information of the second reference signal of the first neighboring cell, whether the first neighboring cell is discovered.

With reference to the ninth possible implementation manner of the fourth aspect, in a tenth possible implementation manner of the fourth aspect, the determining, according to the resource information of the second reference signal of the first neighboring cell, whether the first neighboring cell is discovered includes:

acquiring the actual sending resource location of the second reference signal of the first neighboring cell according to the resource information of the second reference signal of the first neighboring cell;
detecting and acquiring, at the actual sending resource location of the second reference signal of the first neighboring cell, the second reference signal of the first neighboring cell;
generating M local second reference signal sequences according to the protocol-specified M second reference signal scrambling code IDs; and
performing a correlation operation between the detected second reference signal of the first neighboring cell and each of the M local second reference signal sequences to acquire M correlation values, where
the first neighboring cell is discovered if there exists the second correlation value greater than a preset discovery condition, where the second correlation value is any one of the M correlation values acquired by the performing a correlation operation between the detected second reference signal of the first neighboring cell and each of the M local second reference signal sequences.

With reference to the fourth aspect or any one of the first possible implementation manner of the fourth aspect to the tenth possible implementation manner of the fourth aspect, in an eleventh possible implementation manner of the fourth aspect, the auxiliary information further includes the cell ID of the first neighboring cell and the first reference signal ID of the first neighboring cell.

With reference to the eleventh possible implementation manner of the fourth aspect, in a twelfth possible implementation manner of the fourth aspect, the detecting, by the UE, a first reference signal of the first neighboring cell according to the auxiliary information to make the UE synchronize with the first neighboring cell includes:

detecting and acquiring, by the UE, the first reference signal sequence of the first neighboring cell according to the auxiliary information;

generating a local first reference signal sequence of the first neighboring cell according to the first reference signal ID of the first neighboring cell; and

performing a correlation operation between the detected first reference signal sequence of the first neighboring cell and the local first reference signal sequence of the first neighboring cell to acquire a third correlation value, where the UE is synchronized with the first neighboring cell if the third correlation value is greater than a preset threshold.

With reference to the fourth aspect or any one of the first possible implementation manner of the fourth aspect to the twelfth possible implementation manner of the fourth aspect, in a thirteenth possible implementation manner of the fourth aspect, the auxiliary information further includes the second reference signal scrambling code ID of the first neighboring cell.

With reference to the thirteenth possible implementation manner of the fourth aspect, in a fourteenth possible implementation manner of the fourth aspect, the determining, according to the resource information of the second reference signal of the first neighboring cell, whether the first neighboring cell is discovered includes:

acquiring the actual sending resource location of the second reference signal of the first neighboring cell according to the resource information of the second reference signal of the first neighboring cell;

detecting and acquiring, at the actual sending resource location of the second reference signal of the first neighboring cell, the second reference signal sequence of the first neighboring cell;

generating a local second reference signal sequence of the first neighboring cell according to the second reference signal scrambling code ID of the first neighboring cell; and

performing a correlation operation between the detected second reference signal of the first neighboring cell and the local second reference signal sequence of the first neighboring cell to acquire a fourth correlation value, where the first neighboring cell is discovered if the fourth correlation value is greater than a preset discovery condition.

With reference to the fourth aspect or any one of the first possible implementation manner of the fourth aspect to the fourteenth possible implementation manner of the fourth aspect, in a fifteenth possible implementation manner of the fourth aspect, the detecting, by the UE, a first reference signal of the first neighboring cell according to the auxiliary information includes:

if the first reference signal of the first neighboring cell and the second reference signal of the first neighboring cell are sent in one subframe, detecting, by the UE, the first reference signal of the first neighboring cell in a subframe indicated in the resource information of the second reference signal of the first neighboring cell;

or

if the first reference signal of the first neighboring cell is sent in the $N^{th}$ subframe 0 or subframe 5 that is before or after the second reference signal of the first neighboring cell, detecting, by the UE, the first reference signal of the first neighboring cell in a subframe 0 or a subframe 5 that is before or after a subframe indicated in the resource information of the second reference signal of the first neighboring cell, where N is greater than or equal to 1;

or

if the first reference signal of the first neighboring cell is sent in the $P^{th}$ subframe that is before or after the second reference signal of the first neighboring cell, detecting, by the UE, the first reference signal of the first neighboring cell in the $P^{th}$ subframe that is before or after a subframe indicated in the resource information of the second reference signal of the first neighboring cell, where the auxiliary information further includes a subframe offset P between the first reference signal of the first neighboring cell and the second reference signal of the first neighboring cell, and P is greater than or equal to 1.

With reference to the fourth aspect or any one of the first possible implementation manner of the fourth aspect to the fifteenth possible implementation manner of the fourth aspect, in a sixteenth possible implementation manner of the fourth aspect, the method further includes: performing, at the sending resource location of the second reference signal of the first neighboring cell, radio resource management RRM measurement for the first neighboring cell according to the resource information of the second reference signal of the first neighboring cell to acquire a metric, where the metric includes at least one of a reference signal received power RSRP, a received signal strength indicator RSSI, or a reference signal received quality RSRQ.

With reference to the sixteenth possible implementation manner of the fourth aspect, in a seventeenth possible implementation manner of the fourth aspect, the auxiliary information further includes resource information of a measured resource 1 of the first neighboring cell, and the resource information of the measured resource 1 of the first neighboring cell includes at least one of the following information:

a resource configuration for the measured resource 1 of the first neighboring cell, a quantity of antenna ports for the measured resource 1 of the first neighboring cell, or subframe information of the measured resource 1 of the first neighboring cell.

With reference to the seventeenth possible implementation manner of the fourth aspect, in an eighteenth possible implementation manner of the fourth aspect, the measured resource 1 of the first neighboring cell is a zero power channel state indication reference signal ZP-CSI-RS of the first neighboring cell.

With reference to the seventeenth possible implementation manner of the fourth aspect or the eighteenth possible implementation manner of the fourth aspect, in a nineteenth possible implementation manner of the fourth aspect, the performing, at the sending resource location of the second reference signal of the first neighboring cell, RRM measurement for the first neighboring cell according to the resource information of the second reference signal of the first neighboring cell to acquire a metric includes:

performing, at the sending resource location of the second reference signal of the first neighboring cell, RRM measurement for the first neighboring cell according to the resource information of the second reference signal of the first neighboring cell to acquire the metric RSRP;
performing, at a sending resource location of the measured resource 1 of the first neighboring cell, RRM measurement for the first neighboring cell according to the resource information of the measured resource 1 of the first neighboring cell to acquire the metric RSSI; and
acquiring the RSRQ according to the RSRP and the RSSI.

According to a fifth aspect, a cell discovery method is provided, including:

acquiring a sending parameter of a first reference signal of a first neighboring cell and a sending parameter of a second reference signal of fhe first neighboring cell;
generating auxiliary information according to the sending parameter of the first reference signal of the first neighboring cell and the sending parameter of the second reference signal of the first neighboring cell, where the auxiliary information includes resource information of the second reference signal of the first neighboring cell; and
sending the auxiliary information to UE in a cell to make the UE perform cell discovery.

With reference to the fifth aspect, in a first possible implementation manner of the fifth aspect, the second reference signal of the first neighboring cell is an NZP-CSI-RS of the first neighboring cell or a quasi NZP-CSI-RS of the first neighboring cell, where
a scrambling code ID for generating the quasi NZP-CSI-RS is different from a scrambling code ID for generating the NZP-CSI-RS.

With reference to the fifth aspect or the first possible implementation manner of the fifth aspect, in a second possible implementation manner of the fifth aspect, the first reference signal of the first neighboring cell is a PSS or a quasi PSS of the first neighboring cell, where
a root sequence number for generating the quasi PSS is different from a root sequence number for generating the PSS.

With reference to the fifth aspect or the first possible implementation manner of the fifth aspect or the second possible implementation manner of the fifth aspect, in a third possible implementation manner of the fifth aspect, the resource information of the second reference signal of the first neighboring cell includes at least one of the following information:

a resource configuration for the second reference signal of the first neighboring cell, a quantity of antenna ports for the second reference signal of the first neighboring cell, or subframe information of the first neighboring cell.

With reference to the fifth aspect or any one of the first possible implementation manner of the fifth aspect to the third possible implementation manner of the fifth aspect, in a fourth possible implementation manner of the fifth aspect, the auxiliary information further includes the cell ID of the first neighboring cell and a first reference signal ID of the first neighboring cell.

With reference to the fifth aspect or any one of the first possible implementation manner of the fifth aspect to the fourth possible implementation manner of the fifth aspect, in a fifth possible implementation manner of the fifth aspect, the auxiliary information further includes a second reference signal scrambling code ID of the first neighboring cell.

With reference to the fifth aspect or any one of the first possible implementation manner of the fifth aspect to the fifth possible implementation manner of the fifth aspect, in a sixth possible implementation manner of the fifth aspect, when the first reference signal of the first neighboring cell is sent in the $P^{th}$ subframe that is before or after the second reference signal of the first neighboring cell, the auxiliary information further includes a subframe offset P between the first reference signal of the first neighboring cell and the second reference signal of the first neighboring cell, where P is greater than or equal to 1.

According to a sixth aspect, a cell discovery method is provided, including:

sending a first reference signal and a second reference signal that are of a first neighboring cell, where the first reference signal is used for UE to synchronize with the cell, and the second reference signal is used for the UE to perform cell discovery and RRM measurement.

With reference to the sixth aspect, in a first possible implementation manner of the sixth aspect, the second reference signal of the first neighboring cell is an NZP-CSI-RS of the first neighboring cell or a quasi NZP-CSI-RS of the first neighboring cell, where
a scrambling code ID for generating the quasi NZP-CSI-RS is different from a scrambling code ID for generating the NZP-CSI-RS.

With reference to the sixth aspect or the first possible implementation manner of the sixth aspect, in a second possible implementation manner of the sixth aspect, the first reference signal of the first neighboring cell is a PSS of the first neighboring cell or a quasi PSS of the first neighboring cell, where
a root sequence number for generating the quasi PSS is different from a root sequence number for generating the PSS.

With reference to the sixth aspect or the first possible implementation manner of the sixth aspect or the second possible implementation manner of the sixth aspect, in a third possible implementation manner of the sixth aspect, the method further includes:

when the second reference signal of the first neighboring cell is transmitted over one antenna port, mapping the second reference signal of the first neighboring cell onto four resources in each resource block; or
when the second reference signal of the first neighboring cell is transmitted over one antenna port, mapping the second reference signal of the first neighboring cell onto eight resource elements in each resource block; or
when the second reference signal of the first neighboring cell is transmitted over two antenna ports, mapping the second reference signal of the first neighboring cell onto four resource elements in each resource block; or
when the second reference signal of the first neighboring cell is transmitted over two antenna ports, mapping the second reference signal of the first neighboring cell onto eight resource elements in each resource block.

With reference to the third possible implementation manner of the sixth aspect, in a fourth possible implementation manner of the sixth aspect,
a sequence length of the second reference signal of the first neighboring cell is Q times a quantity of resource blocks included in a maximum system bandwidth, where Q is a positive integer greater than 1.

With reference to the sixth aspect or any one of the first possible implementation manner of the sixth aspect to the fourth possible implementation manner of the sixth aspect, in a fifth possible implementation manner of the sixth aspect, before the sending a first reference signal and a second reference signal that are of a first neighboring cell, the method further includes: determining a sending resource location of the second reference signal of the first neighboring cell according to a cell ID of the first neighboring cell and a quantity of configured resources of the first neighboring cell.

With reference to the fifth possible implementation manner of the sixth aspect, in a sixth possible implementation manner of the sixth aspect, the determining a sending resource location of the second reference signal of the first neighboring cell according to a cell ID of the first neighboring cell and a quantity of configured resources of the first neighboring cell includes:

calculating the sending resource location of the second reference signal of the first neighboring cell according to a PSS ID of the first neighboring cell.

With reference to the fifth possible implementation manner of the sixth aspect, in a seventh possible implementation manner of the sixth aspect, the determining a sending resource location of the second reference signal of the first neighboring cell according to a cell ID of the first neighboring cell and a quantity of configured resources of the first neighboring cell includes:

calculating the sending resource location of the second reference signal of the first neighboring cell according to an SSS ID of the first neighboring cell.

With reference to the fifth possible implementation manner of the sixth aspect, in an eighth possible implementation manner of the sixth aspect, the configured resources of the first neighboring cell are S resource sets, with each resource set including T resources, and the determining a sending resource location of the second reference signal of the first neighboring cell according to a cell ID of the first neighboring cell and a quantity of configured resources of the first neighboring cell includes:

determining a sending resource set of the second reference signal according to a PSS ID of the first neighboring cell, and determining the sending resource location, in the sending resource set, of the second reference signal of the first neighboring cell according to an SSS ID of the first neighboring cell.

With reference to the sixth aspect or any one of the first possible implementation manner of the sixth aspect to the eighth possible implementation manner of the sixth aspect, in a ninth possible implementation manner of the sixth aspect, the method further includes:

sending the first reference signal of the first neighboring cell and the second reference signal of the first neighboring cell in one subframe;
or
sending the first reference signal of the first neighboring cell in the $N^{th}$ subframe 0 or subframe 5 that is before or after the second reference signal of the first neighboring cell, where N is greater than or equal to 1;
or
sending the first reference signal of the first neighboring cell in the $P^{th}$ subframe that is before or after the second reference signal of the first neighboring cell, where P is greater than or equal to 1.

With reference to the sixth aspect or any one of the first possible implementation manner of the sixth aspect to the ninth possible implementation manner of the sixth aspect, in a tenth possible implementation manner of the sixth aspect, the method further includes: sending a sending parameter of the first reference signal of the first neighboring cell and a sending parameter of the second reference signal of the first neighboring cell to all neighboring cells of the first neighboring cell to make user equipments UEs in all the neighboring cells of the first neighboring cell perform cell discovery.

With reference to the sixth aspect or any one of the first possible implementation manner of the sixth aspect to the tenth possible implementation manner of the sixth aspect, in an eleventh possible implementation manner of the sixth aspect, when a corresponding base station of the first neighboring cell is in an off state, the method further includes: sending the first reference signal and the second reference signal that are of the first neighboring cell periodically according to a preset interval.

According to a seventh aspect, user equipment is provided, including:

a receiver, configured to receive auxiliary information, where the auxiliary information includes resource information of a second reference signal of the first neighboring cell, and the first neighboring cell is any neighboring cell of a serving base station of the UE; and
a processor, configured to detect a first reference signal of the first neighboring cell, to make the UE synchronize with the first neighboring cell, where
the processor is further configured to: according to the auxiliary information, detect the first reference signal of the first neighboring cell, or detect the second reference signal of the first neighboring cell, or detect the first reference signal and the second reference signal that are of the first neighboring cell, to acquire a cell ID or a virtual ID of the first neighboring cell.

With reference to the seventh aspect, in a first possible implementation manner of the seventh aspect, the second reference signal of the first neighboring cell is an NZP-CSI-RS of the first neighboring cell or a quasi NZP-CSI-RS of the first neighboring cell, where
a scrambling code ID for generating the quasi NZP-CSI-RS is different from a scrambling code ID for generating the NZP-CSI-RS.

With reference to the seventh aspect or the first possible implementation manner of the seventh aspect, in a second possible implementation manner of the seventh aspect, the resource information of the second reference signal of the first neighboring cell includes at least one of the following information:

a resource configuration for the second reference signal of the first neighboring cell, a quantity of antenna ports for the second reference signal of the first neighboring cell, or subframe information of the second reference signal of the first neighboring cell.

With reference to the seventh aspect or the first possible implementation manner of the seventh aspect or the second possible implementation manner of the seventh aspect, in a third possible implementation manner of the seventh aspect, the first reference signal of the first neighboring cell is a PSS of the first neighboring cell or a quasi PSS of the first neighboring cell, where
a root sequence number for generating the quasi PSS is different from a root sequence number for generating the PSS.

With reference to the seventh aspect or any one of the first possible implementation manner of the seventh aspect to the third possible implementation manner of the seventh aspect, in a fourth possible implementation manner of the seventh aspect,
the first reference signal and the second reference signal are quasi co-sited.

With reference to the seventh aspect or any one of the first possible implementation manner of the seventh aspect to the fourth possible implementation manner of the seventh aspect, in a fifth possible implementation manner of the seventh aspect, the processor is specifically configured to:

detect and acquire a first reference signal sequence of the first neighboring cell according to the auxiliary information; and

perform a correlation operation between the detected first reference signal sequence of the first neighboring cell and each local protocol-specified first reference signal sequence to acquire multiple correlation values, where the UE is synchronized with the first neighboring cell if there exists a first correlation value greater than a preset threshold, where the first correlation value is any one of the multiple correlation values acquired by the performing a correlation operation between the detected first reference signal sequence of the first neighboring cell and each local protocol-specified first reference signal sequence.

With reference to the seventh aspect or any one of the first possible implementation manner of the seventh aspect to the fifth possible implementation manner of the seventh aspect, in a sixth possible implementation manner of the seventh aspect, the processor is specifically configured to:

acquire an actual sending resource location of the first reference signal of the first neighboring cell according to the resource information of the second reference signal of the first neighboring cell;
detect and acquire, at the actual sending resource location of the first reference signal of the first neighboring cell, the first reference signal of the first neighboring cell to acquire a first reference signal ID of the first neighboring cell; and
acquire the virtual ID of the first neighboring cell according to the first reference signal ID of the first neighboring cell, or acquire the cell ID of the first neighboring cell according to a correspondence between the first reference signal ID of the first neighboring cell and the cell ID of the first neighboring cell;
or
acquire an actual sending resource location of the second reference signal of the first neighboring cell according to the resource information of the second reference signal of the first neighboring cell;
detect and acquire, at the actual sending resource location of the second reference signal of the first neighboring cell, the second reference signal of the first neighboring cell to acquire a second reference signal scrambling code ID of the first neighboring cell; and
acquire the virtual ID of the first neighboring cell according to the second reference signal scrambling code ID of the first neighboring cell, or acquire the cell ID of the first neighboring cell according to a correspondence between the second reference signal scrambling code ID of the first neighboring cell and the cell ID of the first neighboring cell;
or
acquire actual sending resource locations of the first reference signal and the second reference signal that are of the first neighboring cell according to the resource information of the second reference signal of the first neighboring cell;
detect and acquire, at the actual sending resource location of the first reference signal of the first neighboring cell, the first reference signal of the first neighboring cell to acquire a first reference signal ID of the first neighboring cell;
detect and acquire, at the actual sending resource location of the second reference signal of the first neighboring cell, the second reference signal of the first neighboring cell to acquire a second reference signal scrambling code ID of the first neighboring cell; and
acquire the cell ID of the first neighboring cell according to a correspondence among the second reference signal scrambling code ID of the first neighboring cell, the first reference signal ID of the first neighboring cell, and the cell ID.

With reference to the sixth possible implementation manner of the seventh aspect, in a seventh possible implementation manner of the seventh aspect, the processor is specifically configured to:

detect and acquire, at the actual sending resource location of the first reference signal of the first neighboring cell, the first reference signal sequence of the first neighboring cell; and
perform a correlation operation between the detected first reference signal sequence of the first neighboring cell and each local protocol-specified first reference signal sequence to acquire the first reference signal ID of the first neighboring cell.

With reference to the sixth possible implementation manner of the seventh aspect or the seventh possible implementation manner of the seventh aspect, in an eighth possible implementation manner of the seventh aspect, the processor is specifically configured to:

detect and acquire, at the actual sending resource location of the second reference signal of the first neighboring cell, a second reference signal sequence of the first neighboring cell;
generate M local second reference signal sequences according to protocol-specified M second reference signal scrambling code IDs; and
perform a correlation operation between the detected second reference signal sequence of the first neighboring cell and each of the M local second reference signal sequences to acquire the second reference signal scrambling code ID of the first neighboring cell.

With reference to the seventh aspect or any one of the first possible implementation manner of the seventh aspect to the eighth possible implementation manner of the seventh aspect, in a ninth possible implementation manner of the seventh aspect, the processor is further configured to:

determine, according to the resource information of the second reference signal of the first neighboring cell, whether the first neighboring cell is discovered.

With reference to the ninth possible implementation manner of the seventh aspect, in a tenth possible implementation manner of the seventh aspect, the processor is specifically configured to:

acquire the actual sending resource location of the second reference signal of the first neighboring cell according to the resource information of the second reference signal of the first neighboring cell;
detect and acquire, at the actual sending resource location of the second reference signal of the first neighboring cell, the second reference signal of the first neighboring cell;
generate M local second reference signal sequences according to the protocol-specified M second reference signal scrambling code IDs; and
perform a correlation operation between the detected second reference signal of the first neighboring cell and each of the M local second reference signal sequences to acquire M correlation values, where
the first neighboring cell is discovered if there exists the second correlation value greater than a preset discovery condition, where the second correlation value is any one of the M correlation values acquired by the performing a correlation operation between the detected second reference signal of the first neighboring cell and each of the M local second reference signal sequences.

With reference to the seventh aspect or any one of the first possible implementation manner of the seventh aspect to the tenth possible implementation manner of the seventh aspect, in an eleventh possible implementation manner of the seventh aspect, the auxiliary information further includes the cell ID of the first neighboring cell and the first reference signal ID of the first neighboring cell.
With reference to the eleventh possible implementation manner of the seventh aspect, in a twelfth possible implementation manner of the seventh aspect, the processor is specifically configured to:

detect and acquire the first reference signal sequence of the first neighboring cell according to the auxiliary information;
generate a local first reference signal sequence of the first neighboring cell according to the first reference signal ID of the first neighboring cell; and
perform a correlation operation between the detected first reference signal sequence of the first neighboring cell and the local first reference signal sequence of the first neighboring cell to acquire a third correlation value, where the UE is synchronized with the first neighboring cell if the third correlation value is greater than a preset threshold.

With reference to the seventh aspect or any one of the first possible implementation manner of the seventh aspect to the twelfth possible implementation manner of the seventh aspect, in a thirteenth possible implementation manner of the seventh aspect, the auxiliary information further includes the second reference signal scrambling code ID of the first neighboring cell.

With reference to the thirteenth possible implementation manner of the seventh aspect, in a fourteenth possible implementation manner of the seventh aspect, the processor is specifically configured to:

acquire the actual sending resource location of the second reference signal of the first neighboring cell according to the resource information of the second reference signal of the first neighboring cell;

detect and acquire, at the actual sending resource location of the second reference signal of the first neighboring cell, the second reference signal sequence of the first neighboring cell;

generate a local second reference signal sequence of the first neighboring cell according to the second reference signal scrambling code ID of the first neighboring cell; and

perform a correlation operation between the detected second reference signal of the first neighboring cell and the local second reference signal sequence of the first neighboring cell to acquire a fourth correlation value, where the first neighboring cell is discovered if the fourth correlation value is greater than a preset discovery condition.

With reference to the seventh aspect or any one of the first possible implementation manner of the seventh aspect to the fourteenth possible implementation manner of the seventh aspect, in a fifteenth possible implementation manner of the seventh aspect, the processor is specifically configured to:

if the first reference signal of the first neighboring cell and the second reference signal of the first neighboring cell are sent in one subframe, detect the first reference signal of the first neighboring cell in a subframe indicated in the resource information of the second reference signal of the first neighboring cell;

or

if the first reference signal of the first neighboring cell is sent in the $N^{th}$ subframe 0 or subframe 5 that is before or after the second reference signal of the first neighboring cell, detect the first reference signal of the first neighboring cell in a subframe 0 or a subframe 5 that is before or after a subframe indicated in the resource information of the second reference signal of the first neighboring cell, where N is greater than or equal to 1;

or

if the first reference signal of the first neighboring cell is sent in the $P^{th}$ subframe that is before or after the second reference signal of the first neighboring cell, detect the first reference signal of the first neighboring cell in the $P^{th}$ subframe that is before or after a subframe indicated in the resource information of the second reference signal of the first neighboring cell, where the auxiliary information further includes a subframe offset P between the first reference signal of the first neighboring cell and the second reference signal of the first neighboring cell, and P is greater than or equal to 1.

With reference to the seventh aspect or any one of the first possible implementation manner of the seventh aspect to the fifteenth possible implementation manner of the seventh aspect, in a sixteenth possible implementation manner of the seventh aspect, the processor is further configured to:

perform, at the sending resource location of the second reference signal of the first neighboring cell, RRM measurement for the first neighboring cell according to the resource information of the second reference signal of the first neighboring cell to acquire a metric, where the metric includes at least one of an RSRP, an RSSI, or an RSRQ.

With reference to the sixteenth possible implementation manner of the seventh aspect, in a sixteenth possible implementation manner of the seventh aspect, the auxiliary information further includes resource information of a measured resource 1 of the first neighboring cell, where the resource information of the measured resource 1 of the first neighboring cell includes at least one of the following information:

a resource configuration for the measured resource 1 of the first neighboring cell, a quantity of antenna ports for the measured resource 1 of the first neighboring cell, or subframe information of the measured resource 1 of the first neighboring cell.

With reference to the seventeenth possible implementation manner of the seventh aspect, in a seventeenth possible implementation manner of the seventh aspect, the measured resource 1 of the first neighboring cell is a ZP-CSI-RS of the first neighboring cell.

With reference to the seventeenth possible implementation manner of the seventh aspect or the eighteenth possible implementation manner of the seventh aspect, in a nineteenth possible implementation manner of the seventh aspect, the processor is specifically configured to:

Perform, at the sending resource location of the Second reference signal of the first neighboring cell, RRM measurement for the first neighboring cell according to the resource information of the second reference signal of the first neighboring cell to acquire the metric RSRP;
perform, at a sending resource location of the measured resource 1 of the first neighboring cell, RRM measurement for the first neighboring cell according to the resource information of the measured resource 1 of the first neighboring cell to acquire the metric RSSI; and
acquire the RSRQ according to the RSRP and the RSSI.

According to an eighth aspect, a base station is provided, where the base station is a serving base station of UE, and the base station includes:

a processor, configured to acquire a sending parameter of a first reference signal of a first neighboring cell and a sending parameter of a second reference signal of the first neighboring cell, where
the processor is further configured to generate auxiliary information according to the acquired sending parameter of the first reference signal of the first neighboring cell and sending parameter of the second reference signal of the first neighboring cell, where the auxiliary information includes resource information of the second reference signal of the first neighboring cell; and
a transmitter, configured to send the generated auxiliary information to user equipment UE in a cell to make the UE perform cell discovery.

With reference to the eighth aspect, in a first possible implementation manner of the eighth aspect, the second reference signal of the first neighboring cell is an NZP-CSI-RS of the first neighboring cell or a quasi NZP-CSI-RS of the first neighboring cell, where
a scrambling code ID for generating the quasi NZP-CSI-RS is different from a scrambling code ID for generating the NZP-CSI-RS.
With reference to the eighth aspect or the first possible implementation manner of the eighth aspect, in a second possible implementation manner of the eighth aspect, the first reference signal of the first neighboring cell is a PSS or a quasi PSS of the first neighboring cell, where
a root sequence number for generating the quasi PSS is different from a root sequence number for generating the PSS.
With reference to the eighth aspect or the first possible implementation manner of the eighth aspect or the second possible implementation manner of the eighth aspect, in a third possible implementation manner of the eighth aspect, the resource information of the second reference signal of the first neighboring cell includes at least one of the following information:

a resource configuration for the second reference signal of the first neighboring cell, a quantity of antenna ports for the second reference signal of the first neighboring cell, or subframe information of the second reference signal of the first neighboring cell.

With reference to the eighth aspect or any one of the first possible implementation manner of the eighth aspect to the third possible implementation manner of the eighth aspect, in a fourth possible implementation manner of the eighth aspect, the auxiliary information further includes a cell ID of the first neighboring cell and a first reference signal ID of the first neighboring cell.
With reference to the eighth aspect or any one of the first possible implementation manner of the eighth aspect to the fourth possible implementation manner of the second aspect, in a fifth possible implementation manner of the eighth aspect, the auxiliary information further includes a second reference signal scrambling code ID of the first neighboring cell.
With reference to the eighth aspect or any one of the first possible implementation manner of the eighth aspect to the fifth possible implementation manner of the eighth aspect, in a sixth possible implementation manner of the eighth aspect, when the first reference signal of the first neighboring cell is sent in the $P^{th}$ subframe that is before or after the second reference signal of the first neighboring cell, the auxiliary information further includes a subframe offset P between the first reference signal of the first neighboring cell and the second reference signal of the first neighboring cell, where P is greater than or equal to 1.
According to a ninth aspect, a base station is provided, where the base station is a base station corresponding to a first neighboring cell and the base station includes:

a transmitter, configured to send a first reference signal and a second reference signal that are of the first neighboring cell, where the first reference signal is used for UE to synchronize with the cell, and the second reference signal is used for the UE to perform cell discovery and RRM measurement.

With reference to the ninth aspect, in a first possible implementation manner of the ninth aspect, the second reference signal of the first neighboring cell is an NZP-CSI-RS of the first neighboring cell or a quasi NZP-CSI-RS of the first neighboring cell, where
a scrambling code ID for generating the quasi NZP-CSI-RS is different from a scrambling code ID for generating the NZP-CSI-RS.

With reference to the ninth aspect or the first possible implementation manner of the ninth aspect, in a second possible implementation manner of the ninth aspect, the first reference signal of the first neighboring cell is a PSS or a quasi PSS of the first neighboring cell, where
a root sequence number for generating the quasi PSS is different from a root sequence number for generating the PSS.

With reference to the ninth aspect or the first possible implementation manner of the ninth aspect or the second possible implementation manner of the ninth aspect, in a third possible implementation manner of the ninth aspect, the base station further includes a processor, configured to:

when the second reference signal of the first neighboring cell is transmitted over one antenna port, map the second reference signal of the first neighboring cell onto four resources in each resource block; or
when the second reference signal of the first neighboring cell is transmitted over one antenna port, map the second reference signal of the first neighboring cell onto eight resource elements in each resource block; or
when the second reference signal of the first neighboring cell is transmitted over two antenna ports, map the second reference signal of the first neighboring cell onto four resource elements in each resource block; or
when the second reference signal of the first neighboring cell is transmitted over two antenna ports, map the second reference signal of the first neighboring cell onto eight resource elements in each resource block.

With reference to the third possible implementation manner of the ninth aspect, in a fourth possible implementation manner of the ninth aspect,
a sequence length of the second reference signal of the first neighboring cell is Q times a quantity of resource blocks included in a maximum system bandwidth, where Q is a positive integer greater than 1.

With reference to the ninth aspect or any one of the first possible implementation manner of the ninth aspect to the fourth possible implementation manner of the ninth aspect, in a fifth possible implementation manner of the ninth aspect, the processor is further configured to:

determine a sending resource location of the second reference signal of the first neighboring cell according to a cell ID of the first neighboring cell and a quantity of configured resources of the first neighboring cell.

With reference to the fifth possible implementation manner of the ninth aspect, in a sixth possible implementation manner of the ninth aspect, the processor is specifically configured to:

calculate the sending resource location of the second reference signal of the first neighboring cell according to a PSS ID of the first neighboring cell.

With reference to the fifth possible implementation manner of the ninth aspect, in a seventh possible implementation manner of the ninth aspect, the processor is specifically configured to:

calculate the sending resource location of the second reference signal of the first neighboring cell according to an SSS ID of the first neighboring cell.

With reference to the fifth possible implementation manner of the ninth aspect, in an eighth possible implementation manner of the ninth aspect, the configured resources of the first neighboring cell are S resource sets, with each resource set including T resources, and the processor is specifically configured to:

determine a sending resource set of the second reference signal of the first neighboring cell according to a PSS ID of the first neighboring cell, and determine the sending resource location, in the sending resource set, of the second reference signal of the first neighboring cell according to an SSS ID of the first neighboring cell.

With reference to the ninth aspect or any one of the first possible implementation manner of the ninth aspect to the eighth possible implementation manner of the ninth aspect, in a ninth possible implementation manner of the ninth aspect, the transmitter is further configured to:

send the first reference signal of the first neighboring cell and the second reference signal of the first neighboring cell in one subframe;
or
send the first reference signal of the first neighboring cell in the N$^{th}$ subframe 0 or subframe 5 that is before or after the second reference signal of the first neighboring cell, where N is greater than or equal to 1;
or
send the first reference signal of the first neighboring cell in the P$^{th}$ subframe that is before or after the second reference signal of the first neighboring cell, where P is greater than or equal to 1.

With reference to the ninth aspect or any one of the first possible implementation manner of the ninth aspect to the ninth possible implementation manner of the ninth aspect, in a tenth possible implementation manner of the ninth aspect, the transmitter is further configured to send a sending parameter of the first reference signal of the first neighboring cell and a sending parameter of the second reference signal of the first neighboring cell to all neighboring cells of the first neighboring cell to make UEs in all the neighboring cells of the first neighboring cell perform cell discovery.

With reference to the ninth aspect or any one of the first possible implementation manner of the ninth aspect to the tenth possible implementation manner of the ninth aspect, in an eleventh possible implementation manner of the ninth aspect, when the corresponding base station of the first neighboring cell is in an off state, the transmitter is further configured to send the first reference signal and the second reference signal that are of the first neighboring cell periodically according to a preset interval.

The embodiments of the present invention provide user equipment, a base station, and a cell discovery method. UE receives auxiliary information, where the auxiliary information includes resource information of a second reference signal of a first neighboring cell, and the first neighboring cell is any neighboring cell of a serving base station of the UE. The UE detects a first reference signal of the first neighboring cell according to the auxiliary information to make the UE synchronize with the first neighboring cell. The UE detects, according to the auxiliary information, the first reference signal of the first neighboring cell, or the second reference signal of the first neighboring cell, or the first reference signal and the second reference signal that are of the first neighboring cell, to acquire a cell identity ID or a virtual ID of the first neighboring cell. Accurate cell discovery is implemented in a scenario in which small cells are densely deployed, resolving a prior-art defect of strong interference for cell discovery in a scenario in which small cells are densely deployed.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is schematic structural diagram of user equipment according to an embodiment of the present invention;
FIG. 2 is schematic structural diagram of another user equipment according to an embodiment of the present invention;
FIG. 3 is schematic structural diagram of a base station according to an embodiment of the present invention;
FIG. 4 is schematic structural diagram of another base station according to an embodiment of the present invention;
FIG. 5A is schematic structural diagram of still another base station according to an embodiment of the present invention;
FIG. 5B is schematic diagram of a resource mapping according to an embodiment of the present invention;
FIG. 5C is schematic diagram of another resource mapping according to an embodiment of the present invention;
FIG. 5D is schematic diagram of still another resource mapping according to an embodiment of the present invention;
FIG. 5E is schematic diagram of yet another resource mapping according to an embodiment of the present invention;
FIG. 6 is a schematic flowchart of a cell discovery method according to an embodiment of the present invention;
FIG. 7 is a schematic flowchart of a cell discovery method according to an embodiment of the present invention;
FIG. 8 is a schematic flowchart of another cell discovery method according to an embodiment of the present invention;
FIG. 9 is a schematic flowchart of still another cell discovery method according to an embodiment of the present invention;
FIG. 10A is a schematic flowchart of yet another cell discovery method according to an embodiment of the present invention;

FIG. 10B is a schematic diagram of a sending resource location relationship between a first reference signal and a second reference signal according to an embodiment of the present invention;

FIG. 10C is a schematic diagram of another sending resource location relationship between a first reference signal and a second reference signal according to an embodiment of the present invention;

FIG. 10D is a schematic diagram of still another sending resource location relationship between a first reference signal and a second reference signal according to an embodiment of the present invention;

FIG. 11 is schematic structural diagram of user equipment according to an embodiment of the present invention;

FIG. 12 is schematic structural diagram of a base station according to an embodiment of the present invention; and

FIG. 13 is schematic structural diagram of another base station according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

**Embodiment 1**

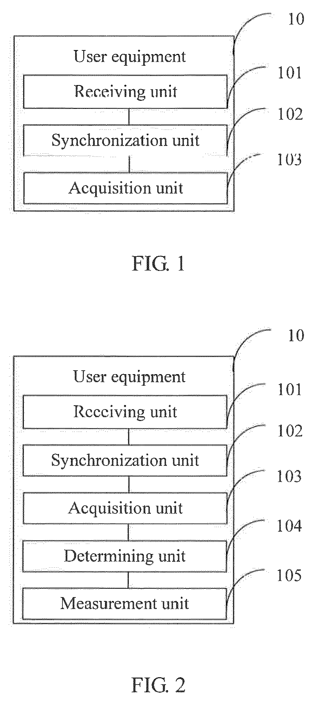

Embodiment 1 of the present invention provides user equipment 10. Referring to FIG. 1, the user equipment 10 may include:

a receiving unit 101, configured to receive auxiliary information, where the auxiliary information may include resource information of a second reference signal of a first neighboring cell, and the first neighboring cell is any neighboring cell of a serving base station of the UE;

a synchronization unit 102, configured to detect a first reference signal of the first neighboring cell according to the auxiliary information received by the receiving unit 101, to make the UE synchronize with the first neighboring cell; and

an acquisition unit 103, configured to: according to the auxiliary information received by the receiving unit 101, detect the first reference signal of the first neighboring cell, or detect the second reference signal of the first neighboring cell, or detect the first reference signal and the second reference signal that are of the first neighboring cell, to acquire a cell identity ID or a virtual ID of the first neighboring cell.

The virtual ID of the first neighboring cell is an ID that has a preset correspondence with the ID of the first neighboring cell. A specific preset correspondence may be determined according to an actual need, which is not limited in the present invention.

Optionally, the second reference signal of the first neighboring cell may be an NZP-CSI-RS of the first neighboring cell or a quasi NZP-CSI-RS of the first neighboring cell. A specific form of the second reference signal of the first neighboring cell is not specifically limited in the present invention.

The second reference signal is generated based on a second reference signal scrambling code ID according to a corresponding formula. The quasi NZP-CSI-RS and the NZP-CSI-RS are similar in type, but a scrambling code ID for generating the quasi NZP-CSI-RS is different from a scrambling code ID for generating the NZP-CSI-RS during quasi NZP-CSI-RS generation.

The following describes the quasi NZP-CSI-RS and the NZP-CSI-RS in detail.

Specifically, an NZP-CSI-RS sequence is generated according to the following formula 1:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,\ldots,N_{RB}^{max,DL} - 1 \quad \text{(formula 1)}$$

where $n_s$ is a serial number of a slot (slot) inside a radio frame, $l$ is a serial number of an orthogonal frequency division multiplexing (Orthogonal Frequency Division Multiplexing, OFDM for short) symbol in a slot, and $N_{RB}^{max,DL}$ is a quantity of resource blocks included in a maximum configurable system bandwidth. $c(i)$ in the formula 1 is a pseudo-random sequence that is defined in an LTE protocol.

When the pseudo-random sequence is generated, a start parameter defined as follows is required:

$$c_{\text{init}} = 2^{10} \cdot \left(7 \cdot \left(n_s + 1\right) + l + 1\right) \cdot \left(2 \cdot N_{\text{ID}}^{\text{CSI}} + 1\right) + 2 \cdot N_{\text{ID}}^{\text{CSI}} + N_{\text{CP}} \qquad \text{(formula 2)}$$

where $N_{\text{CP}}$ is determined based on a type of a cyclic prefix of an OFDM symbol used by a cell. There are two types of cyclic prefixes in an LTE system: common cyclic prefix and extended cyclic prefix. If a cell uses a common cyclic prefix, $N_{\text{CP}} = 1$. If a cell uses an extended cyclic prefix, $N_{\text{CP}} = 0$. $N_{\text{ID}}^{\text{CSI}}$ is a second reference signal scrambling code ID of a cell.

Therefore, for the first neighboring cell, the second reference signal is generated according to the formula 1. If the second reference signal uses the quasi NZP-CSI-RS, a formula for generating the quasi NZP-CSI-RS is the same as that for the NZP-CSI-RS, that is, the formula 1, but $N_{\text{ID}}^{\text{DRS}}$ instead of $N_{\text{ID}}^{\text{CSI}}$ is used as the scrambling code ID. $N_{\text{ID}}^{\text{DRS}}$ and $N_{\text{ID}}^{\text{CSI}}$ may be different numerical values.

Optionally, the resource information of the second reference signal of the first neighboring cell may include at least one of the following information:

> a resource configuration for the second reference signal of the first neighboring cell, a quantity of antenna ports for the second reference signal of the first neighboring cell, or subframe information of the second reference signal of the first neighboring cell.

The resource configuration for the second reference signal of the first neighboring cell refers to a location of a resource, of communications system resources, used to send the second reference signal of the first neighboring cell. In LTE, a time-frequency resource lasting one slot in time and including 12 subcarriers in frequency is called a resource block, a time-frequency resource lasting one OFDM symbol in time and including one subcarrier in frequency is called a resource element (Resource Element, RE for short). In an LTE protocol, an RE is a minimum time-frequency unit. The resource configuration for the second reference signal of the first neighboring cell is used to indicate in which REs of the communications system resources the second reference signal of the first neighboring cell is sent. The UE may known, according to the resource configuration for the second reference signal of the first neighboring cell, on which UE the second reference signal of the first neighboring cell is to be detected.

The quantity of antenna ports for the second reference signal of the first neighboring cell is used to indicate a quantity of antenna ports, in the first neighboring cell, used to send the second reference signal. In a communications system, the quantity of antenna ports for the second reference signal may be configured. A base station may send the second reference signal on one antenna port or may send the second reference signal on multiple antenna ports. In an LTE protocol, the quantity of antenna ports for the second reference signal may be configured to any one of 1, 2, 4, or 8. The UE may correctly detect the second reference signal of the first neighboring cell according to the quantity of antenna ports and a serial number of a resource for the second reference signal of the first neighboring cell.

The subframe information of the second reference signal of the first neighboring cell is a sending interval and a sending subframe location of the second reference signal of the first neighboring cell. Because the second reference signal is periodically sent by the base station, the sending interval may be configured. The UE may correctly detect the second reference signal of the first neighboring cell by using the subframe information.

Optionally, the first reference signal of the first neighboring cell may be a PSS of the neighboring cell or a quasi PSS of the first neighboring cell. A type of the first reference signal of the first neighboring cell is not specifically limited in the present invention.

The first reference signal is generated based on a first reference signal ID according to a corresponding formula. The quasi PSS and the PSS are similar in type, but a root sequence number for generating the quasi PSS is different from a root sequence number for generating the PSS during quasi PSS generation.

The following describes the quasi NZP-CSI-RS and the NZP-CSI-RS in detail.

Specifically, a formula for generating a PSS sequence is shown as the following formula 3:

$$d_u(n) = \begin{cases} e^{-j\frac{\pi u n(n+1)}{63}} & n = 0,1,\ldots,30 \\ e^{-j\frac{\pi u (n+1)(n+2)}{63}} & n = 31,32,\ldots,61 \end{cases} \qquad \text{(formula 3)}$$

where u is called a root sequence number. The root sequence number is uniquely determined by an ID of a cell. If the quasi PSS is used as the first reference signal, a root sequence number u for generating the quasi PSS uses a value different from that of a root sequence number u for generating the PSS.

Further, the first reference signal and the second reference signal are quasi co-sited.

That the first reference signal and the second reference signal are quasi co-sited means that the two signals, namely, the first reference signal and the second reference signal, pass through similar channels. In other words, the first reference signal and the second reference signal are similar in Doppler shift, Doppler distribution, average delay, and delay distribution, or similar in some parametric values of the foregoing four parametric values.

Further, according to different content included in the auxiliary information, the synchronization unit 102 may make the UE synchronize with the first neighboring cell by using the following two manners:

First manner: When the auxiliary information does not include a first reference signal ID of the first neighboring cell,

detect and acquire a first reference signal sequence of the first neighboring cell according to the auxiliary information; and perform a correlation operation between the detected first reference signal sequence of the first neighboring cell and each local protocol-specified first reference signal sequence to acquire multiple correlation values, where

the UE is synchronized with the first neighboring cell if there exists a first correlation value greater than a preset threshold, where the first correlation value is any one of the multiple correlation values acquired by the performing a correlation operation between the detected first reference signal sequence of the first neighboring cell and each local protocol-specified first reference signal sequence.

Second manner: When the auxiliary information includes a first reference signal ID of the first neighboring cell,

detect and acquire a first reference signal sequence of the first neighboring cell according to the auxiliary information; generate a local first reference signal sequence of the first neighboring cell according to the first reference signal ID of the first neighboring cell; and

perform a correlation operation between the detected first reference signal sequence of the first neighboring cell and the local first reference signal sequence of the first neighboring cell to acquire a third correlation value, where

the UE is synchronized with the first neighboring cell if the third correlation value is greater than a preset threshold.

It should be noted that, in a process of synchronizing the UE with the first neighboring cell, whether the UE is synchronized with the first neighboring cell is determined by comparing the acquired correlation value with a preset threshold, where the preset threshold is determined according to an actual need, and specific data of the preset threshold is not specifically limited in the present invention.

It should be noted that the UE may proceed to discover and measure the first neighboring cell only after the UE is synchronized with the first neighboring cell. If the UE is not synchronized with the first neighboring cell, the UE does not discover or measure the first neighboring cell.

Specifically, the acquisition unit 103 may acquire the cell ID or the virtual ID by using any one of the following three methods:

First method:

Acquire an actual sending resource location of the first reference signal of the first neighboring cell according to the resource information of the second reference signal of the first neighboring cell.

There exists a correspondence between a transmission location of the first reference signal of the first neighboring cell and a transmission location of the second reference signal of the first neighboring cell, and the correspondence may be a correspondence that is known to both the base station and the UE or may be a correspondence configured by the base station.

When the correspondence is a correspondence that is known to both the base station and the UE, the actual sending resource location of the first reference signal of the first neighboring cell may be directly acquired according to the resource information of the second reference signal of the first neighboring cell.

When the correspondence is a correspondence configured by the base station, the base station may send indication information used to indicate a location relationship between the first reference signal and the second reference signal, and then may acquire the actual sending resource location of the first reference signal of the first neighboring cell according to the resource information of the second reference signal of the first neighboring cell and the indication information sent by the base station.

It should be noted that the location correspondence between the first reference signal and the second reference signal is not specifically limited in any embodiment of the preset invention.

Detect and acquire, at the actual sending resource location of the first reference signal of the first neighboring cell, the first reference signal of the first neighboring cell to acquire the first reference signal ID of the first neighboring cell.

Perform a correlation operation between the detected first reference signal of the first neighboring cell and each local protocol-specified first reference signal sequence to acquire the first reference signal ID of the first neighboring cell.

Acquire the virtual ID of the first neighboring cell according to the first reference signal ID of the first neighboring cell, or acquire the cell ID of the first neighboring cell according to a correspondence between the first reference signal ID of the first neighboring cell and the cell ID of the first neighboring cell.

The correspondence between the first reference signal ID of the first neighboring cell and the cell ID of the first neighboring cell is an agreed relationship that is known to both the base station and the UE, which is not specifically limited in the present invention.

Second method:

Acquire an actual sending resource location of the second reference signal of the first neighboring cell according to the resource information of the second reference signal of the first neighboring cell.

Detect and acquire, at the actual sending resource location of the second reference signal of the first neighboring cell, the second reference signal of the first neighboring cell to acquire the second reference signal scrambling code ID of the first neighboring cell.

Acquire the virtual ID of the first neighboring cell according to the second reference signal scrambling code ID of the first neighboring cell, or acquire the cell ID of the first neighboring cell according to a correspondence between the second reference signal scrambling code ID of the first neighboring cell and the cell ID of the first neighboring cell, where

the correspondence between the second reference signal scrambling code ID of the first neighboring cell and the cell ID of the first neighboring cell is an agreed relationship that is known to both the base station and the UE, which is not specifically limited in the present invention.

Third method:

Acquire actual sending resource locations of the first reference signal and the second reference signal that are of the first neighboring cell according to the resource information of the second reference signal of the first neighboring cell.

Detect and acquire, at the actual sending resource location of the first reference signal of the first neighboring cell, the first reference signal of the first neighboring cell to acquire the first reference signal ID of the first neighboring cell.

Detect and acquire, at the actual sending resource location of the second reference signal of the first neighboring cell, the second reference signal of the first neighboring cell to acquire the second reference signal scrambling code ID of the first neighboring cell.

Acquire the cell ID of the first neighboring cell according to a correspondence among the second reference signal scrambling code ID of the first neighboring cell, the first reference signal ID of the first neighboring cell, and the cell ID of the first neighboring cell.

The correspondence among the second reference signal scrambling code ID of the first neighboring cell, the first reference signal ID of the first neighboring cell, and the cell ID of the first neighboring cell is an agreed relationship that is known to both the base station and the UE, which is not specifically limited in the present invention.

Further, the detecting and acquiring, by the acquisition unit 103 at the actual sending resource location of the first reference signal of the first neighboring cell, the first reference signal of the first neighboring cell to acquire the first reference signal ID of the first neighboring cell may include:

detecting and acquiring, at the actual sending resource location of the first reference signal of the first neighboring cell, the first reference signal sequence of the first neighboring cell; and

performing a correlation operation between the detected first reference signal sequence of the first neighboring cell and each local protocol-specified first reference signal sequence to acquire the first reference signal ID of the first neighboring cell.

When a correlation operation is performed between the detected first reference signal sequence of the first neighboring cell and a local protocol-specified first reference signal sequence that is the same as a first reference signal sequence actually used by the first neighboring cell, a correlation peak is obtained, and then the first reference signal sequence actually used by the first neighboring cell may be determined. A root sequence number used for generating the sequence may be calculated according to the first reference signal sequence actually used by the first neighboring cell, and the first reference signal ID of the first neighboring cell may be obtained by querying a root sequence number and first reference signal correspondence table according to the root sequence number.

Optionally, if the auxiliary information includes the first reference signal ID of the first neighboring cell, the first reference signal ID of the first neighboring cell may be directly acquired according to the auxiliary information.

Further, the detecting and acquiring, by the acquisition unit 103 at the actual sending resource location of the second reference signal of the first neighboring cell, the second reference signal of the first neighboring cell to acquire the second reference signal scrambling code ID of the first neighboring cell may include:

detecting and acquiring, at the actual sending resource location of the second reference signal of the first neighboring cell, a second reference signal sequence of the first neighboring cell;

generating M local second reference signal sequences according to protocol-specified M second reference signal scrambling code identities IDs; and

performing a correlation operation between the detected second reference signal sequence of the first neighboring cell and each of the M local second reference signal sequences to acquire the second reference signal scrambling code ID of the first neighboring cell.

When a correlation operation is performed between the detected second reference signal sequence of the first neighboring cell and a local protocol-specified first reference signal sequence that is the same as a second reference signal sequence actually used by the first neighboring cell, a correlation peak is obtained, and then the second reference signal sequence actually used by the first neighboring cell may be determined. The second reference signal scrambling code ID of the first neighboring cell may be calculated according to the second reference signal sequence actually used by the first neighboring cell.

Optionally, if the auxiliary information includes the second reference signal scrambling code ID of the first neighboring cell, the second reference signal scrambling code ID of the first neighboring cell may be directly acquired according to the auxiliary information.

Further, the user equipment 10 may further include:

a determining unit 104, configured to determine, according to the resource information of the second reference signal of the first neighboring cell, whether the first neighboring cell is discovered.

Further, according to different content included in the auxiliary information, the determining unit 104 may determine, by using the following two manners, whether the first neighboring cell is discovered:

First manner: When the auxiliary information does not include the second reference signal scrambling code ID of the first neighboring cell,

acquire the actual sending resource location of the second reference signal of the first neighboring cell according to the resource information of the second reference signal of the first neighboring cell;

detect and acquire, at the actual sending resource location of the second reference signal of the first neighboring cell, the second reference signal sequence of the first neighboring cell;

generate M local second reference signal sequences according to the protocol-specified M second reference signal scrambling code IDs; and

perform a correlation operation between the detected second reference signal sequence of the first neighboring cell and each of the M local second reference signal sequences to acquire M correlation values, where

the first neighboring cell is discovered if there exists a second correlation value greater than a preset discovery condition, where the second correlation value is any one of the M correlation values acquired by the performing a correlation operation between the detected second reference signal of the first neighboring cell and each of the M local second reference signal sequences.

Second manner: When the auxiliary information includes the second reference signal scrambling code ID of the first neighboring cell,

acquire the actual sending resource location of the second reference signal of the first neighboring cell according to the resource information of the second reference signal of the first neighboring cell;

detect and acquire, at the actual sending resource location of the second reference signal of the first neighboring cell, the second reference signal sequence of the first neighboring cell;

generate a local second reference signal sequence of the first neighboring cell according to the second reference signal scrambling code ID of the first neighboring cell, and

perform a correlation operation between the detected second reference signal of the first neighboring cell and the local second reference signal sequence of the first neighboring cell to acquire a fourth correlation value, where

the first neighboring cell is discovered if the fourth correlation value is greater than a preset discovery condition.

The preset discovery condition is a threshold used to determined a signal strength of the first neighboring cell. If the correlation value between the detected and acquired second reference signal sequence of the first neighboring cell and any local protocol-specified second reference signal sequence is greater than the preset discovery condition, it is indicated that the signal strength of the first neighboring cell is enough and the first neighboring cell is discovered. If correlation values between the detected and acquired second reference signal sequence of the first neighboring cell and all local protocol-specified second reference signal sequences are less than the preset discovery condition, it is indicated that the signal strength of the first neighboring cell is not enough and the first neighboring cell is not discovered.

It should be noted that the preset discovery condition may be determined according to an actual need, which is not specifically limited in the present invention.

It should be noted that the acquisition unit 103 may acquire the cell ID or the virtual ID of the first neighboring cell after the UE is synchronized with the first neighboring cell, or after the UE is synchronized with the first neighboring cell and after the determining unit 104 determines that the first neighboring cell is discovered, which is not specifically limited in the present invention.

Further, the auxiliary information may further include the cell ID of the first neighboring cell and the first reference signal ID of the first neighboring cell.

Optionally, in a process of detecting, by the synchronization unit 103, the first reference signal of the first neighboring cell to make the UE synchronize with the first neighboring cell, the synchronization unit 103 may detect a location of the first reference signal of the first neighboring cell according to different sending locations of the first reference signal of the first neighboring cell by using the following three manners:

First manner: If the first reference signal of the first neighboring cell and the second reference signal of the first neighboring cell are sent in one subframe, detect the first reference signal of the first neighboring cell in a subframe indicated in the resource information of the second reference signal of the first neighboring cell.

Second manner: If the first reference signal of the first neighboring cell is sent in the $N^{th}$ subframe 0 or subframe 5 that is before or after the second reference signal of the first neighboring cell, detect the first reference signal of the first neighboring cell in a subframe 0 or a subframe 5 that is before or after a subframe indicated in the resource information of the second reference signal of the first neighboring cell, where N is greater than or equal to 1.

N may be determined according to an actual need, which is not specifically limited in the present invention.

Third manner: If the first reference signal of the first neighboring cell is sent in the $P^{th}$ subframe that is before or after the second reference signal of the first neighboring cell, detect the first reference signal of the first neighboring cell in the $P^{th}$ subframe that is before or after a subframe indicated in the resource information of the second reference signal of the first neighboring cell, where P is greater than or equal to 1. In this case, the auxiliary information further includes a subframe offset P between the first reference signal of the first neighboring cell and the second reference signal of the first neighboring cell, where P is greater than or equal to 1.

P may be determined according to an actual need, which is not specifically limited in the present invention.

It should be noted that, a timing correspondence between the first reference signal and the second reference signal that are of the first neighboring cell may be the timing relationships described in the foregoing three manners or may be another timing correspondence, and may he determined according an actual need, which is not specifically limited in the present invention.

Further, referring to FIG. 2, the user equipment 10 may further include:

a measurement unit 105, configured to perform, at the sending resource location of the second reference signal of the first neighboring cell, RRM measurement for the first neighboring cell according to the resource information of the second reference signal of the first neighboring cell to acquire a metric, where the metric may include at least one of an RSRP, an RSSI, or an RSRQ.

Optionally, the auxiliary information may further include resource information of a measured resource 1 of the first neighboring cell, and the resource information of the measured resource 1 of the first neighboring cell includes at least one of the following information: a resource configuration for the measured resource 1 of the first neighboring cell, a quantity of antenna ports for the measured resource 1 of the first neighboring cell, or subframe information of the measured resource 1 of the first neighboring cell.

The resource configuration for the measured resource 1 of the first neighboring cell refers to a location of a resource, of communications system resources, used to send the measured resource 1 of the first neighboring cell. In LTE, a time-frequency resource lasting one slot in time and including 12 subcarriers in frequency is called a resource block; a time-frequency resource lasting one OFDM symbol in time and including one subcarrier in frequency is called an RE. In an LTE protocol, an RE is a minimum time-frequency unit. The resource configuration for the second reference signal of the first neighboring cell is used to indicate in which REs of the communications system resources the second reference signal of the first neighboring cell is sent. The UE may know, according to the resource configuration for the measured resource 1 of the first neighboring cell, on which UE the measured resource 1 of the first neighboring cell is to be detected.

The quantity of antenna ports for the measured resource 1 of the first neighboring cell is used to indicate a quantity of antenna ports used to send the measured resource 1 in the first neighboring cell. In a communications system, a quantity of antenna ports for the measured resource 1 may be configured. A base station may send the measured resource 1 on one antenna port or may send the measured resource 1 on multiple antenna ports. The UE may correctly detect the measured resource 1 of the first neighboring cell according to the quantity of antenna ports for and a resource serial number of the measured resource 1 of the first neighboring cell.

The subframe information of the measured resource 1 of the first neighboring cell is a sending interval and a sending subframe location of the measured resource 1 of the first neighboring cell. Because the measured resource 1 is periodically sent by the base station, the sending interval may be configured. The UE may correctly detect the measured resource 1 of the first neighboring cell by using the subframe information.

Optionally, the measured resource 1 of the first neighboring cell may be a ZP-CSI-RS of the first neighboring cell.

When the auxiliary information further includes the resource information of the measured resource 1 of the first neighboring cell, the measurement unit 105 may be specifically further configured to:

perform, at the sending resource location of the second reference signal of the first neighboring cell, RRM measurement for the first neighboring cell according to the resource information of the second reference signal of the first neighboring cell to acquire the metric RSRP;

perform, at a sending resource location of the measured resource 1 of the first neighboring cell, RRM measurement for the first neighboring cell according to the resource information of the measured resource 1 of the first neighboring cell to acquire the metric RSSI; and

acquire the RSRQ according to the RSRP and the RSSI.

It should be noted that the first neighboring cell is any neighboring cell of the serving base station of the UE. Therefore, in a cell discovery process by the UE, same processing is performed for all neighboring cells. This embodiment of the present invention is described by using only the first neighboring cell as an example, and for another neighboring cell, the same processing method is used, which is not described again.

This embodiment of the present invention provides user equipment 10, which receives auxiliary information, where the auxiliary information includes resource information of a second reference signal of a first neighboring cell, and the first neighboring cell is any neighboring cell of a serving base station of the UE; detects a first reference signal of the first neighboring cell according to the auxiliary information to make the UE synchronize with the first neighboring cell; and according to the auxiliary information, detects the first reference signal of the first neighboring cell, or detects the second reference signal of the first neighboring cell, or detects the first reference signal and the second reference signal that are of the first neighboring cell, to acquire a cell identity ID or a virtual ID of the first neighboring cell. Accurate cell discovery is implemented in a scenario in which small cells are densely deployed, resolving a prior-art defect of strong interference for cell discovery in a scenario in which small cells are densely deployed.

**Embodiment 2**

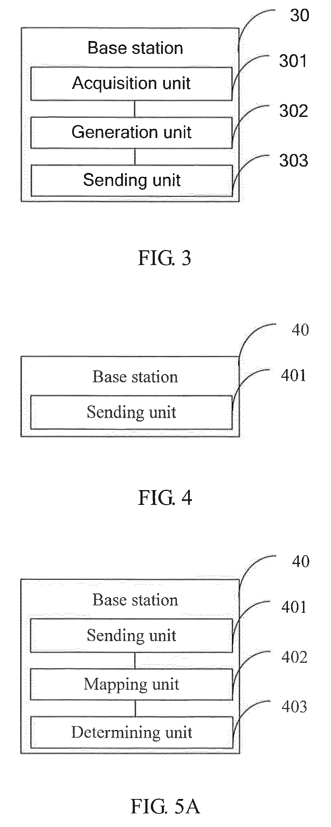

Embodiment 2 of the present invention provides a base station 30. The base station 30 is a serving base station of user equipment 10. Referring to FIG. 3, the base station 30 may include an acquisition unit 301, a generation unit 302, and a sending unit 303.

The acquisition unit 301 is configured to acquire a sending parameter of a first reference signal of a first neighboring cell and a sending parameter of a second reference signal of the first neighboring cell.

For acquisition of the sending parameter of the first reference signal of the first neighboring cell and the sending parameter of the second reference signal of the first neighboring cell, they may be configured in the base station 30 when the base station is deployed, and are directly read and acquired by the base station 30, or may be acquired by receiving the sending parameter of the first reference signal of the first neighboring cell and the sending parameter of the second reference signal of the first neighboring cell that are sent by a base station of the first neighboring cell.

The present invention does not specifically limit a manner for acquiring the sending parameter of the first reference signal of the first neighboring cell and the sending parameter of the second reference signal of the first neighboring-cell.

The generation unit 302 is configured to generate auxiliary information according to the sending parameter of the first reference signal of the first neighboring cell and the sending parameter of the second reference signal of the first neighboring cell that are acquired by the acquisition unit 301, where the auxiliary information may include resource information of the second reference signal of the first neighboring cell.

The sending unit 303 is configured to send the auxiliary information generated by the generation unit 302 to UE in a cell to make the UE perform cell discovery.

Optionally, the second reference signal of the first neighboring cell may be an NZP-CSI-RS of the first neighboring cell or a quasi NZP-CSI-RS of the first neighboring cell.

A scrambling code ID for generating the quasi NZP-CSI-RS is different from a scrambling code ID for generating the NZP-CSI-RS.

It should be noted that the present invention does not specifically limit a specific form of the first reference signal.

Optionally, the first reference signal of the first neighboring cell may be a PSS of the first neighboring cell or a quasi PSS of the first neighboring cell.

A root sequence number for generating the quasi PSS is different from a root sequence number for generating the PSS.

It should be noted that the present invention does not specifically limit a specific form of the second reference signal.

Further, the resource information of the second reference signal of the first neighboring cell may include at least one of the following information:

a resource configuration for the second reference signal of the first neighboring cell, a quantity of antenna ports for the second reference signal of the first neighboring cell, or subframe information of the second reference signal of the first neighboring cell.

It should be noted that a specific purpose of information included in the resource information of the second reference signal of the first neighboring cell is described in detail in Embodiment 1, and is not detailed herein again.

Further, the auxiliary information may further include a cell identity ID of the first neighboring cell and a first reference signal ID of the first neighboring cell.

Further, the auxiliary information may further include a second reference signal scrambling code ID of the first neighboring cell.

Further, when the first reference signal of the first neighboring cell is sent in the $P^{th}$ subframe that is before or after the second reference signal of the first neighboring cell, the auxiliary information may further include a subframe offset P between the first reference signal of the first neighboring cell and the second reference signal of the first neighboring cell, where P is greater than or equal to 1.

It should be noted that the subframe offset P between the first reference signal of the first neighboring cell and the second reference signal of the first neighboring cell may be determined according to an actual need, which is not limited in the present invention.

It should be noted that the first neighboring cell is any neighboring cell of the serving base station of the UE. Therefore, in a process of performing cell discovery by the UE, same processing is performed for all neighboring cells. This embodiment of the present invention is described by using only the first neighboring cell as an example, and for another neighboring cell, the same processing method is used, which is not described again.

This embodiment of the present invention provides a base station 30, which sends auxiliary information to make UE perform cell discovery, where the auxiliary information includes resource information of a second reference signal of a first neighboring cell, and the first neighboring cell is any neighboring cell of a serving base station of the UE. Accurate cell discovery is implemented in a scenario in which small cells are densely deployed, resolving a prior-art defect of strong interference for cell discovery in a scenario in which small cells are densely deployed.

**Embodiment 3**

Embodiment 3 of the present invention provides a base station 40. The base station 40 is a base station that corresponds to a first neighboring cell. Referring to FIG. 4, the base station 40 may include:

a sending unit 401, configured to send a first reference signal and a second reference signal that are of the first neighboring cell, where the first reference signal is used for UE to synchronize with the cell, and the second reference signal is used for the UE to perform cell discovery and RRM measurement.

Optionally, the second reference signal of the first neighboring cell may be an NZP-CSI-RS of the first neighboring cell or a quasi NZP-CSI-RS of the first neighboring cell.

A scrambling code ID for generating the quasi NZP-CSI-RS is different from a scrambling code ID for generating the NZP-CSI-RS.

It should be noted that the present invention does not specifically limit a type of second reference signal.

Optionally, the first reference signal of the first neighboring cell may be a PSS of the first neighboring cell or a quasi PSS of the first neighboring cell.

A root sequence number for generating the quasi PSS is different from a root sequence number for generating the PSS.

It should be noted that the present invention does not specifically limit a type of the first reference signal.

Further, referring to FIG. 5A, the base station 40 may further include:

a mapping unit 402, which may be configured to:

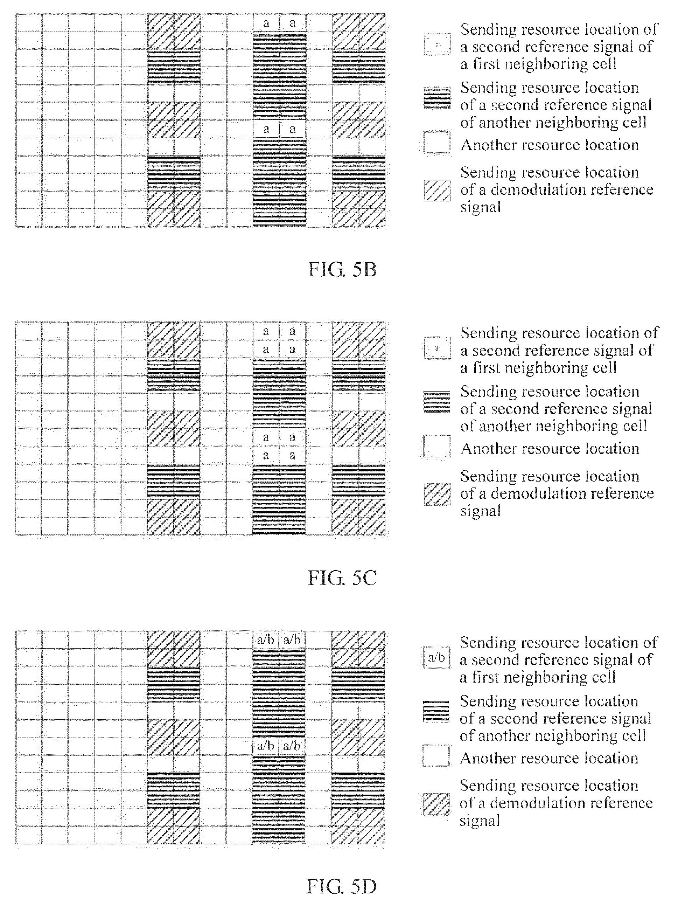

when the second reference signal of the first neighboring cell is transmitted over one antenna port, map the second reference signal of the first neighboring cell onto four resource elements in each resource block, where locations of the four resource elements are the same as those in a resource mapping for a 4-antenner-port CSI-RS in LTE, and referring to FIG. 5B, the second reference signal of the first neighboring cell is transmitted over one antenna port (antenna port a);

or

when the second reference signal of the first neighboring cell is transmitted over one antenna port, map the second reference signal of the first neighboring cell onto eight resource elements in each resource block, where locations of the eight resource elements are the same as those in a resource mapping for an 8-antenna-port CSI-RS in LTE, and referring to FIG. 5C, the second reference signal of the first neighboring cell is transmitted over one antenna port (antenna port a);

or

when the second reference signal of the first neighboring cell is transmitted over two antenna ports, map the second reference signal of the first neighboring cell onto four resource elements in each resource block, where locations of the four resource elements are the same as those in a resource mapping for a 4-antenna-port CSI-RS in LTE, and referring to FIG. 5D, the second reference signal of the first neighboring cell is transmitted over two antenna ports (antenna port a and antenna port b);

or

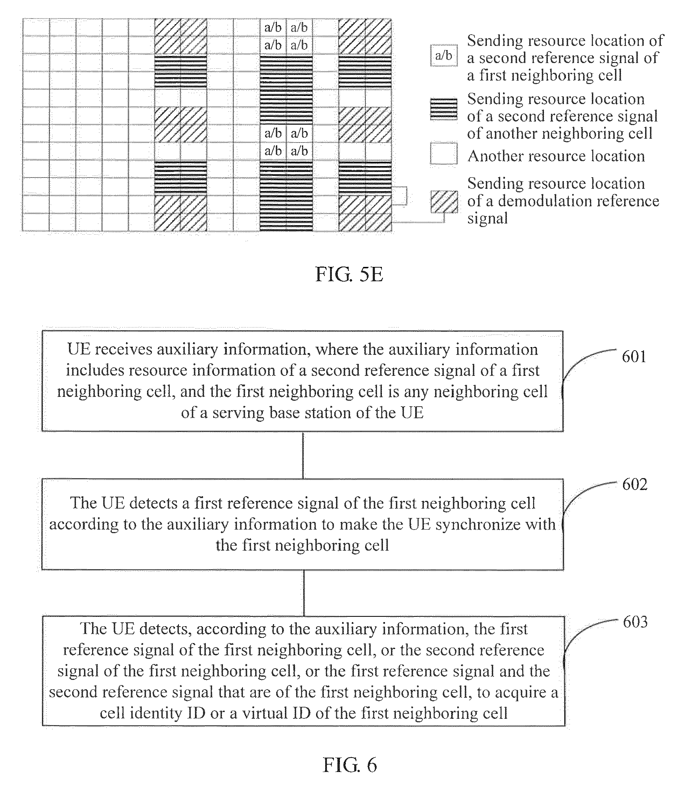

when the second reference signal of the first neighboring cell is transmitted over two antenna ports, map the second reference signal of the first neighboring cell onto eight resource elements in each resource block, where locations of the eight resource elements are the same as those in a resource mapping for an 8-antenna-port CSI-RS in LTE, and referring to FIG. 5E, the second reference signal of the first neighboring cell is transmitted over two antenna ports (antenna port a and antenna port b).

Further, a sequence length of the second reference signal of the first neighboring cell is Q times a quantity of resource blocks included in a maximum system bandwidth, where Q is a positive integer greater than 1.

Further, referring to FIG. 5A, the base station 40 may further include:

a determining unit 403, configured to determine a sending resource location of the second reference signal of the first neighboring cell according to a cell ID of the first neighboring cell and a quantity of configured resources of the first neighboring cell.

Optionally, the determining unit 403 may specifically use any one of the following methods to determine the sending resource location of the second reference signal of the first neighboring cell according to the cell ID of the first neighboring cell and the quantity of configured resources of the first neighboring cell.

First method: Calculate the sending resource location of the second reference signal of the first neighboring cell according to a primary synchronization signal PSS ID of the first neighboring cell.

Second method: Calculate the sending resource location of the second reference signal of the first neighboring cell according to a secondary synchronization signal SSS ID of the first neighboring cell.

Third method: Determine a sending resource set of the second reference signal of the first neighboring cell according to a PSS ID of the first neighboring cell, and determine the sending resource location, in the sending resource set, of the second reference signal of the first neighboring cell according to an SSS ID of the first neighboring cell, where the configured resources of the first neighboring cell are S resource sets, with each resource set including T resources.

Further, the sending unit 401 may be further configured to:

send the first reference signal of the first neighboring cell and the second reference signal of the first neighboring cell in one subframe;
or
send the first reference signal of the first neighboring cell in the Nth subframe 0 or subframe 5 that is before or after the second reference signal of the first neighboring cell, where N is greater than or equal to 1;
or
send the first reference signal of the first neighboring cell in the Pth subframe that is before or after the second reference signal of the first neighboring cell, where P is greater than or equal to 1.

Further, the sending unit 401 may be further configured to send a sending parameter of the first reference signal of the first neighboring cell and a sending parameter of the second reference signal of the first neighboring cell to all neighboring cells of the first neighboring cell to make UEs in all the neighboring cells of the first neighboring cell perform cell discovery.

Further, when the base station that corresponds to the first neighboring cell is in an off state, the sending unit may be further configured to send the first reference signal and the second reference signal that are of the first neighboring cell periodically according to a preset interval.

This embodiment of the present invention provides a base station 40, which sends a first reference signal and a second reference signal that arc of a first neighboring cell to make UE perform cell discovery, where the first reference signal is used for the UE to synchronize with the cell, and the second reference signal is used for the UE to perform cell discovery and RRM measurement. Accurate cell discovery is implemented in a scenario in which small cells are densely deployed, resolving a prior-art defect of strong interference for cell discovery in a scenario in which small cells are densely deployed.

**Embodiment 4**

Embodiment 4 of the present invention provides a cell discovery method. Referring to FIG. 6, the method may include:

601: UE receives auxiliary information, where the auxiliary information includes resource information of a second reference signal of a first neighboring cell, and the first neighboring cell is any neighboring cell of a serving base station of the UE.

The second reference signal of the first neighboring cell is an NZP-CSI-RS of the first neighboring cell or a quasi NZP-CSI-RS of the first neighboring cell, and a scrambling code ID for generating the quasi NZP-CSI-RS is different from a scrambling code ID for generating the NZP-CSI-RS.

It should be noted that the quasi NZP-CSI-RS and the NZP-CSI-RS have been described in Embodiment 1 in detail, and are not detailed herein again.

The resource information of the second reference signal of the first neighboring cell may include at least one of the following information:

a resource configuration for the second reference signal of the first neighboring cell;
a quantity of antenna ports for the second reference signal of the first neighboring cell; or
subframe information of the second reference signal of the first neighboring cell.

The resource configuration for the second reference signal of the first neighboring cell refers to a location of a resource, of communications system resources, used to send the second reference signal of the first neighboring cell. In LTE, a time-frequency resource lasting one slot in time and including 12 subcarriers in frequency is called a resource block; a time-frequency resource lasting one OFDM symbol in time and including one subcarrier in frequency is called an RE. In an LTE protocol, an RE is a minimum time-frequency unit. The resource configuration for the second reference signal of the first neighboring cell is used to indicate in which REs of the communications system resources the second reference signal of the first neighboring cell is sent. The UE may know, according to the resource configuration for the second reference signal of the first neighboring cell, on which UE the second reference signal of the first neighboring cell is to be detected.

The quantity of antenna ports for the second reference signal of the first neighboring cell is used to indicate a quantity of antenna ports, in the first neighboring cell, used to send the second reference signal. In a communications system, the quantity of antenna ports for the second reference signal may be configured. A base station may send the second reference signal on one antenna port or may send the second reference signal on multiple antenna ports. In an LTE protocol, the quantity of antenna ports for the second reference signal may be configured to any one of 1, 2, 4, or 8. The UE may correctly detect the second reference signal of the first neighboring cell according to the quantity of antenna ports and a serial number of a resource for the second reference signal of the first neighboring cell.

The subframe information of the second reference signal of the first neighboring cell is a sending interval and a sending subframe location of the second reference signal of the first neighboring cell. Because the second reference signal is periodically sent by the base station, the sending interval may be configured. The UE may correctly detect the second reference signal of the first neighboring cell by using the subframe information.

602: The UE detects a first reference signal of the first neighboring cell according to the auxiliary information to make the UE synchronize with the first neighboring cell.

The first reference signal of the first neighboring cell may be a PSS of the neighboring cell or a quasi PSS of the first neighboring cell, and a root sequence number for generating the quasi PSS is different from a root sequence number for generating the PSS.

It should be noted that the quasi PSS and the PSS have been described in Embodiment 1 in detail, and are not detailed herein again.

Further, according to different content included in the auxiliary information, in step 602, the following two manners may be used to make the UE synchronize with the first neighboring cell:

First manner: When the auxiliary information does not include a first reference signal ID of the first neighboring cell,

detect and acquire a first reference signal sequence of the first neighboring cell according to the auxiliary information; and perform a correlation operation between the detected first reference signal sequence of the first neighboring cell and each local protocol-specified first reference signal sequence to acquire multiple correlation values, where

the UE is synchronized with the first neighboring cell if there exists a first correlation value greater than a preset threshold, where the first correlation value is any one of the multiple correlation values acquired by the performing a correlation operation between the detected first reference signal sequence of the first neighboring cell and each local protocol-specified first reference signal sequence.

Second manner: When the auxiliary information includes a first reference signal ID of the first neighboring cell, detect and acquire a first reference signal sequence of the first neighboring cell according to the auxiliary information, generate a local first reference signal sequence of the first neighboring cell according to the first reference signal ID of the first neighboring cell, and

perform a correlation operation between the detected first reference signal sequence of the first neighboring cell and the local first reference signal sequence of the first neighboring cell to acquire a third correlation value, where the UE is synchronized with the first neighboring cell if the third correlation value is greater than a preset threshold.

It should be noted that, in a process of synchronizing the UE with the first neighboring cell, whether the UE is synchronized with the first neighboring cell is determined by comparing the acquired correlation value with a preset threshold, where the preset threshold is determined according to an actual need, and specific data of the preset threshold is not specifically limited in the present invention.

It should be noted that the UE may proceed to discover and measure the first neighboring cell only after the UE is synchronized with the first neighboring cell. If the UE is not synchronized with the first neighboring cell, the UE does not discover or measure the first neighboring cell.

Further, the first reference signal and the second reference signal are quasi co-sited.

603: The UE detects, according to the auxiliary information, the first reference signal of the first neighboring cell, or the second reference signal of the first neighboring cell, or the first reference signal and the second reference signal that are of the first neighboring cell, to acquire a cell ID or a virtual ID of the first neighboring cell.

There exists an agreed correspondence among the cell ID of the first neighboring cell, the first reference signal ID of the first neighboring cell, and a second reference signal scrambling code ID of the first neighboring cell. Therefore, when the first reference signal ID of the first neighboring cell and/or the second reference signal scrambling code ID of the first neighboring cell are/is acquired, the cell ID of the first neighboring cell may be obtained.

The virtual ID of the first neighboring cell is an ID that has a determined correspondence with the cell ID of the first neighboring cell, and the cell ID of the first neighboring cell may also be indicated by acquiring the virtual ID.

For example, cell IDs of a first neighboring cell and a second neighboring cell of a serving base station are respectively X1 and X2, and virtual IDs of the first neighboring cell and the second neighboring cell are respectively Y1 and Y2. Certainly, the cell ID and the virtual ID may be the same or may be different. The virtual ID may be used to generate a first reference signal and a second reference signal. The serving base station learns a correspondence between the cell ID and the virtual ID of the first neighboring cell and a correspondence between the cell ID and the virtual ID of the second neighboring cell. Therefore, the UE acquires a virtual ID after detecting the first reference signal or the second reference signal, and may also acquire the actual cell ID of the first neighboring cell according to the correspondence between the cell ID and the virtual ID.

The UE acquires the cell identity ID or the virtual ID of the first neighboring cell according to the auxiliary information by using any one of the following three manners:

First manner:

Acquire an actual sending resource location of the first reference signal of the first neighboring cell according to the resource information of the second reference signal of the first neighboring cell.

Detect a signal sent at the actual sending resource location of the first reference signal of the first neighboring cell to acquire the first reference signal ID of the first neighboring cell.

Acquire the virtual ID of the first neighboring cell according to the first reference signal ID of the first neighboring cell, or acquire the cell ID of the first neighboring cell according to the correspondence between the first reference signal ID of the first neighboring cell and the cell ID of the first neighboring cell.

Second manner:

Acquire an actual sending resource location of the second reference signal of the first neighboring cell according to the resource information of the second reference signal of the first neighboring cell.

Detect a signal sent at the actual sending resource location of the second reference signal of the first neighboring cell to acquire the second reference signal scrambling code ID of the first neighboring cell.

Acquire the virtual ID of the first neighboring cell according to the second reference signal scrambling code ID of the first neighboring cell, or acquire the cell ID of the first neighboring cell according to the correspondence between the second reference signal scrambling code ID of the first neighboring cell and the cell ID of the first neighboring cell.

Third manner:

Acquire actual sending resource locations of the first reference signal and the second reference signal that are of the first neighboring cell according to the resource information of the second reference signal of the first neighboring cell.

Detect a signal sent at the actual sending resource location of the first reference signal of the first neighboring cell to acquire the first reference signal ID of the first neighboring cell.

Detect a signal sent at the actual sending resource location of the second reference signal of the first neighboring cell to acquire the second reference signal scrambling code ID of the first neighboring cell.

Acquire the cell ID of the first neighboring cell according to the correspondence among the second reference signal scrambling code ID of the first neighboring cell, the first reference signal ID of the first neighboring cell, and the cell ID.

The first reference signal of the first neighboring cell corresponds to the first reference signal of the first neighboring cell. Therefore, the first reference signal of the first neighboring cell may be acquired according to the first reference signal of the first neighboring cell.

Further, the detecting and acquiring, at the actual sending resource location of the first reference signal of the first neighboring cell, the first reference signal of the first neighboring cell to acquire the first reference signal ID of the first neighboring cell may specifically include:

detecting and acquiring, at the actual sending resource location of the first reference signal of the first neighboring cell, a first reference signal sequence of the first neighboring cell; and

performing a correlation operation between the detected first reference signal sequence of the first neighboring cell and each local protocol-specified first reference signal sequence to acquire the first reference signal ID of the first neighboring cell.

The following uses an LTE system as an example to describe a correspondence between the first reference signal of the first neighboring cell and the first reference signal ID of the first neighboring cell.

For example, in the LTE system, an example in which the first reference signal is a PSS is used to describe generating and a correspondence of the first reference signal.

A PSS sequence generating formula is the formula 3 in Embodiment 1.

In an LTE system, there are multiple definite root sequence numbers for generating a PSS sequence. The multiple root sequence numbers are specified in a form of a correspondence with the PSS ID. Generally, a tabular form may be used. Refer to Table 1. Certainly, the multiple root sequence numbers may also be defined in another form, which is not limited in the present invention.

**Table 1**

| PSS ID | Root sequence number |
|--------|---------------------|
| 0 | 25 |
| 1 | 29 |
| 2 | 34 |

It may be known, according to the formula 1 and Table 1, that multiple local protocol-specified first reference signals may be generated according to the first reference signal generating formula and multiple protocol-specified root sequence numbers, and the first reference signal ID of the first neighboring cell may be acquired according to the first reference signal sequence of the first neighboring cell and the first reference signal generating formula.

When a correlation operation is performed between the detected first reference signal sequence of the first neighboring cell and a local protocol-specified first reference signal sequence the same as a first reference signal sequence actually used by the first neighboring cell, a correlation peak is obtained, and then the first reference signal sequence actually used by the first neighboring cell may be determined. A root sequence number used for generating the sequence may be calculated according to the first reference signal sequence actually used by the first neighboring cell, and the first reference signal ID of the first neighboring cell may be obtained by querying a root sequence number and first reference signal correspondence table according to the root sequence number.

Optionally, if the auxiliary information includes the first reference signal ID of the first neighboring cell, the first reference signal ID of the first neighboring cell may be directly acquired according to the auxiliary information.

The second reference signal of the first neighboring cell is generated based on the second reference signal scrambling code ID of the first neighboring cell. Therefore, the second reference signal scrambling code ID of the first neighboring cell may be acquired according to the second reference signal of the first neighboring cell.

Further, detecting and acquiring, at the actual sending resource location of the second reference signal of the first neighboring cell, the second reference signal of the first neighboring cell to acquire the second reference signal scrambling code ID of the first neighboring cell may specifically include:

detecting and acquiring, at the actual sending resource location of the second reference signal of the first neighboring cell, a second reference signal sequence of the first neighboring cell;
generating M local second reference signal sequences according to protocol-specified M second reference signal scrambling code identities IDs; and
performing a correlation operation between the detected second reference signal sequence of the first neighboring cell and each of the M local second reference signal sequences to acquire the second reference signal scrambling code ID of the first neighboring cell.

When a correlation operation is performed between the detected second reference signal sequence of the first neighboring cell and a local protocol-specified first reference signal sequence the same as a second reference signal sequence actually used by the first neighboring cell, a correlation peak is obtained, and then the second reference signal sequence actually used by the first neighboring cell may be determined. The second reference signal scrambling code ID of the first neighboring cell may be calculated according to the second reference signal sequence actually used by the first neighboring cell.

Optionally, if the auxiliary information includes the second reference signal scrambling code ID of the first neighboring cell, the second reference signal scrambling code ID of the first neighboring cell may be directly acquired according to the auxiliary information.

The following uses an LTE system as an example to describe a correspondence between the second reference signal of the first neighboring cell and the second reference signal scrambling code ID of the first neighboring cell.

For example, in the LTE system, an NZP-CSI-RS is used as an example of the second reference signal, and an NZP-CSI-RS sequence is generated based on the formula 1 and the formula 2 in Embodiment 1.

It may be known from the formula 2 and the formula 3 that there exists a calculation correspondence between the second reference signal sequence of the first neighboring cell and the second reference signal scrambling code ID of the first neighboring cell, and one of them may be calculated and acquired according to the other.

It should be noted that this embodiment of the present invention uses only the LTE system as an example for description. A specific correspondence between the second reference signal sequence of the first neighboring cell and the second reference signal scrambling code ID of the first neighboring cell may be determined according to an actual need, which is not specifically limited in the present invention.

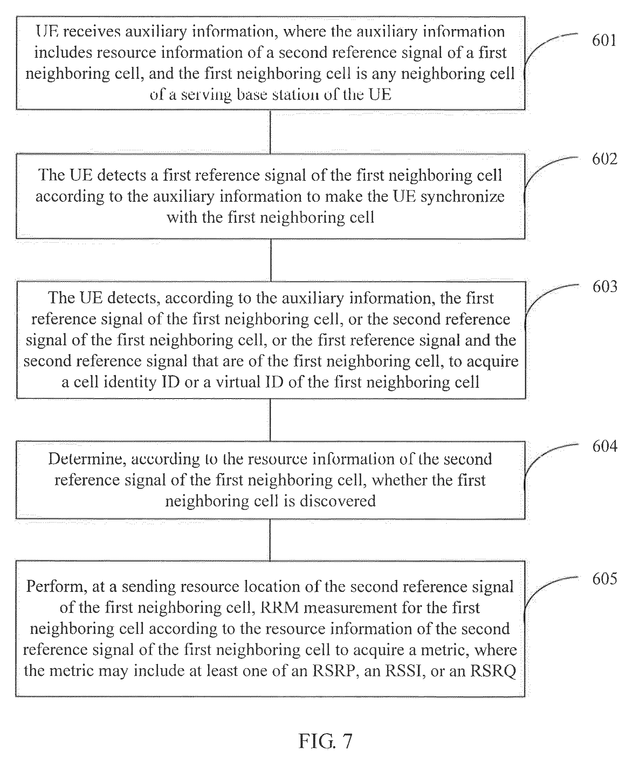

Further, referring to FIG. 7, the method may further include:

604: Determine, according to the resource information of the second reference signal of the first neighboring cell, whether the first neighboring cell is discovered.

According to different content included in the auxiliary information, whether the first neighboring cell is discovered in step 604 is determined by using the following two manners:

First manner: When the auxiliary information does not include a second reference signal scrambling code ID of the first neighboring cell,

acquire an actual sending resource location of the second reference signal of the first neighboring cell according to the resource information of the second reference signal of the first neighboring cell;
detect and acquire, at the actual sending resource location of the second reference signal of the first neighboring cell, a second reference signal sequence of the first neighboring cell;
generate M local second reference signal sequences according to protocol-specified M second reference signal scrambling code IDs; and
perform a correlation operation between the detected second reference signal sequence of the first neighboring cell and each of the M local second reference signal sequences to acquire M correlation values, where
the first neighboring cell is discovered if there exists a second correlation value greater than a preset discovery condition, where the second correlation value is any one of the M correlation values acquired by the performing a correlation operation between the detected second reference signal of the first neighboring cell and each of the M local second reference signal sequences.

Second manner: When the auxiliary information includes a second reference signal scrambling code ID of the first neighboring cell,

acquire an actual sending resource location of the second reference signal of the first neighboring cell according to the resource information of the second reference signal of the first neighboring cell;

detect and acquire, at the actual sending resource location of the second reference signal of the first neighboring cell, a second reference signal sequence of the first neighboring cell;

generate a local second reference signal sequence of the first neighboring cell according to the second reference signal scrambling code ID of the first neighboring cell; and

perform a correlation operation between the detected second reference signal of the first neighboring cell and the local second reference signal sequence of the first neighboring cell to acquire a fourth correlation value, where

the first neighboring cell is discovered if the fourth correlation value is greater than a preset discovery condition.

The preset discovery condition is a threshold used to determine a signal strength of the first neighboring cell. If the correlation value between the detected and acquired second reference signal sequence of the first neighboring cell and any local protocol-specified second reference signal sequence is greater than the preset discovery condition, it is indicated that the signal strength of the first neighboring cell is enough and the first neighboring cell is discovered. If correlation values between the detected and acquired second reference signal sequence of the first neighboring cell and all local protocol-specified second reference signal sequences are less than the preset discovery condition, it is indicated that the signal strength of the first neighboring cell is not enough and the first neighboring cell is not discovered.

It should be noted that the preset discovery condition may be determined according to an actual need, which is not specifically limited in the present invention.

It should be noted that, acquiring the cell ID or the virtual ID of the first neighboring cell in step 603 may be performed after the UE is synchronized with the first neighboring cell in step 602, or after the UE is synchronized with the first neighboring cell and after it is determined in step 604 that the first neighboring cell is discovered, which is not specifically limited in the present invention.

Further, the auxiliary information may further include the cell ID of the first neighboring cell and a first reference signal ID of the first neighboring cell.

Further, there exists a correspondence between sending resource locations of the first reference signal and the second reference signal that are of the first neighboring cell. According to different correspondences between the sending resource locations of the first reference signal and the second reference signal that are of the first neighboring cell, the UE detects the first reference signal of the first neighboring cell according to the auxiliary information, which may include the following three cases:

First case: If the first reference signal of the first neighboring cell and the second reference signal of the first neighboring cell are sent in one subframe, the UE detects the first reference signal of the first neighboring cell in a subframe indicated in the resource information of the second reference signal of the first neighboring cell.

Second case: If the first reference signal of the first neighboring cell is sent in the $N^{th}$ subframe 0 or subframe 5 that is before or after the second reference signal of the first neighboring cell, the UE detects the first reference signal of the first neighboring cell in a subframe 0 or a subframe 5 that is before or after a subframe indicated in the resource information of the second reference signal of the first neighboring cell, where N is greater than or equal to 1.

N may be determined according to an actual situation, which is not specifically limited in the present invention.

Third case: If the first reference signal of the first neighboring cell is sent in the $P^{th}$ subframe that is before or after the second reference signal of the first neighboring cell, the auxiliary information further includes a subframe offset P between the first reference signal of the first neighboring cell and the second reference signal of the first neighboring cell, and the UE detects the first reference signal of the first neighboring cell in the $P^{th}$ subframe that is before or after a subframe indicated in the resource information of the second reference signal of the first neighboring cell, where P is greater than or equal to 1, where P is greater than or equal to 1.

The subframe offset P between the first reference signal of the first neighboring cell and the second reference signal of the first neighboring cell may be determined according to an actual situation, which is not specifically limited in the present invention.

Further, referring to FIG. 7, the method may further include:

605: Perform, at a sending resource location of the second reference signal of the first neighboring cell, RRM measurement for the first neighboring cell according to the resource information of the second reference signal of the first neighboring cell to acquire a metric, where the metric may include at least one of an RSRP, an RSSI, or an RSRQ.

Further, the auxiliary information may further include resource information of measured resource 1 of the first neighboring cell, where the resource information of the measured resource 1 of the first neighboring cell may include at least one of the following information:

a resource configuration for the measured resource 1 of the first neighboring cell, a quantity of antenna ports for the measured resource 1 of the first neighboring cell, or subframe information of the measured resource 1 of the first neighboring cell.

The resource configuration for the measured resource 1 of the first neighboring cell refers to a location of a resource, of communications system resources, used to send the measured resource 1 of the first neighboring cell. In LTE, a time-frequency resource lasting one slot in time and including 12 subcarriers in frequency is called a resource block; a time-frequency resource lasting one OFDM symbol in time and including one subcarrier in frequency is called an RE. In an LTE protocol, an RE is a minimum time-frequency unit. The resource configuration for the second reference signal of the first neighboring cell is used to indicate in which REs of the communications system resources the second reference signal of the first neighboring cell is sent. The UE may know, according to the resource configuration for the measured resource 1 of the first neighboring cell, on which UE the measured resource 1 of the first neighboring cell is to be detected.

The quantity of antenna ports for the measured resource 1 of the first neighboring cell is used to indicate a quantity of antenna ports used to send the measured resource 1 in the first neighboring cell. In a communications system, a quantity of antenna ports for the measured resource 1 may be configured. The base station may send the measured resource 1 on one antenna port or may send the measured resource 1 on multiple antenna ports. The UE may correctly detect the measured resource 1 of the first neighboring cell according to the quantity of antenna ports for and a resource serial number of the measured resource 1 of the first neighboring cell.

The subframe information of the measured resource 1 of the first neighboring cell is a sending interval and a sending subframe location of the measured resource 1 of the first neighboring cell. Because the measured resource 1 is periodically sent by the base station, the sending interval may be configured. The UE may correctly detect the measured resource 1 of the first neighboring cell by using the subframe information.

Preferentially, the measured resource 1 of the first neighboring cell is a ZP-CSI-RS of the first neighboring cell.

Further, when the auxiliary information further includes the resource information of the measured resource 1 of the first neighboring cell, step 604 may specifically include:

perform, at the sending resource location of the second reference signal of the first neighboring cell, RRM measurement for the first neighboring cell according to the resource information of the second reference signal of the first neighboring cell to acquire the metric RSRP;

perform, at a sending resource location of the measured resource 1 of the first neighboring cell, radio resource management RRM measurement for the first neighboring cell according to the resource information of the measured resource 1 of the first neighboring cell to acquire the metric RSSI; and

acquire the RSRQ according to the RSRP and the RSSI.

It should be noted that the first neighboring cell is any neighboring cell of the serving base station of the UE. Therefore, in a process of performing cell discovery by the UE, same processing is performed for all neighboring cells. This embodiment of the present invention is described by using only the first neighboring cell as an example, and for another neighboring cell, the same processing method is used, which is not described again.

This embodiment of the present invention provides a cell discovery method, where UE receives auxiliary information, where the auxiliary information includes resource information of a second reference signal of a first neighboring cell, and the first neighboring cell is any neighboring cell of a serving base station of the UE; the UE detects a first reference signal of the first neighboring cell according to the auxiliary information to make the UE synchronize with the first neighboring cell; and the UE detects, according to the auxiliary information, the first reference signal of the first neighboring cell, or the second reference signal of the first neighboring cell, or the first reference signal and the second reference signal that are of the first neighboring cell, to acquire a cell identity ID or a virtual ID of the first neighboring cell. Accurate cell discovery is implemented in a scenario in which small cells are densely deployed, resolving a prior-art defect of strong interference for cell discovery in a scenario in which small cells are densely deployed.

**Embodiment 5**

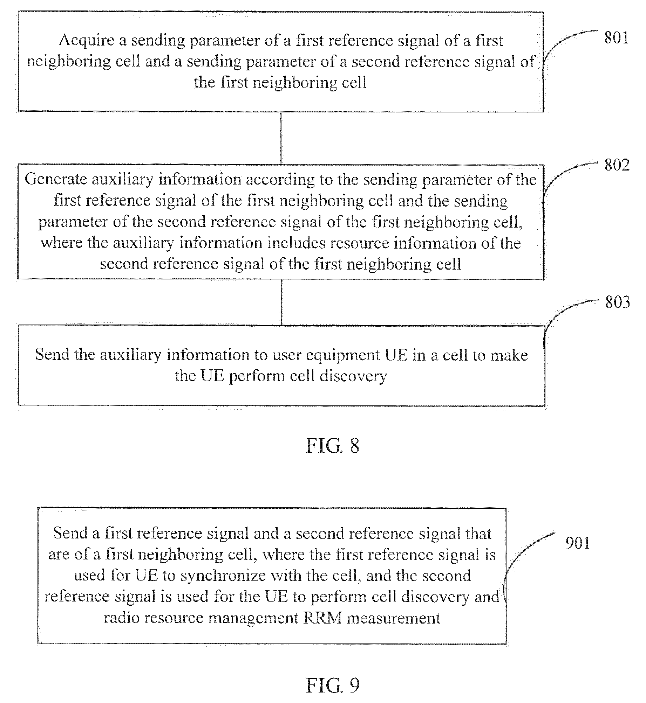

Embodiment 5 of the present invention provides a cell discovery method. Referring to FIG. 8, the method may include:

801: Acquire a sending parameter of a first reference signal of a first neighboring cell and a sending parameter of a second reference signal of the first neighboring cell.

The second reference signal of the first neighboring cell may be an NZP-CSI-RS of the first neighboring cell or a quasi NZP-CSI-RS of the first neighboring cell, and a scrambling code ID for generating the quasi NZP-CSI-RS is different from a scrambling code ID for generating the NZP-CSI-RS.

The first reference signal of the first neighboring cell is a PSS of the first neighboring cell or a quasi PSS of the first neighboring cell, and a root sequence number for generating the quasi PSS is different from a root sequence number for generating the PSS.

It should be noted that, for acquisition of the sending parameter of the first reference signal of the first neighboring cell and the sending parameter of the second reference signal of the first neighboring cell, they may be directly read and acquired if having been configured in a base station, or be acquired by receiving if the sending parameter of the first reference signal of the first neighboring cell and the sending parameter of the second reference signal of the first neighboring cell are sent by a base station that corresponds to the first neighboring cell. The present invention does not specifically limit how the sending parameter of the first reference signal of the first neighboring cell and the sending parameter of the second reference signal of the first neighboring cell are acquired.

The sending parameter of the first reference signal of the first neighboring cell may include a first reference signal ID of the first neighboring cell. Certainly, another sending parameter may also be included, as specifically determined according to an actual need, which is not specifically limited in the present invention.

The sending parameter of the second reference signal of the first neighboring cell may include at least one of the following information: a resource configuration for the second reference signal of the first neighboring cell, a quantity of antenna ports for the second reference signal of the first neighboring cell, or subframe information of the second reference signal of the first neighboring cell. Certainly, another sending parameter may be included, such as a second reference signal scrambling code ID of the first neighboring cell. The sending parameter of the second reference signal of the first neighboring cell may be specifically determined according to an actual need, which is not specifically limited in the present invention.

802: Generate auxiliary information according to the sending parameter of the first reference signal of the first neighboring cell and the sending parameter of the second reference signal of the first neighboring cell, where the auxiliary information includes resource information of the second reference signal of the first neighboring cell.

The resource information of the second reference signal of the first neighboring cell includes at least one of the following information:

a resource configuration for the second reference signal of the first neighboring cell, a quantity of antenna ports for the second reference signal of the first neighboring cell, or subframe information of the second reference signal of the first neighboring cell.

Further, the auxiliary information may further include a cell identity ID of the first neighboring cell and a first reference signal ID of the first neighboring cell.

Further, the auxiliary information may further include a second reference signal scrambling code ID of the first neighboring cell.

Further, when the first reference signal of the first neighboring cell is sent in the $P^{th}$ subframe that is before or after the second reference signal of the first neighboring cell, the auxiliary information may further include a subframe offset P between the first reference signal of the first neighboring cell and the second reference signal of the first neighboring cell, where P is greater than or equal to 1.

It should be noted that the subframe offset P between the first reference signal of the first neighboring cell and the second reference signal of the first neighboring cell may be determined according to an actual need, which is not limited in the present invention.

803: Send the auxiliary information to user equipment UE in a cell to make the UE perform cell discovery.

This embodiment of the present invention provides a cell discovery method, where auxiliary information is sent to make UE perform cell discovery, where the auxiliary information includes resource information of a second reference signal of a first neighboring cell, and the first neighboring cell is any neighboring cell of a serving base station of the UE. Accurate cell discovery is implemented in a scenario in which small cells are densely deployed, resolving a prior-art defect of strong interference for cell discovery in a scenario in which small cells are densely deployed.

**Embodiment 6**

Embodiment 6 of the present invention provides a cell discovery method. Referring to FIG. 9, the method may include:

901: Send a first reference signal and a second reference signal that are of a first neighboring cell, where the first reference signal is used for UE to synchronize with the cell, and the second reference signal is used for the UE to perform cell discovery and radio resource management RRM measurement.

Optionally, the second reference signal of the first neighboring cell may be an NZP-CSI-RS of the first neighboring cell or a quasi NZP-CSI-RS of the first neighboring cell.

A scrambling code ID for generating the quasi NZP-CSI-RS is different from a scrambling code ID for generating the NZP-CSI-RS.

Optionally, the first reference signal of the first neighboring cell may be a PSS of the first neighboring cell or a quasi PSS of the first neighboring cell.

A root sequence number for generating the quasi PSS is different from a root sequence number for generating the PSS.

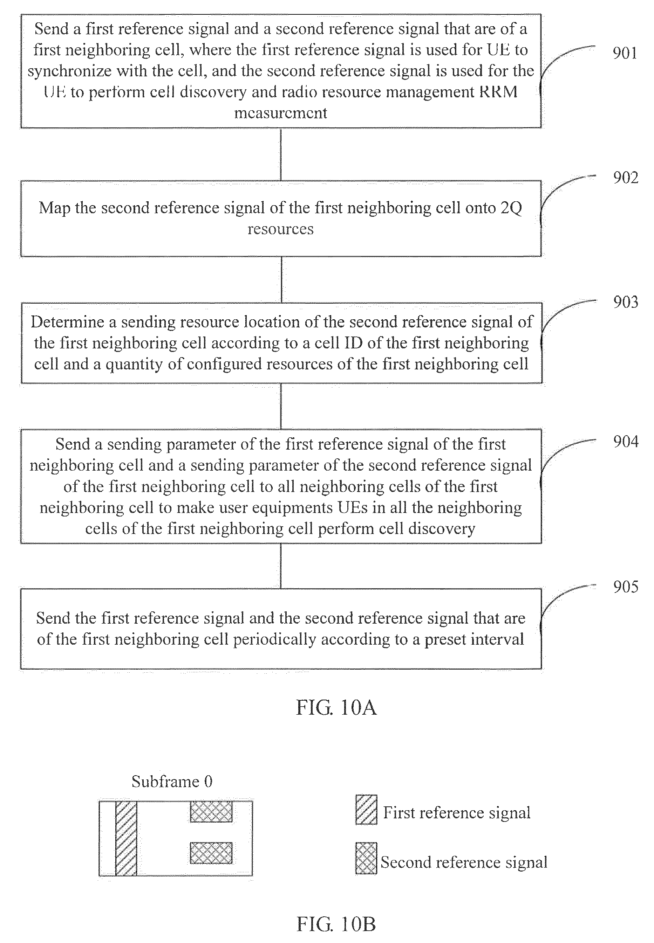

Further, referring to FIG. 10A, the method may further include:

902: Map the second reference signal of the first neighboring cell onto a resource.

Specifically, the mapping the second reference signal of the first neighboring cell onto a resource may include:

when the second reference signal of the first neighboring cell is transmitted over one antenna port, mapping the second reference signal of the first neighboring cell onto four resources in each resource block; or
when the second reference signal of the first neighboring cell is transmitted over one antenna port, mapping the second reference signal of the first neighboring cell onto eight resource elements in each resource block; or
when the second reference signal of the first neighboring cell is transmitted over two antenna ports, mapping the second reference signal of the first neighboring cell onto four resource elements in each resource block; or
when the second reference signal of the first neighboring cell is transmitted over two antenna ports, mapping the second reference signal of the first neighboring cell onto eight resource elements in each resource block.

Optionally, a sequence length of the second reference signal of the first neighboring cell is Q times a quantity of resource blocks included in a maximum system bandwidth, where Q is a positive integer greater than 1.

It may be known from the formula 2 that, the sequence length of the second reference signal of the first neighboring cell depends on the quantity of resource blocks included in the maximum system bandwidth, $N_{\mathrm{RB}}^{\mathrm{max,DL}}$. If the second reference signal of the first neighboring cell is mapped onto 2Q resources, the sequence length of the second reference signal of the first neighboring cell is Q times the quantity of resource blocks included in the maximum system bandwidth.

Further, before sending the first reference signal and the second reference signal that are of the first neighboring cell, referring to FIG. 10A, the method may further include:

903: Determine a sending resource location of the second reference signal of the first neighboring cell according to a cell ID of the first neighboring cell and a quantity of configured resources of the first neighboring cell.

Optionally, the sending resource location of the second reference signal of the first neighboring cell may be determined according to the cell ID of the first neighboring cell and the quantity of configured resources of the first neighboring cell by using any one of the following three manners:

First manner:

Calculate the sending resource location of the second reference signal of the first neighboring cell according to a PSS ID of the first neighboring cell.

For the first neighboring cell, the PSS ID of the first neighboring cell is known, and the sending resource location of the second reference signal of the first neighboring cell may be calculated according to the PSS ID of the first neighboring cell.

Preferentially, a modulo operation is performed on the quantity of configured resources of the first neighboring cell according to the PSS ID of the first neighboring cell to determine the sending resource location of the second reference signal of the first neighboring cell.

Certainly, another operation may be performed on the quantity of configured resources of the first neighboring cell according to the PSS ID of the first neighboring cell to determine the sending resource location of the second reference signal of the first neighboring cell. Selection of a specific calculation manner may be determined according to an actual need, which is not specifically limited in the present invention.

For example, a neighboring cell with a cell ID of 93 is used as an example of the first neighboring cell, and three resources are configured for the first neighboring cell.

Split the cell ID ($N_{ID}^{CELL}$) according to a formula $N_{ID}^{CELL} = 3N_{ID}^{(1)} + N_{ID}^{(2)}$ to acquire the PSS ID ($N_{ID}^{(2)}$) of the first neighboring cell. $N_{ID}^{(2)} = 0$ may be obtained through calculation.

Perform a modulo operation on the quantity of configured resources of the first neighboring cell according to $N_{ID}^{(2)} = 0$, that is, $\mathrm{mod}\ (N_{ID}^{(2)}, 3) = \mathrm{mod}\ (0, 3) = 0$ where mod is a modulo operator.

Therefore, the second reference signal of the first neighboring cell with the cell ID of 93 may be sent on a resource 0.

Second manner:

Calculate the sending resource location of the second reference signal of the first neighboring cell according to an SSS ID of the first neighboring cell.

For the first neighboring cell, the SSS ID of the first neighboring cell is known, and the sending resource location of the second reference signal of the first neighboring cell may be calculated according to the SSS ID of the first neighboring cell.

Preferentially, a modulo operation is performed on the quantity of configured resources of the first neighboring cell according to the SSS ID of the first neighboring cell to determine the sending resource location of the second reference signal of the first neighboring cell.

Certainly, another operation may be performed on the quantity of configured resources of the first neighboring cell according to the SSS ID of the first neighboring cell to determine the sending resource location of the second reference signal of the first neighboring cell. Selection of a specific calculation manner may be determined according to an actual need, which is not specifically limited in the present invention.

For example, a neighboring cell with a cell ID of 93 is used as an example of the first neighboring cell, and eight resources are configured for the first neighboring cell.

Split the cell ID ($N_{ID}^{CELL}$) according to a formula $N_{ID}^{CELL} = 3N_{ID}^{(1)} + N_{ID}^{(2)}$ to acquire the SSS ID ($N_{ID}^{(1)}$) of the first neighboring cell. $N_{ID}^{(1)} = 31$ may be obtained through calculation.

Perform a modulo operation on the quantity of configured resources of the first neighboring cell according to $N_{ID}^{(1)} = 31$, that is, $\mathrm{mod}\ (N_{ID}^{(1)}, 8) = \mathrm{mod}\ (31, 8) = 7$.

Therefore, the second reference signal of the first neighboring cell with the cell ID of 93 may be sent on a resource 7.

Third manner:

Determine a sending resource set of the second reference signal of the first neighboring cell according to a PSS ID of the first neighboring cell, and determine the sending resource location, in the sending resource set, of the second reference signal of the first neighboring cell according to an SSS ID of the first neighboring cell, where the configured resources of the first neighboring cell are S resource sets, with each resource set including T resources.

For the first neighboring cell, the PSS ID and the SSS ID of the first neighboring cell are known, and the sending resource location of the second reference signal of the first neighboring cell may be calculated according to the PSS ID and the SSS ID of the first neighboring cell.

Preferentially, a modulo operation is performed on the quantity of configured resource sets of the first neighboring cell according to the PSS ID of the first neighboring cell to determine the sending resource set of the second reference signal of the first neighboring cell; and a modulo operation is performed, according to the SSS ID of the first neighboring cell, on the quantity of resources included in the configured resource sets of the first neighboring cell to determine the sending resource location in the sending resource set of the second reference signal of the first neighboring cell.

Certainly, another operation may be performed on the quantity of configured resource sets of the first neighboring cell according to the SSS ID of the first neighboring cell to determine the sending resource set of the second reference signal of the first neighboring cell; and another operation may be performed, according to the SSS ID of the first neighboring cell, on the quantity of resources included in the configured resource sets of the first neighboring cell to determine the sending resource location in the sending resource set of the second reference signal of the first neighboring cell. Selection of a specific calculation manner may be determined according to an actual need, which is not specifically limited in the present invention.

For example, a neighboring cell with a cell ID of 93 is used as the first neighboring cell, three resource sets are configured for the first neighboring cell, and each resource set includes eight resources.

Split the cell ID ( $N_{ID}^{CELL}$ ) according to a formula $N_{ID}^{CELL} = 3N_{ID}^{(1)} + N_{ID}^{(2)}$ to acquire the SSS ID ( $N_{ID}^{(1)}$ ) and the PSS ID ( $N_{ID}^{(2)}$ ) of the first neighboring cell. $N_{ID}^{(1)} = 31$ and $N_{ID}^{(2)} = 0$ may be obtained through calculation.

Perform a modulo operation on the quantity of configured resource sets of the first neighboring cell according to $N_{ID}^{(2)} = 0$, that is, $\mathrm{mod}\ (N_{ID}^{(2)},3) = \mathrm{mod}\ (0,3) = 0$.

Perform a modulo operation on the quantity of resources included in the configured resource sets of the first neighboring cell according to $N_{ID}^{(1)} = 31$, that is, $\mathrm{mod}\ (N_{ID}^{(1)},8) = \mathrm{mod}\ (31,8) = 7$.

Therefore, the second reference signal of the first neighboring cell with the cell ID of 93 may be sent on a resource 7 in a resource set 0.

Further, according to different protocol stipulations, in step 901, for sending resource locations of the first reference signal and the second reference signal, the following three cases may be specifically included:

First case: The first reference signal of the first neighboring cell and the second reference signal of the first neighboring cell are sent in one subframe.

For example, referring to FIG. 10B, the first reference signal and the second reference signal are both sent in a subframe 0.

Second case: The first reference signal of the first neighboring cell is sent in the Nth subframe 0 or subframe 5 that is before or after the second reference signal of the first neighboring cell.

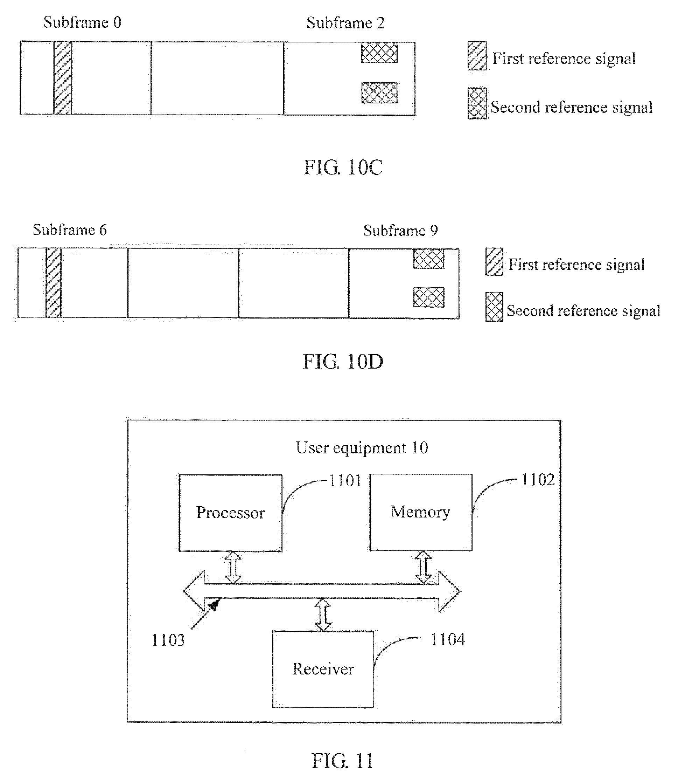

For example, as stipulated in a protocol, the first reference signal is sent in the first subframe 0 or subframe 5 that is before or after the second reference signal. Referring to FIG. 10C, an interval of the second reference signal is 80 ms, and an initial subframe is a subframe 2. The second reference signal is sent in a subframe 2 of a radio frame 0, a subframe 2 of a radio frame 8, and a subframe 2 of a radio frame 16. It may be known according to the protocol that the first reference signal is sent in a subframe 0 of the radio frame 0, a subframe 0 of the radio frame 8, and a subframe 0 of the radio frame 16. FIG. 10C shows sending locations of the first reference signal and the second reference signal in only one radio frame.

Third case: The first reference signal of the first neighboring cell is sent in the Pth subframe that is before or after the second reference signal of the first neighboring cell.

For example, as stipulated in a protocol, the first reference signal is sent in the third subframe that is before the second reference signal. Referring to FIG. 10D, an interval of the second reference signal is 80 ms, and an initial subframe is a subframe 9. The second reference signal is sent in the subframe 9, a subframe 89, and a subframe 169. It may be known according to the protocol that the first reference signal is sent in a subframe 6, a subframe 86, and a subframe 166. FIG. 10D shows sending locations of the first reference signal and the second reference signal in only one radio frame.

It should be noted that sending resource locations of the first reference signal and the second reference signal may be determined according to an actual need, which is not specifically limited in the present invention.

Further, referring to FIG. 10A, the method may further include:

904: Send a sending parameter of the first reference signal of the first neighboring cell and a sending parameter of the second reference signal of the first neighboring cell to all neighboring cells of the first neighboring cell to make user equipments UEs in all the neighboring cells of the first neighboring cell perform cell discovery.

Further, referring to FIG. 10A, when a base station corresponding to the first neighboring cell is in an off state, the method may further include:

905: Send the first reference signal and the second reference signal that are of the first neighboring cell periodically according to a preset interval.

The preset interval may be determined according to an actual need. Specific content of the preset interval is not specifically specified in the present invention. A shorter preset interval enables higher accuracy of cell discovery performed by the UE, and a longer preset interval enables a more obvious energy saving result of a base station.

In the prior art, in consideration of electricity saving and interference reduction, a base station may have a small cell on/off function. That is, when no service is required in a cell, the base station may be turned off, and when a user moves to nearby the base station, the base station may be turned on. If a base station of a first neighboring cell can send a first reference signal and a second reference signal that are of the first neighboring cell periodically, when performing cell discovery, UE can still discover the cell that is in an off state, and performs measurement for the cell that is in an off state. If the discovered cell that is in an off state has quite good performance, the base station that is in an off state may be turned on by using a network, so that the UE obtains a better service.

This embodiment of the present invention provides a cell discovery method, where a first reference signal and a second reference signal that are of a first neighboring cell are sent to make UE perform cell discovery, where the first reference signal is used for the UE to synchronize with the cell, and the second reference signal is used for the UE to perform cell discovery and RRM measurement. Accurate cell discovery is implemented in a scenario in which small cells are densely deployed, resolving a prior-art defect of strong interference for cell discovery in a scenario in which small cells are densely deployed.

**Embodiment 7**

Embodiment 7 of the present invention provides user equipment 10. Referring to FIG. 11, the user equipment 10 may include:

at least one processor 1101; a memory 1102; at least one communications bus 1103, configured to implement connections and mutual communication between the processor 1101, the memory 1102, and another module not shown; and a receiver 1104.

The communications bus 1103 may be an Industry Standard Architecture (Industry Standard Architecture, ISA for short) bus, a peripheral component interconnect (Peripheral Component, PCI for short) bus, an Extended Industry Standard Architecture (Extended Industry Standard Architecture, EISA for short) bus, or the like. The bus 1103 may be divided into an address bus, a data bus, a control bus, and the like. For ease of denotation, the bus is represented by using only one thick line in FIG. 11, which, however, does not indicate that there is only one bus or only one type of bus.
The memory 1102 may be a random access memory and provide an instruction and data to the processor 1101. A part of the memory 1102 may further include a non-volatile random access memory (NVRAM). The memory 1102 may be configured to store all information included in a distributed lock management device in a distributed lock management process.
The processor 1101 may be a central processing unit (Central Processing Unit, CPU for short) or an application-specific integrated circuit (Application Specific Integrated Circuit, ASIC for short), or is configured as one or more integrated circuits that implement the embodiment of the present invention.
The receiver 1104 is configured to receive auxiliary information, where the auxiliary information may include resource information of a second reference signal of a first neighboring cell, and the first neighboring cell is any neighboring cell of a serving base station of the UE.
The processor 1101 is configured to detect a first reference signal of the first neighboring cell according to the received auxiliary information to make the UE synchronize with the first neighboring cell.
The processor 1101 is further configured to: according to the auxiliary information, detect the first reference signal of the first neighboring cell, or detect the second reference signal of the first neighboring cell, or detect the first reference signal and the second reference signal that are of the first neighboring cell, to acquire a cell ID or a virtual ID of the first neighboring cell.
Optionally, the second reference signal of the first neighboring cell may be an NZP-CSI-RS of the first neighboring cell or a quasi NZP-CSI-RS of the first neighboring cell.
A scrambling code ID for generating the quasi NZP-CSI-RS is different from a scrambling code ID for generating the NZP-CSI-RS.
Optionally, the resource information of the second reference signal of the first neighboring cell may include at least one of the following information:

a resource configuration for the second reference signal of the first neighboring cell, a quantity of antenna ports for the second reference signal of the first neighboring cell, or subframe information of the second reference signal of the first neighboring cell.

Optionally, the first reference signal of the first neighboring cell may be a PSS of the neighboring cell or a quasi PSS of the first neighboring cell.
A root sequence number for generating the quasi PSS is different from a root sequence number for generating the PSS.
Further, the first reference signal and the second reference signal are quasi co-sited.
Further, the processor 1101 may be specifically configured to:

detect and acquire a first reference signal sequence of the first neighboring cell according to the auxiliary information; and
perform a correlation operation between the detected first reference signal sequence of the first neighboring cell and each local protocol-specified first reference signal sequence to acquire multiple correlation values, where

the UE is synchronized with the first neighboring cell if there exists a first correlation value greater than a preset threshold, where the first correlation value is any one of the multiple correlation values acquired by the performing a correlation operation between the detected first reference signal sequence of the first neighboring cell and each local protocol-specified first reference signal sequence.

Further, the processor 1101 may be specifically configured to:

acquire an actual sending resource location of the first reference signal of the first neighboring cell according to the resource information of the second reference signal of the first neighboring cell;
detect and acquire, at the actual sending resource location of the first reference signal of the first neighboring cell, the first reference signal of the first neighboring cell to acquire a first reference signal ID of the first neighboring cell; and
acquire the virtual ID of the first neighboring cell according to the first reference signal ID of the first neighboring cell, or acquire the cell ID of the first neighboring cell according to a correspondence between the first reference signal ID of the first neighboring cell and the cell ID of the first neighboring cell;
or
acquire an actual sending resource location of the second reference signal of the first neighboring cell according to the resource information of the second reference signal of the first neighboring cell;
detect and acquire, at the actual sending resource location of the second reference signal of the first neighboring cell, the second reference signal of the first neighboring cell to acquire a second reference signal scrambling code ID of the first neighboring cell; and
acquire the virtual ID of the first neighboring cell according to the second reference signal scrambling code ID of the first neighboring cell, or acquire the cell ID of the first neighboring cell according to a correspondence between the second reference signal scrambling code ID of the first neighboring cell and the cell ID of the first neighboring cell;
or
acquire actual sending resource locations of the first reference signal and the second reference signal that are of the first neighboring cell according to the resource information of the second reference signal of the first neighboring cell;
detect and acquire, at the actual sending resource location of the first reference signal of the first neighboring cell, the first reference signal of the first neighboring cell to acquire a first reference signal ID of the first neighboring cell;
detect and acquire, at the actual sending resource location of the second reference signal of the first neighboring cell, the second reference signal of the first neighboring cell to acquire a second reference signal scrambling code ID of the first neighboring cell; and
acquire the cell ID of the first neighboring cell according to a correspondence among the second reference signal scrambling code ID of the first neighboring cell, the first reference signal ID of the first neighboring cell, and the cell ID.

Further, the detecting and acquiring, by the processor 1101 at the actual sending resource location of the first reference signal of the first neighboring cell, the first reference signal of the first neighboring cell to acquire a first reference signal ID of the first neighboring cell may include:

detecting and acquiring, at the actual sending resource location of the first reference signal of the first neighboring cell, the first reference signal sequence of the first neighboring cell; and
performing a correlation operation between the detected first reference signal sequence of the first neighboring cell and each local protocol-specified first reference signal sequence to acquire the first reference signal ID of the first neighboring cell.

Further, the detecting and acquiring, by the processor 1101 at the actual sending resource location of the second reference signal of the first neighboring cell, the second reference signal of the first neighboring cell to acquire a second reference signal scrambling code ID of the first neighboring cell may include:

detecting and acquiring, at the actual sending resource location of the second reference signal of the first neighboring cell, a second reference signal sequence of the first neighboring cell;
generating M local second reference signal sequences according to protocol-specified M second reference signal scrambling code identities IDs; and
performing a correlation operation between the detected second reference signal sequence of the first neighboring cell and each of the M local second reference signal sequences to acquire the second reference signal scrambling code ID of the first neighboring cell.

Further, the processor 1101 may be further configured to:

determine, according to the resource information of the second reference signal of the first neighboring cell, whether the first neighboring cell is discovered.

Further, the determining, by the processor 1101, whether the first neighboring cell is discovered may specifically include:

acquiring the actual sending resource location of the second reference signal of the first neighboring cell according to the resource information of the second reference signal of the first neighboring cell;
detecting and acquiring, at the actual sending resource location of the second reference signal of the first neighboring cell, the second reference signal of the first neighboring cell;
generating M local second reference signal sequences according to the protocol-specified M second reference signal scrambling code IDs; and
performing a correlation operation between the detected second reference signal of the first neighboring cell and each of the M local second reference signal sequences to acquire M correlation values, where
the first neighboring cell is discovered if there exists a second correlation value greater than a preset discovery condition, where the second correlation value is any one of the M correlation values acquired by the performing a correlation operation between the detected second reference signal of the first neighboring cell and each of the M local second reference signal sequences.

Further, the auxiliary information may further include the cell ID of the first neighboring cell and the first reference signal ID of the first neighboring cell.
Correspondingly, the processor 1101 may be specifically further configured to:

detect and acquire the first reference signal sequence of the first neighboring cell according to the auxiliary information;
generate a local first reference signal sequence of the first neighboring cell according to the first reference signal ID of the first neighboring cell; and
perform a correlation operation between the detected first reference signal sequence of the first neighboring cell and the local first reference signal sequence of the first neighboring cell to acquire a third correlation value, where
the UE is synchronized with the first neighboring cell if the third correlation value is greater than a preset threshold.

Further, the auxiliary information may further include the second reference signal scrambling code ID of the first neighboring cell.
Correspondingly, the processor 1101 may be specifically further configured to:

acquire the actual sending resource location of the second reference signal of the first neighboring cell according to the resource information of the second reference signal of the first neighboring cell;
detect and acquire, at the actual sending resource location of the second reference signal of the first neighboring cell, the second reference signal sequence of the first neighboring cell;
generate a local second reference signal sequence of the first neighboring cell according to the second reference signal scrambling code ID of the first neighboring cell; and
perform a correlation operation between the detected second reference signal of the first neighboring cell and the local second reference signal sequence of the first neighboring cell to acquire a fourth correlation value, where
the first neighboring cell is discovered if the fourth correlation value is greater than a preset discovery condition.

Optionally, the processor may be specifically further configured to:

if the first reference signal of the first neighboring cell and the second reference signal of the first neighboring cell are sent in one subframe, detect the first reference signal of the first neighboring cell in a subframe indicated in the resource information of the second reference signal of the first neighboring cell;
or
if the first reference signal of the first neighboring cell is sent in the $N^{th}$ subframe 0 or subframe 5 that is before or after the second reference signal of the first neighboring cell, detect the first reference signal of the first neighboring cell in a subframe 0 or a subframe 5 that is before or after a subframe indicated in the resource information of the second reference signal of the first neighboring cell, where N is greater than or equal to 1;
or
if the first reference signal of the first neighboring cell is sent in the $P^{th}$ subframe that is before or after the second reference signal of the first neighboring cell, detect the first reference signal of the first neighboring cell in the $P^{th}$

subframe that is before or after a subframe indicated in the resource information of the second reference signal of the first neighboring cell, where the auxiliary information may further include a subframe offset P between the first reference signal of the first neighboring cell and the second reference signal of the first neighboring cell, and P is greater than or equal to 1.

Further, the processor 1101 may be further configured to:

perform, at the sending resource location of the second reference signal of the first neighboring cell, RRM measurement for the first neighboring cell according to the resource information of the second reference signal of the first neighboring cell to acquire a metric, where the metric may include at least one of an RSRP, an RSSI, or an RSRQ.

Further, the auxiliary information may further include resource information of measured resource 1 of the first neighboring cell, where the resource information of the measured resource 1 of the first neighboring cell may include at least one of the following information:

a resource configuration for the measured resource 1 of the first neighboring cell, a quantity of antenna ports for the measured resource 1 of the first neighboring cell, or subframe information of the measured resource 1 of the first neighboring cell.

Preferentially, the measured resource 1 of the first neighboring cell may be a ZP-CSI-RS of the first neighboring cell.

Further, the processor 1101 may be specifically further configured to:

perform, at the sending resource location of the second reference signal of the first neighboring cell, RRM measurement for the first neighboring cell according to the resource information of the second reference signal of the first neighboring cell to acquire the metric RSRP;
perform, at a sending resource location of the measured resource 1 of the first neighboring cell, RRM measurement for the first neighboring cell according to the resource information of the measured resource 1 of the first neighboring cell to acquire the metric RSSI; and
acquire the RSRQ according to the RSRP and the RSSI.

This embodiment of the present invention provides user equipment 10, which receives auxiliary information, where the auxiliary information includes resource information of a second reference signal of a first neighboring cell, and the first neighboring cell is any neighboring cell of a serving base station of the UE; detects a first reference signal of the first neighboring cell according to the auxiliary information to make the UE synchronize with the first neighboring cell; and according to the auxiliary information, detects the first reference signal of the first neighboring cell, or detects the second reference signal of the first neighboring cell, or detects the first reference signal and the second reference signal that are of the first neighboring cell, to acquire a cell identity ID or a virtual ID of the first neighboring cell. Accurate cell discovery is implemented in a scenario in which small cells are densely deployed, resolving a prior-art defect of strong interference for cell discovery in a scenario in which small cells are densely deployed.

**Embodiment 8**

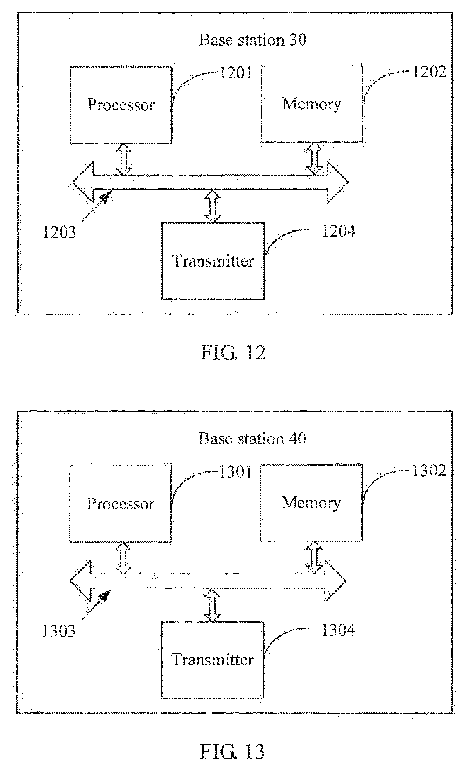

Embodiment 8 of the present invention provides a base station 20, where the base station 20 is a serving base station of UE. Referring to FIG. 12, the base station 20 may include:

at least one processor 1201; a memory 1202; at least one communications bus 1203, configured to implement connections and mutual communication between the processor 1201, the memory 1202, and another module not shown; and a transmitter 1204.

The communications bus 1203 may be an Industry Standard Architecture (Industry Standard Architecture, ISA for short) bus, a peripheral component interconnect (Peripheral Component, PCI for short) bus, an Extended Industry Standard Architecture (Extended Industry Standard Architecture, EISA for short) bus, or the like. The bus 1203 may be divided into an address bus, a data bus, a control bus, and the like. For ease of denotation, the bus is represented by using only one thick line in FIG. 12, which, however, does not indicate that there is only one bus or only one type of bus.

The memory 1202 may be a random access memory and provide an instruction and data to the processor 1201. A part of the memory 1202 may further include a non-volatile random access memory (NVRAM). The memory 1202 may be configured to store all information included in a distributed lock management device in a distributed lock management process.

The processor 1201 may be a central processing unit (Central Processing Unit, CPU for short) or an application-specific integrated circuit (Application Specific Integrated Circuit, ASIC for short), or is configured as one or more integrated circuits that implement the embodiment of the present invention.

The processor 1201 is configured to acquire a sending parameter of a first reference signal of a first neighboring cell and a sending parameter of a second reference signal of the first neighboring cell.

The processor 1201 is further configured to generate auxiliary information according to the acquired sending parameter of the first reference signal of the first neighboring cell and sending parameter of the second reference signal of the first neighboring cell, where the auxiliary information includes resource information of the second reference signal of the first neighboring cell.

The transmitter 1204 is configured to send the generated auxiliary information to UE in a cell to make the UE perform cell discovery.

Optionally, the second reference signal of the first neighboring cell may be an NZP-CSI-RS of the first neighboring cell or a quasi NZP-CSI-RS of the first neighboring cell.

A scrambling code ID for generating the quasi NZP-CSI-RS is different from a scrambling code ID for generating the NZP-CSI-RS.

Optionally, the first reference signal of the first neighboring cell is a PSS of the first neighboring cell or a quasi PSS of the first neighboring cell.

A root sequence number for generating the quasi PSS is different from a root sequence number for generating the PSS.

Optionally, the resource information of the second reference signal of the first neighboring cell may include at least one of the following information:

a resource configuration for the second reference signal of the first neighboring cell, a quantity of antenna ports for the second reference signal of the first neighboring cell, or subframe information of the second reference signal of the first neighboring cell.

Further, the auxiliary information may further include a cell ID of the first neighboring cell and a first reference signal ID of the first neighboring cell.

Further, the auxiliary information may further include a second reference signal scrambling code ID of the first neighboring cell.

Optionally, when the first reference signal of the first neighboring cell is sent in the $P^{th}$ subframe that is before or after the second reference signal of the first neighboring cell, the auxiliary information may further include a subframe offset P between the first reference signal of the first neighboring cell and the second reference signal of the first neighboring cell, where P is greater than or equal to 1.

This embodiment of the present invention provides a base station 30, which sends auxiliary information to make UE perform cell discovery, where the auxiliary information includes resource information of a second reference signal of a first neighboring cell, and the first neighboring cell is any neighboring cell of a serving base station of the UE. Accurate cell discovery is implemented in a scenario in which small cells are densely deployed, resolving a prior-art defect of strong interference for cell discovery in a scenario in which small cells are **Embodiment 9**

Embodiment 9 of the present invention provides a base station 40. The base station 40 is a base station that corresponds to a first neighboring cell. Referring to FIG. 13, the base station 40 may include:

at least one processor 1301; a memory 1302; at least one communications bus 1303, configured to implement connections and mutual communication between the processor 1301, the memory 1302, and another module not shown; and a transmitter 1304.

The communications bus 1303 may be an Industry Standard Architecture (Industry Standard Architecture, ISA for short) bus, a peripheral component interconnect (Peripheral Component, PCI for short) bus, an Extended Industry Standard Architecture (Extended Industry Standard Architecture, EISA for short) bus, or the like. The bus 1303 may be divided into an address bus, a data bus, a control bus, and the like. For ease of denotation, the bus is represented by using only one thick line in FIG. 13, which, however, does not indicate that there is only one bus or only one type of bus.

The memory 1302 may be a random access memory and provides an instruction and data to the processor 1301. A part of the memory 1302 may further include a non-volatile random access memory (NVRAM). The memory 1302 may be configured to store all information included in a distributed lock management device in a distributed lock management process.

The processor 1301 may be a central processing unit (Central Processing Unit, CPU for short) or an application-specific integrated circuit (Application Specific Integrated Circuit, ASIC for short), or is configured as one or more integrated circuits that implement the embodiment of the present invention.

The transmitter 1304 is configured to send a first reference signal and a second reference signal that are of the first neighboring cell, where the first reference signal is used for UE to synchronize with the cell, and the second reference signal is used for the UE to perform cell discovery and RRM measurement.

Optionally, the second reference signal of the first neighboring cell may be an NZP-CSI-RS of the first neighboring cell or a quasi NZP-CSI-RS of the first neighboring cell.

A scrambling code ID for generating the quasi NZP-CSI-RS is different from a scrambling code ID for generating the NZP-CSI-RS.

Optionally, the first reference signal of the first neighboring cell may be a PSS of the first neighboring cell or a quasi PSS of the first neighboring cell.

A root sequence number for generating the quasi PSS is different from a root sequence number for generating the PSS.

Optionally, the processor 1301 may be specifically configured to:

when the second reference signal of the first neighboring cell is transmitted over one antenna port, map the second reference signal of the first neighboring cell onto four resources in each resource block; or
when the second reference signal of the first neighboring cell is transmitted over one antenna port, map the second reference signal of the first neighboring cell onto eight resource elements in each resource block; or
when the second reference signal of the first neighboring cell is transmitted over two antenna ports, map the second reference signal of the first neighboring cell onto four resource elements in each resource block; or
when the second reference signal of the first neighboring cell is transmitted over two antenna ports, map the second reference signal of the first neighboring cell onto eight resource elements in each resource block.

Optionally, a sequence length of the second reference signal of the first neighboring cell is Q times a quantity of resource blocks included in a maximum system bandwidth, where Q is a positive integer greater than 1.

Further, the processor 1301 may be further configured to:

determine a sending resource location of the second reference signal of the first neighboring cell according to a cell ID of the first neighboring cell and a quantity of configured resources of the first neighboring cell.

Further, the processor 1301 may be specifically configured to:

calculate the sending resource location of the second reference signal of the first neighboring cell according to a PSS ID of the first neighboring cell.

Optionally, the processor 1301 may be specifically configured to:

calculate the sending resource location of the second reference signal of the first neighboring cell according to an SSS ID of the first neighboring cell.

Optionally, the processor 1301 may be specifically configured to:

when the configured resources of the first neighboring cell are S resource sets, with each resource set including T resources, determine a sending resource set of the second reference signal of the first neighboring cell according to the PSS ID of the first neighboring cell, and determine the sending resource location, in the sending resource set, of the second reference signal of the first neighboring cell according to the SSS ID of the first neighboring cell.

Further, the transmitter 1304 may be further configured to:

send the first reference signal of the first neighboring cell and the second reference signal of the first neighboring cell in one subframe;
or
send the first reference signal of the first neighboring cell in the $N^{th}$ subframe 0 or subframe 5 that is before or after the second reference signal of the first neighboring cell, where N is greater than or equal to 1;
or
send the first reference signal of the first neighboring cell in the $P^{th}$ subframe that is before or after the second reference signal of the first neighboring cell, where P is greater than or equal to 1.

Optionally, the transmitter 1304 may be further configured to send a sending parameter of the first reference signal of the first neighboring cell and a sending parameter of the second reference signal of the first neighboring cell to all neighboring cells of the first neighboring cell to make UEs in all the neighboring cells of the first neighboring cell perform cell discovery.

Optionally, when the base station that corresponds to the first neighboring cell is in an off state, the transmitter 1304 may be further configured to send the first reference signal and the second reference signal that are of the first neighboring cell periodically according to a preset interval.

This embodiment of the present invention provides a base station 40, which sends a first reference signal and a second reference signal that are of a first neighboring cell to make UE perform cell discovery, where the first reference signal is used for the UE to synchronize with the cell, and the second reference signal is used for the UE to perform cell discovery and RRM measurement. Accurate cell discovery is implemented in a scenario in which small cells are densely deployed, resolving a prior-art defect of strong interference for cell discovery in a scenario in which small cells are densely deployed.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position or may be distributed on a plurality of network elements. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a portable hard drive, a read-only memory (Read-Only Memory, ROM for short), a random access memory (Random Access Memory, RAM for short), a magnetic disk, or an optical disc.

Finally, it should be noted that the foregoing embodiments are merely intended to describe the technical solutions of the present invention rather than to limit the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. User equipment, comprising:

   a receiving unit, configured to receive auxiliary information, wherein the auxiliary information comprises resource information of a second reference signal of the first neighboring cell, and the first neighboring cell is any neighboring cell of a serving base station of the user equipment UE;
   a synchronization unit, configured to detect a first reference signal of the first neighboring cell according to the auxiliary information received by the receiving unit, to make the UE synchronize with the first neighboring cell; and
   an acquisition unit, configured to: according to the auxiliary information received by the receiving unit, detect the first reference signal of the first neighboring cell, or detect the second reference signal of the first neighboring cell, or detect the first reference signal and the second reference signal that are of the first neighboring cell, to acquire a cell identity ID or a virtual ID of the first neighboring cell.

2. The user equipment according to claim 1, wherein the second reference signal of the first neighboring cell is a non-zero power channel state indication reference signal NZP-CSI-RS of the first neighboring cell or a quasi NZP-CSI-RS of the first neighboring cell, wherein
a scrambling code ID for generating the quasi NZP-CSI-RS is different from a scrambling code ID for generating the NZP-CSI-RS.

3. The user equipment according to claim 1 or 2, wherein the resource information of the second reference signal of the first neighboring cell comprises at least one of the following information:

a resource configuration for the second reference signal of the first neighboring cell, a quantity of antenna ports for the second reference signal of the first neighboring cell, or subframe information of the second reference signal of the first neighboring cell.

4. The user equipment according to any one of claims 1 to 3, wherein the first reference signal of the first neighboring cell is a primary synchronization signal PSS of the first neighboring cell or a quasi PSS of the first neighboring cell, wherein
a root sequence number for generating the quasi PSS is different from a root sequence number for generating the PSS.

5. The user equipment according to any one of claims 1 to 4, wherein
the first reference signal and the second reference signal are quasi co-sited.

6. The user equipment according to any one of claims 1 to 5, wherein the synchronization unit is specifically configured to:

detect and acquire a first reference signal sequence of the first neighboring cell according to the auxiliary information; and
perform a correlation operation between the detected first reference signal sequence of the first neighboring cell and each local protocol-specified first reference signal sequence to acquire multiple correlation values, wherein
the UE is synchronized with the first neighboring cell if there exists a first correlation value greater than a preset threshold, wherein the first correlation value is any one of the multiple correlation values acquired by the performing a correlation operation between the detected first reference signal sequence of the first neighboring cell and each local protocol-specified first reference signal sequence.

7. The user equipment according to any one of claims 1 to 6, wherein the acquisition unit is specifically configured to:

acquire an actual sending resource location of the first reference signal of the first neighboring cell according to the resource information of the second reference signal of the first neighboring cell;
detect and acquire, at the actual sending resource location of the first reference signal of the first neighboring cell, the first reference signal of the first neighboring cell to acquire a first reference signal ID of the first neighboring cell; and
acquire the virtual ID of the first neighboring cell according to the first reference signal ID of the first neighboring cell, or acquire the cell ID of the first neighboring cell according to a correspondence between the first reference signal ID of the first neighboring cell and the cell ID of the first neighboring cell;
or
acquire an actual sending resource location of the second reference signal of the first neighboring cell according to the resource information of the second reference signal of the first neighboring cell;
detect and acquire, at the actual sending resource location of the second reference signal of the first neighboring cell, the second reference signal of the first neighboring cell to acquire a second reference signal scrambling code ID of the first neighboring cell; and
acquire the virtual ID of the first neighboring cell according to the second reference signal scrambling code ID of the first neighboring cell, or acquire the cell ID of the first neighboring cell according to a correspondence between the second reference signal scrambling code ID of the first neighboring cell and the cell ID of the first neighboring cell;
or

acquire actual sending resource locations of the first reference signal and the second reference signal that are of the first neighboring cell according to the resource information of the second reference signal of the first neighboring cell;

detect and acquire, at the actual sending resource location of the first reference signal of the first neighboring cell, the first reference signal of the first neighboring cell to acquire a first reference signal ID of the first neighboring cell;

detect and acquire, at the actual sending resource location of the second reference signal of the first neighboring cell, the second reference signal of the first neighboring cell to acquire a second reference signal scrambling code ID of the first neighboring cell; and

acquire the cell ID of the first neighboring cell according to a correspondence among the second reference signal scrambling code ID of the first neighboring cell, the first reference signal ID of the first neighboring cell, and the cell ID.

8. The user equipment according to claim 7, wherein the acquisition unit is specifically configured to:

detect and acquire, at the actual sending resource location of the first reference signal of the first neighboring cell, the first reference signal sequence of the first neighboring cell; and

perform a correlation operation between the detected first reference signal sequence of the first neighboring cell and each local protocol-specified first reference signal sequence to acquire the first reference signal ID of the first neighboring cell.

9. The user equipment according to claim 7 or 8, wherein the acquisition unit is specifically configured to:

detect and acquire, at the actual sending resource location of the second reference signal of the first neighboring cell, a second reference signal sequence of the first neighboring cell;

generate M local second reference signal sequences according to protocol-specified M second reference signal scrambling code IDs; and

perform a correlation operation between the detected second reference signal sequence of the first neighboring cell and each of the M local second reference signal sequences to acquire the second reference signal scrambling code ID of the first neighboring cell.

10. The user equipment according to any one of claims 1 to 9, wherein the user equipment further comprises:

a determining unit, configured to determine, according to the resource information of the second reference signal of the first neighboring cell, whether the first neighboring cell is discovered.

11. The user equipment according to claim 10, wherein the determining unit is specifically configured to:

acquire the actual sending resource location of the second reference signal of the first neighboring cell according to the resource information of the second reference signal of the first neighboring cell;

detect and acquire, at the actual sending resource location of the second reference signal of the first neighboring cell, the second reference signal sequence of the first neighboring cell;

generate M local second reference signal sequences according to the protocol-specified M second reference signal scrambling code IDs; and

perform a correlation operation between the detected second reference signal sequence of the first neighboring cell and each of the M local second reference signal sequences to acquire M correlation values, wherein the first neighboring cell is discovered if there exists the second correlation value greater than a preset discovery condition, wherein the second correlation value is any one of the M correlation values acquired by the performing a correlation operation between the detected second reference signal of the first neighboring cell and each of the M local second reference signal sequences.

12. The user equipment according to any one of claims 1 to 11, wherein the auxiliary information further comprises the cell ID of the first neighboring cell and the first reference signal ID of the first neighboring cell.

13. The user equipment according to claim 12, wherein the synchronization unit is specifically configured to:

detect and acquire the first reference signal sequence of the first neighboring cell according to the auxiliary information;

generate a local first reference signal sequence of the first neighboring cell according to the first reference signal ID of the first neighboring cell; and

perform a correlation operation between the detected first reference signal sequence of the first neighboring cell and the local first reference signal sequence of the first neighboring cell to acquire a third correlation value, wherein

the UE is synchronized with the first neighboring cell if the third correlation value is greater than a preset threshold.

14. The user equipment according to any one of claims 1 to 13, wherein the auxiliary information further comprises the second reference signal scrambling code ID of the first neighboring cell.

15. The user equipment according to claim 14, wherein the determining unit is specifically configured to:

acquire the actual sending resource location of the second reference signal of the first neighboring cell according to the resource information of the second reference signal of the first neighboring cell;

detect and acquire, at the actual sending resource location of the second reference signal of the first neighboring cell, the second reference signal sequence of the first neighboring cell;

generate a local second reference signal sequence of the first neighboring cell according to the second reference signal scrambling code ID of the first neighboring cell; and

perform a correlation operation between the detected second reference signal of the first neighboring cell and the local second reference signal sequence of the first neighboring cell to acquire a fourth correlation value, wherein

the first neighboring cell is discovered if the fourth correlation value is greater than a preset discovery condition.

16. The user equipment according to any one of claims 1 to 15, wherein the synchronization unit is specifically configured to:

if the first reference signal of the first neighboring cell and the second reference signal of the first neighboring cell are sent in one subframe, detect the first reference signal of the first neighboring cell in a subframe indicated in the resource information of the second reference signal of the first neighboring cell;
or

if the first reference signal of the first neighboring cell is sent in the $N^{th}$ subframe 0 or subframe 5 that is before or after the second reference signal of the first neighboring cell, detect the first reference signal of the first neighboring cell in a subframe 0 or a subframe 5 that is before or after a subframe indicated in the resource information of the second reference signal of the first neighboring cell, wherein N is greater than or equal to 1;
or

if the first reference signal of the first neighboring cell is sent in the $P^{th}$ subframe that is before or after the second reference signal of the first neighboring cell, detect the first reference signal of the first neighboring cell in the $P^{th}$ subframe that is before or after a subframe indicated in the resource information of the second reference signal of the first neighboring cell, wherein the auxiliary information further comprises a subframe offset P between the first reference signal of the first neighboring cell and the second reference signal of the first neighboring cell, and P is greater than or equal to 1.

17. The user equipment according to any one of claims 1 to 16, wherein the user equipment further comprises:

a measurement unit, configured to perform, at the sending resource location of the second reference signal of the first neighboring cell, radio resource management RRM measurement for the first neighboring cell according to the resource information of the second reference signal of the first neighboring cell to acquire a metric, wherein the metric comprises at least one of a reference signal received power RSRP, a received signal strength indicator RSSI, or a reference signal received quality RSRQ.

18. The user equipment according to claim 17, wherein the auxiliary information further comprises resource information of a measured resource 1 of the first neighboring cell, and the resource information of the measured resource 1 of the first neighboring cell comprises at least one of the following information:

a resource configuration for the measured resource 1 of the first neighboring cell, a quantity of antenna ports for the measured resource 1 of the first neighboring cell, or subframe information of the measured resource 1 of the first neighboring cell.

19. The user equipment according to claim 18, wherein the measured resource 1 of the first neighboring cell is a zero power channel state indication reference signal ZP-CSI-RS of the first neighboring cell.

20. The user equipment according to claim 18 or 19, wherein the measurement unit is specifically configured to:

   perform, at the sending resource location of the second reference signal of the first neighboring cell, radio resource management RRM measurement for the first neighboring cell according to the resource information of the second reference signal of the first neighboring cell to acquire the metric RSRP;

   perform, at a sending resource location of the measured resource 1 of the first neighboring cell, radio resource management RRM measurement for the first neighboring cell according to the resource information of the measured resource 1 of the first neighboring cell to acquire the metric RSSI; and

   acquire the RSRQ according to the RSRP and the RSSI.

21. A base station, wherein the base station is a serving base station of user equipment UE, and the base station comprises:

   an acquisition unit, configured to acquire a sending parameter of a first reference signal of a first neighboring cell and a sending parameter of a second reference signal of the first neighboring cell;

   a generation unit, configured to generate auxiliary information according to the sending parameter of the first reference signal of the first neighboring cell and the sending parameter of the second reference signal of the first neighboring cell that are acquired by the acquisition unit, wherein the auxiliary information comprises resource information of the second reference signal of the first neighboring cell; and

   a sending unit, configured to send the auxiliary information generated by the generation unit to user equipment UE in a cell to make the UE perform cell discovery.

22. The base station according to claim 21, wherein the second reference signal of the first neighboring cell is a non-zero power channel state indication reference signal NZP-CSI-RS of the first neighboring cell or a quasi NZP-CSI-RS of the first neighboring cell, wherein

   a scrambling code ID for generating the quasi NZP-CSI-RS is different from a scrambling code ID for generating the NZP-CSI-RS.

23. The base station according to claim 21 or 22, wherein the first reference signal of the first neighboring cell is a primary synchronization signal PSS or a quasi PSS of the first neighboring cell, wherein

   a root sequence number for generating the quasi PSS is different from a root sequence number for generating the PSS.

24. The base station according to any one of claims 21 to 23, wherein the resource information of the second reference signal of the first neighboring cell comprises at least one of the following information:

   a resource configuration for the second reference signal of the first neighboring cell, a quantity of antenna ports for the second reference signal of the first neighboring cell, or subframe information of the second reference signal of the first neighboring cell.

25. The base station according to any one of claims 21 to 24, wherein the auxiliary information further comprises a cell identity ID of the first neighboring cell and a first reference signal ID of the first neighboring cell.

26. The base station according to any one of claims 21 to 25, wherein the auxiliary information further comprises a second reference signal scrambling code ID of the first neighboring cell.

27. The base station according to any one of claims 21 to 26, wherein when the first reference signal of the first neighboring cell is sent in the $P^{th}$ subframe that is before or after the second reference signal of the first neighboring cell, the auxiliary information further comprises a subframe offset P between the first reference signal of the first neighboring cell and the second reference signal of the first neighboring cell, wherein P is greater than or equal to 1.

28. A base station, wherein the base station is a base station corresponding to a first neighboring cell, and the base station comprises:

   a sending unit, configured to send a first reference signal and a second reference signal that are of the first neighboring cell, wherein the first reference signal is used for user equipment UE to synchronize with the cell, and the second reference signal is used for the UE to perform cell discovery and radio resource management RRM measurement.

29. The base station according to claim 28, wherein the second reference signal of the first neighboring cell is a non-zero power channel state indication reference signal NZP-CSI-RS of the first neighboring cell or a quasi NZP-CSI-RS of the first neighboring cell, wherein
a scrambling code ID for generating the quasi NZP-CSI-RS is different from a scrambling code ID for generating the NZP-CSI-RS.

30. The base station according to claim 28 or 29, wherein the first reference signal of the first neighboring cell is a primary synchronization signal PSS of the first neighboring cell or a quasi PSS of the first neighboring cell, wherein a root sequence number for generating the quasi PSS is different from a root sequence number for generating the PSS.

31. The base station according to any one of claims 28 to 30, wherein the base station further comprises a mapping unit, configured to:

when the second reference signal of the first neighboring cell is transmitted over one antenna port, map the second reference signal of the first neighboring cell onto four resources in each resource block; or
when the second reference signal of the first neighboring cell is transmitted over one antenna port, map the second reference signal of the first neighboring cell onto eight resource elements in each resource block; or
when the second reference signal of the first neighboring cell is transmitted over two antenna ports, map the second reference signal of the first neighboring cell onto four resource elements in each resource block; or
when the second reference signal of the first neighboring cell is transmitted over two antenna ports, map the second reference signal of the first neighboring cell onto eight resource elements in each resource block.

32. The base station according to claim 31, wherein
a sequence length of the second reference signal of the first neighboring cell is Q times a quantity of resource blocks comprised in a maximum system bandwidth, wherein Q is a positive integer greater than 1.

33. The base station according to any one of claims 28 to 32, wherein the base station further comprises:

a determining unit, configured to determine a sending resource location of the second reference signal of the first neighboring cell according to a cell ID of the first neighboring cell and a quantity of configured resources of the first neighboring cell.

34. The base station according to claim 33, wherein the determining unit is specifically configured to:

calculate the sending resource location of the second reference signal of the first neighboring cell according to a primary synchronization signal PSS ID of the first neighboring cell.

35. The base station according to claim 33, wherein the determining unit is specifically configured to:

calculate the sending resource location of the second reference signal of the first neighboring cell according to a secondary synchronization signal SSS ID of the first neighboring cell.

36. The base station according to claim 33, wherein the configured resources of the first neighboring cell are S resource sets, with each resource set comprising T resources, and the determining unit is specifically configured to:

determine a sending resource set of the second reference signal of the first neighboring cell according to a PSS ID of the first neighboring cell, and determine the sending resource location, in the sending resource set, of the second reference signal of the first neighboring cell according to an SSS ID of the first neighboring cell.

37. The base station according to any one of claims 28 to 36, wherein the sending unit is further configured to:

send the first reference signal of the first neighboring cell and the second reference signal of the first neighboring cell in one subframe;

or

send the first reference signal of the first neighboring cell in the N<sup>th</sup> subframe 0 or subframe 5 that is before or after the second reference signal of the first neighboring cell, wherein N is greater than or equal to 1;

or

send the first reference signal of the first neighboring cell in the P<sup>th</sup> subframe that is before or after the second reference signal of the first neighboring cell, wherein P is greater than or equal to 1.

38. The base station according to any one of claims 28 to 37, wherein the sending unit is further configured to send a sending parameter of the first reference signal of the first neighboring cell and a sending parameter of the second reference signal of the first neighboring cell to all neighboring cells of the first neighboring cell to make user equipments UEs in all the neighboring cells of the first neighboring cell perform cell discovery.

39. The base station according to any one of claims 28 to 38, wherein when the corresponding base station of the first neighboring cell is in an off state, the sending unit is further configured to send the first reference signal and the second reference signal that are of the first neighboring cell periodically according to a preset interval.

40. A cell discovery method, comprising:

receiving, by user equipment UE, auxiliary information, wherein the auxiliary information comprises resource information of a second reference signal of the first neighboring cell, and the first neighboring cell is any neighboring cell of a serving base station of the UE;

detecting, by the UE, a first reference signal of the first neighboring cell according to the auxiliary information to make the UE synchronize with the first neighboring cell; and

detecting, by the UE according to the auxiliary information, the first reference signal of the first neighboring cell, or the second reference signal of the first neighboring cell, or the first reference signal and the second reference signal that are of the first neighboring cell, to acquire a cell identity ID or a virtual ID of the first neighboring cell.

41. The cell discovery method according to claim 40, wherein the second reference signal of the first neighboring cell is a non-zero power channel state indication reference signal NZP-CSI-RS of the first neighboring cell or a quasi NZP-CSI-RS of the first neighboring cell, wherein
a scrambling code ID for generating the quasi NZP-CSI-RS is different from a scrambling code ID for generating the NZP-CSI-RS.

42. The cell discovery method according to claim 40 or 41, wherein the resource information of the second reference signal of the first neighboring cell comprises at least one of the following information:

a resource configuration for the second reference signal of the first neighboring cell, a quantity of antenna ports for the second reference signal of the first neighboring cell, or subframe information of the second reference signal of the first neighboring cell.

43. The cell discovery method according to any one of claims 40 to 42, wherein the first reference signal of the first neighboring cell is a primary synchronization signal PSS of the first neighboring cell or a quasi PSS of the first neighboring cell, wherein
a root sequence number for generating the quasi PSS is different from a root sequence number for generating the PSS.

44. The cell discovery method according to any one of claims 40 to 43, wherein
the first reference signal and the second reference signal are quasi co-sited.

45. The cell discovery method according to any one of claims 40 to 44, wherein the detecting, by the UE, a first reference signal of the first neighboring cell according to the auxiliary information to make the UE synchronize with the first neighboring cell comprises:

detecting and acquiring, by the UE, a first reference signal sequence of the first neighboring cell according to the auxiliary information; and

performing a correlation operation between the detected first reference signal sequence of the first neighboring cell and each local protocol-specified first reference signal sequence to acquire multiple correlation values, wherein

the UE is synchronized with the first neighboring cell if there exists a first correlation value greater than a preset threshold, wherein the first correlation value is any one of the multiple correlation values acquired by the performing a correlation operation between the detected first reference signal sequence of the first neighboring cell and each local protocol-specified first reference signal sequence.

46. The cell discovery method according to any one of claims 40 to 45, wherein the detecting, by the UE according to the auxiliary information, the first reference signal of the first neighboring cell, or the second reference signal of the first neighboring cell, or the first reference signal and the second reference signal that are of the first neighboring cell, to acquire a cell ID or a virtual ID of the first neighboring cell comprises:

acquiring an actual sending resource location of the first reference signal of the first neighboring cell according to the resource information of the second reference signal of the first neighboring cell;
detecting and acquiring, at the actual sending resource location of the first reference signal of the first neighboring cell, the first reference signal of the first neighboring cell to acquire a first reference signal ID of the first neighboring cell; and
acquiring the virtual ID of the first neighboring cell according to the first reference signal ID of the first neighboring cell, or acquiring the cell ID of the first neighboring cell according to a correspondence between the first reference signal ID of the first neighboring cell and the cell ID of the first neighboring cell;
or
acquiring an actual sending resource location of the second reference signal of the first neighboring cell according to the resource information of the second reference signal of the first neighboring cell;
detecting and acquiring, at the actual sending resource location of the second reference signal of the first neighboring cell, the second reference signal of the first neighboring cell to acquire a second reference signal scrambling code ID of the first neighboring cell; and
acquiring the virtual ID of the first neighboring cell according to the second reference signal scrambling code ID of the first neighboring cell, or acquiring the cell ID of the first neighboring cell according to a correspondence between the second reference signal scrambling code ID of the first neighboring cell and the cell ID of the first neighboring cell;
or
acquiring actual sending resource locations of the first reference signal and the second reference signal that are of the first neighboring cell according to the resource information of the second reference signal of the first neighboring cell;
detecting and acquiring, at the actual sending resource location of the first reference signal of the first neighboring cell, the first reference signal of the first neighboring cell to acquire a first reference signal ID of the first neighboring cell;
detecting and acquiring, at the actual sending resource location of the second reference signal of the first neighboring cell, the second reference signal of the first neighboring cell to acquire a second reference signal scrambling code ID of the first neighboring cell; and
acquiring the cell ID of the first neighboring cell according to a correspondence among the second reference signal scrambling code ID of the first neighboring cell, the first reference signal ID of the first neighboring cell, and the cell ID.

47. The cell discovery method according to claim 46, wherein the detecting and acquiring, at the actual sending resource location of the first reference signal of the first neighboring cell, the first reference signal of the first neighboring cell to acquire a first reference signal ID of the first neighboring cell comprises:

detecting and acquiring, at the actual sending resource location of the first reference signal of the first neighboring cell, the first reference signal sequence of the first neighboring cell; and
performing a correlation operation between the detected first reference signal sequence of the first neighboring cell and each local protocol-specified first reference signal sequence to acquire the first reference signal ID of the first neighboring cell.

48. The cell discovery method according to claim 46 or 47, wherein the detecting and acquiring, at the actual sending resource location of the second reference signal of the first neighboring cell, the second reference signal of the first neighboring cell to acquire a second reference signal scrambling code ID of the first neighboring cell comprises:

detecting and acquiring, at the actual sending resource location of the second reference signal of the first neighboring cell, the second reference signal sequence of the first neighboring cell;

generating M local second reference signal sequences according to protocol-specified M second reference signal scrambling code identities IDs; and

performing a correlation operation between the detected second reference signal sequence of the first neighboring cell and each of the M local second reference signal sequences to acquire the second reference signal scrambling code ID of the first neighboring cell.

49. The cell discovery method according to any one of claims 40 to 48, wherein the method further comprises:

determining, according to the resource information of the second reference signal of the first neighboring cell, whether the first neighboring cell is discovered.

50. The cell discovery method according to claim 49, wherein the determining, according to the resource information of the second reference signal of the first neighboring cell, whether the first neighboring cell is discovered comprises:

acquiring the actual sending resource location of the second reference signal of the first neighboring cell according to the resource information of the second reference signal of the first neighboring cell;

detecting and acquiring, at the actual sending resource location of the second reference signal of the first neighboring cell, the second reference signal of the first neighboring cell;

generating M local second reference signal sequences according to the protocol-specified M second reference signal scrambling code IDs; and

performing a correlation operation between the detected second reference signal of the first neighboring cell and each of the M local second reference signal sequences to acquire M correlation values, wherein

the first neighboring cell is discovered if there exists the second correlation value greater than a preset discovery condition, wherein the second correlation value is any one of the M correlation values acquired by the performing a correlation operation between the detected second reference signal of the first neighboring cell and each of the M local second reference signal sequences.

51. The cell discovery method according to any one of claims 40 to 50, wherein the auxiliary information further comprises the cell ID of the first neighboring cell and the first reference signal ID of the first neighboring cell.

52. The cell discovery method according to claim 51, wherein the detecting, by the UE, a first reference signal of the first neighboring cell according to the auxiliary information to make the UE synchronize with the first neighboring cell, comprises:

detecting and acquiring, by the UE, the first reference signal sequence of the first neighboring cell according to the auxiliary information;

generating a local first reference signal sequence of the first neighboring cell according to the first reference signal ID of the first neighboring cell; and

performing a correlation operation between the detected first reference signal sequence of the first neighboring cell and the local first reference signal sequence of the first neighboring cell to acquire a third correlation value, wherein

the UE is synchronized with the first neighboring cell if the third correlation value is greater than a preset threshold.

53. The cell discovery method according to any one of claims 40 to 52, wherein the auxiliary information further comprises the second reference signal scrambling code ID of the first neighboring cell.

54. The cell discovery method according to claim 53, wherein the determining, according to the resource information of the second reference signal of the first neighboring cell, whether the first neighboring cell is discovered comprises:

acquiring the actual sending resource location of the second reference signal of the first neighboring cell according to the resource information of the second reference signal of the first neighboring cell;

detecting and acquiring, at the actual sending resource location of the second reference signal of the first neighboring cell, the second reference signal sequence of the first neighboring cell;

generating a local second reference signal sequence of the first neighboring cell according to the second reference signal scrambling code ID of the first neighboring cell; and

performing a correlation operation between the detected second reference signal of the first neighboring cell and the local second reference signal sequence of the first neighboring cell to acquire a fourth correlation value, wherein

the first neighboring cell is discovered if the fourth correlation value is greater than a preset discovery condition.

55. The cell discovery method according to any one of claims 40 to 54, wherein the detecting, by the UE, a first reference signal of the first neighboring cell according to the auxiliary information comprises:

if the first reference signal of the first neighboring cell and the second reference signal of the first neighboring cell are sent in one subframe, detecting, by the UE, the first reference signal of the first neighboring cell in a subframe indicated in the resource information of the second reference signal of the first neighboring cell; or

if the first reference signal of the first neighboring cell is sent in the $N^{th}$ subframe 0 or subframe 5 that is before or after the second reference signal of the first neighboring cell, detecting, by the UE, the first reference signal of the first neighboring cell in a subframe 0 or a subframe 5 that is before or after a subframe indicated in the resource information of the second reference signal of the first neighboring cell, wherein N is greater than or equal to 1; or

if the first reference signal of the first neighboring cell is sent in the $P^{th}$ subframe that is before or after the second reference signal of the first neighboring cell, detecting, by the UE, the first reference signal of the first neighboring cell in the $P^{th}$ subframe that is before or after a subframe indicated in the resource information of the second reference signal of the first neighboring cell, wherein the auxiliary information further comprises a subframe offset P between the first reference signal of the first neighboring cell and the second reference signal of the first neighboring cell, and P is greater than or equal to 1.

56. The cell discovery method according to any one of claims 40 to 55, wherein the method further comprises: performing, at the sending resource location of the second reference signal of the first neighboring cell, radio resource management RRM measurement for the first neighboring cell according to the resource information of the second reference signal of the first neighboring cell to acquire a metric, wherein the metric comprises at least one of a reference signal received power RSRP, a received signal strength indicator RSSI, or a reference signal received quality RSRQ.

57. The cell discovery method according to claim 56, wherein the auxiliary information further comprises resource information of a measured resource 1 of the first neighboring cell, and the resource information of the measured resource 1 of the first neighboring cell comprises at least one of the following information:

a resource configuration for the measured resource 1 of the first neighboring cell, a quantity of antenna ports for the measured resource 1 of the first neighboring cell, or subframe information of the measured resource 1 of the first neighboring cell.

58. The cell discovery method according to claim 57, wherein the measured resource 1 of the first neighboring cell is a zero power channel state indication reference signal ZP-CSI-RS of the first neighboring cell.

59. The cell discovery method according to claim 56 or 57, wherein the performing, at the sending resource location of the second reference signal of the first neighboring cell, RRM measurement for the first neighboring cell according to the resource information of the second reference signal of the first neighboring cell to acquire a metric comprises:

performing, at the sending resource location of the second reference signal of the first neighboring cell, radio resource management RRM measurement for the first neighboring cell according to the resource information of the second reference signal of the first neighboring cell to acquire the metric RSRP; performing, at a sending resource location of the measured resource 1 of the first neighboring cell, radio resource management RRM measurement for the first neighboring cell according to the resource information of the measured resource 1 of the first neighboring cell to acquire the metric RSSI; and acquiring the RSRQ according to the RSRP and the RSSI.

60. A cell discovery method, comprising:

acquiring a sending parameter of a first reference signal of a first neighboring cell and a sending parameter of a second reference signal of the first neighboring cell; generating auxiliary information according to the sending parameter of the first reference signal of the first neighboring cell and the sending parameter of the second reference signal of the first neighboring cell, wherein the auxiliary information comprises resource information of the second reference signal of the first neighboring cell; and

sending the auxiliary information to user equipment UE in a cell to make the UE perform cell discovery.

61. The cell discovery method according to claim 60, wherein the second reference signal of the first neighboring cell is a non-zero power channel indication reference signal NZP-CSI-RS of the first neighboring cell or a quasi NZP-CSI-RS of the first neighboring cell, wherein

a scrambling code ID for generating the quasi NZP-CSI-RS is different from a scrambling code ID for generating the NZP-CSI-RS.

62. The cell discovery method according to claim 60 or 61, wherein the first reference signal of the first neighboring cell is a primary synchronization signal PSS or a quasi PSS of the first neighboring cell, wherein

a root sequence number for generating the quasi PSS is different from a root sequence number for generating the PSS.

63. The cell discovery method according to claims 60 to 62, wherein the resource information of the second reference signal of the first neighboring cell comprises at least one of the following information:

a resource configuration for the second reference signal of the first neighboring cell, a quantity of antenna ports for the second reference signal of the first neighboring cell, or subframe information of the second reference signal of the first neighboring cell.

64. The cell discovery method according to any one of claims 60 to 63, wherein the auxiliary information further comprises the cell identity ID of the first neighboring cell and a first reference signal ID of the first neighboring cell.

65. The cell discovery method according to any one of claims 60 to 64, wherein the auxiliary information further comprises a second reference signal scrambling code ID of the first neighboring cell.

66. The cell discovery method according to any one of claims 60 to 65, wherein when the first reference signal of the first neighboring cell is sent in the $P^{th}$ subframe that is before or after the second reference signal of the first neighboring cell, the auxiliary information further comprises a subframe offset P between the first reference signal of the first neighboring cell and the second reference signal of the first neighboring cell, wherein P is greater than or equal to 1.

67. A cell discovery method, comprising:

sending a first reference signal and a second reference signal that are of a first neighboring cell, wherein the first reference signal is used for user equipment UE to synchronize with the cell, and the second reference signal is used for the UE to perform cell discovery and radio resource management RRM measurement.

68. The cell discovery method according to claim 67, wherein the second reference signal of the first neighboring cell is a non-zero power channel state indication reference signal NZP-CSI-RS of the first neighboring cell or a quasi NZP-CSI-RS of the first neighboring cell, wherein

a scrambling code ID for generating the quasi NZP-CSI-RS is different from a scrambling code ID for generating the NZP-CSI-RS.

69. The cell discovery method according to claim 67 or 68, wherein the first reference signal of the first neighboring cell is a primary synchronization signal PSS of the first neighboring cell or a quasi PSS of the first neighboring cell, wherein

a root sequence number for generating the quasi PSS is different from a root sequence number for generating the PSS.

70. The cell discovery method according to any one of claims 67 to 69, wherein the method further comprises:

when the second reference signal of the first neighboring cell is transmitted over one antenna port, mapping the second reference signal of the first neighboring cell onto four resources in each resource block; or
when the second reference signal of the first neighboring cell is transmitted over one antenna port, mapping the second reference signal of the first neighboring cell onto eight resource elements in each resource block; or
when the second reference signal of the first neighboring cell is transmitted over two antenna ports, mapping the second reference signal of the first neighboring cell onto four resource elements in each resource block; or

when the second reference signal of the first neighboring cell is transmitted over two antenna ports, mapping the second reference signal of the first neighboring cell onto eight resource elements in each resource block.

71. The cell discovery method according to claim 70, wherein
    a sequence length of the second reference signal of the first neighboring cell is Q times a quantity of resource blocks comprised in a maximum system bandwidth, wherein Q is a positive integer greater than 1.

72. The cell discovery method according to any one of claims 67 to 71, wherein before the sending a first reference signal and a second reference signal that are of a first neighboring cell, the method further comprises: determining a sending resource location of
    the second reference signal of the first neighboring cell according to a cell ID of the first neighboring cell and a quantity of configured resources of the first neighboring cell.

73. The cell discovery method according to claim 72, wherein the determining a sending resource location of the second reference signal of the first neighboring cell according to a cell ID of the first neighboring cell and a quantity of configured resources of the first neighboring cell comprises:

    calculating the sending resource location of the second reference signal of the first neighboring cell according to a primary synchronization signal PSS ID of the first neighboring cell.

74. The cell discovery method according to claim 72, wherein the determining a sending resource location of the second reference signal of the first neighboring cell according to a cell ID of the first neighboring cell and a quantity of configured resources of the first neighboring cell comprises:

    calculating the sending resource location of the second reference signal of the first neighboring cell according to a secondary synchronization signal SSS ID of the first neighboring cell.

75. The cell discovery method according to claim 72, wherein the configured resources of the first neighboring cell are S resource sets, with each resource set comprising T resources, and the determining a sending resource location of the second reference signal of the first neighboring cell according to a cell ID of the first neighboring cell and a quantity of configured resources of the first neighboring cell comprises:

    determining a sending resource set of the second reference signal of the first neighboring cell according to a PSS ID of the first neighboring cell, and determining the sending resource location, in the sending resource set, of the second reference signal of the first neighboring cell according to an SSS ID of the first neighboring cell.

76. The cell discovery method according to any one of claims 67 to 75, wherein the method further comprises:

    sending the first reference signal of the first neighboring cell and the second reference signal of the first neighboring cell in one subframe;
    or
    sending the first reference signal of the first neighboring cell in the N$^{th}$ subframe 0 or subframe 5 that is before or after the second reference signal of the first neighboring cell, wherein N is greater than or equal to 1;
    or
    sending the first reference signal of the first neighboring cell in the P$^{th}$ subframe that is before or after the second reference signal of the first neighboring cell, wherein P is greater than or equal to 1.

77. The cell discovery method according to any one of claims 67 to 76, wherein the method further comprises sending a sending parameter of the first reference signal of the first neighboring cell and a sending parameter of the second reference signal of the first neighboring cell to all neighboring cells of the first neighboring cell to make user equipments UEs in all the neighboring cells of the first neighboring cell perform cell discovery.

78. The cell discovery method according to any one of claims 67 to 77, wherein when a corresponding base station of the first neighboring cell is in an off state, the method further comprises: sending the first reference signal and the second reference signal that are of the first neighboring cell periodically according to a preset interval.

FIG. 1

FIG. 2

```
                                                    30
        Base station
        Acquisition unit                            301

        Generation unit                             302

        Sending unit                                303
```

FIG. 3

```
                                                    40
        Base station
                                                     401
        Sending unit
```

FIG. 4

```
                                                    40
        Base station
        Sending unit                                 401

        Mapping unit                                 402

        Determining unit                             403
```

FIG. 5A

| | Sending resource location of a second reference signal of a first neighboring cell |
| | Sending resource location of a second reference signal of another neighboring cell |
| | Another resource location |
| | Sending resource location of a demodulation reference signal |

FIG. 5B

| | Sending resource location of a second reference signal of a first neighboring cell |
| | Sending resource location of a second reference signal of another neighboring cell |
| | Another resource location |
| | Sending resource location of a demodulation reference signal |

FIG. 5C

| | Sending resource location of a second reference signal of a first neighboring cell |
| | Sending resource location of a second reference signal of another neighboring cell |
| | Another resource location |
| | Sending resource location of a demodulation reference signal |

FIG. 5D

Sending resource location of a/b a second reference signal of a first neighboring cell

Sending resource location of a second reference signal of another neighboring cell

Another resource location

Sending resource location of a demodulation reference signal

FIG. 5E

UE receives auxiliary information, where the auxiliary information includes resource information of a second reference signal of a first neighboring cell, and the first neighboring cell is any neighboring cell of a serving base station of the UE — 601

The UE detects a first reference signal of the first neighboring cell according to the auxiliary information to make the UE synchronize with the first neighboring cell — 602

The UE detects, according to the auxiliary information, the first reference signal of the first neighboring cell, or the second reference signal of the first neighboring cell, or the first reference signal and the second reference signal that are of the first neighboring cell, to acquire a cell identity ID or a virtual ID of the first neighboring cell — 603

FIG. 6

UE receives auxiliary information, where the auxiliary information includes resource information of a second reference signal of a first neighboring cell, and the first neighboring cell is any neighboring cell of a serving base station of the UE — 601

The UE detects a first reference signal of the first neighboring cell according to the auxiliary information to make the UE synchronize with the first neighboring cell — 602

The UE detects, according to the auxiliary information, the first reference signal of the first neighboring cell, or the second reference signal of the first neighboring cell, or the first reference signal and the second reference signal that are of the first neighboring cell, to acquire a cell identity ID or a virtual ID of the first neighboring cell — 603

Determine, according to the resource information of the second reference signal of the first neighboring cell, whether the first neighboring cell is discovered — 604

Perform, at a sending resource location of the second reference signal of the first neighboring cell, RRM measurement for the first neighboring cell according to the resource information of the second reference signal of the first neighboring cell to acquire a metric, where the metric may include at least one of an RSRP, an RSSI, or an RSRQ — 605

FIG. 7

Acquire a sending parameter of a first reference signal of a first neighboring cell and a sending parameter of a second reference signal of the first neighboring cell — 801

Generate auxiliary information according to the sending parameter of the first reference signal of the first neighboring cell and the sending parameter of the second reference signal of the first neighboring cell, where the auxiliary information includes resource information of the second reference signal of the first neighboring cell — 802

Send the auxiliary information to user equipment UE in a cell to make the UE perform cell discovery — 803

FIG. 8

Send a first reference signal and a second reference signal that are of a first neighboring cell, where the first reference signal is used for UE to synchronize with the cell, and the second reference signal is used for the UE to perform cell discovery and radio resource management RRM measurement — 901

FIG. 9

Send a first reference signal and a second reference signal that are of a first neighboring cell, where the first reference signal is used for UE to synchronize with the cell, and the second reference signal is used for the UE to perform cell discovery and radio resource management RRM measurement ⟋ 901

Map the second reference signal of the first neighboring cell onto 2Q resources ⟋ 902

Determine a sending resource location of the second reference signal of the first neighboring cell according to a cell ID of the first neighboring cell and a quantity of configured resources of the first neighboring cell ⟋ 903

Send a sending parameter of the first reference signal of the first neighboring cell and a sending parameter of the second reference signal of the first neighboring cell to all neighboring cells of the first neighboring cell to make user equipments UEs in all the neighboring cells of the first neighboring cell perform cell discovery ⟋ 904

Send the first reference signal and the second reference signal that are of the first neighboring cell periodically according to a preset interval ⟋ 905

FIG. 10A

Subframe 0

First reference signal

Second reference signal

FIG. 10B

Subframe 0             Subframe 2

First reference signal

Second reference signal

## FIG. 10C

Subframe 6             Subframe 9

First reference signal

Second reference signal

## FIG. 10D

User equipment 10

Processor — 1101

Memory — 1102

1103

Receiver — 1104

## FIG. 11

Base station 30

Processor —1201    Memory —1202

1203

Transmitter —1204

FIG. 12

Base station 40

Processor —1301    Memory —1302

1303

Transmitter —1304

FIG. 13

<table>
<tr><td colspan="2">**INTERNATIONAL SEARCH REPORT**</td><td>International application No.<br><br>PCT/CN2014/071520</td></tr>
</table>

**A. CLASSIFICATION OF SUBJECT MATTER**

H04W 48/16 (2009.01) i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

USTXT; CNTXT; CNABS; VEN; CNKI: RS, handover, NZP, reference, RRM, UE, synchronization, measuring, signal, PSS, switch, VSI-RS

**C. DOCUMENTS CONSIDERED TO BE RELEVANT**

| Category* | Citation of document, with indication, where appropriate, of the relevant passages | Relevant to claim No. |
|---|---|---|
| X | CN 102883408 A (ZTE CORP.) 16 January 2013 (16.01.2013) description, paragraphs [0058]-[0087] | 28-39, 67-78 |
| A | CN 102883408 A (ZTE CORP.) 16 January 2013 (16.01.2013) description, paragraphs [0058]-[0087] | 1-27, 40-66 |
| A | CN 102882612 A (HUAWEI TECH CO., LTD.) 16 January 2013 (16.01.2013) the whole document | 1-78 |
| A | CN 103069761 A (PANTECH CO., LTD.) 24 April 2013 (24.04.2013) | 1-78 |
| A | US 2013267221 A1 (QUALCOMM INC.) 10 October 2013 (10.10.2013) the whole document | 1-78 |

☐ Further documents are listed in the continuation of Box C.     ☒ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
|---|---|
| 24 October 2014 | 14 November 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHANG, Bingqing<br><br>Telephone No. (86-10) 62411502 |

Form PCT/ISA/210 (second sheet) (July 2009)

**INTERNATIONAL SEARCH REPORT**
Information on patent family members

| | International application No. |
|---|---|
| | PCT/CN2014/071520 |

| Patent Documents referred in the Report | Publication Date | Patent Family | Publication Date |
|---|---|---|---|
| CN 102883408 A | 16 January 2013 | WO 2014044132 A1 | 27 March 2014 |
| CN 102882612 A | 16 January 2013 | US 2014112184 A1 | 24 April 2014 |
| | | EP 2733982 A4 | 13 August 2014 |
| | | EP 2733982 A1 | 21 May 2014 |
| | | WO 2013007207 A1 | 17 January 2013 |
| | | JP 2014523200 A | 08 September 2014 |
| CN 103069761 A | 24 April 2013 | KR 20110132180 A | 07 December 2011 |
| | | EP 2577929 A2 | 10 April 2013 |
| | | JP 2013535128 A | 09 September 2013 |
| | | EP 2577929 A4 | 30 July 2014 |
| | | US 2011292847 A1 | 01 December 2011 |
| | | US 8787216 B2 | 22 July 2014 |
| | | WO 2011152651 A2 | 08 December 2011 |
| | | WO 2011152651 A3 | 23 February 2012 |
| US 2013267221 A1 | 10 October 2013 | WO 2013154853 A1 | 17 October 2013 |

Form PCT/ISA /210 (patent family annex) (July 2009)